# EUROPÄISCHE PATENTSCHRIFT

(11) **EP 1 434 714 B1**
(45) Veröffentlichungstag und Bekanntmachung des Hinweises auf die Patenterteilung: **13.12.2006**
(21) Anmeldenummer: 02774573.6
(22) Anmeldetag: 06.09.2002
(51) Int. Cl.: B65B 3/02, B65D 65/46, C11D 17/04

(54) **KOMPARTIMENT-HOHLKÖRPER UND VERFAHREN ZU DESSEN HERSTELLUNG**
HOLLOW BODY WITH COMPARTMENTS AND METHOD FOR MAKING SAME
CORPS CREUX A COMPARTIMENTS ET SON PROCEDE DE PRODUCTION

(30) Priorität: 09.10.2001 DE 10149719; 21.12.2001 DE 10163254
(43) Veröffentlichungstag der Anmeldung: 07.07.2004
(73) Patentinhaber: Henkel Kommanditgesellschaft auf Aktien, 40589 Düsseldorf (DE)
(72) Erfinder: HOFFMANN, Sandra, 40210 Düsseldorf (DE); RÄHSE, Wilfried, 40589 Düsseldorf (DE); LEUSCH, Gottlieb, 40549 Düsseldorf (DE)
(86) Internationale Anmeldenummer: PCT/EP2002/009971
(87) Internationale Veröffentlichungsnummer: WO 2003/031264

(56) Entgegenhaltungen:
- WO-A-01/64421
- WO-A-95/19921
- WO-A-97/08244
- FR-A- 2 724 388

## Beschreibung

Die vorliegende Erfindung betrifft ein Verfahren zur Herstellung eines flexiblen, vorzugsweise elastischen, wasserlöslichen Hohlkörpers, enthaltend ein Mittel, insbesondere ein Wasch-, Pflege- und/oder Reinigungsmittel, mit wenigstens einem Kompartiment sowie einen Kompartiment-Hohlkörper und dessen Verwendung. Weiter betrifft die Erfindung einen flexiblen, vorzugsweise elastischen, Hohlkörper.

Im Stand der Technik wird umfangreich beschrieben, dass Waschmittel, Reinigungsmittel oder Pflegemittel dem Verbraucher bisher üblicherweise in Form sprühgetrockneter oder granulierter fester Produkte bzw. als flüssige Ware zur Verfügung gestellt werden. Dem Wunsch des Verbrauchers nach Möglichkeiten einer bequemen Dosierung folgend, haben sich neben den beiden genannten klassischen Varianten Produkte in vorportionierter Form am Markt etabliert und sind im Stand der Technik ebenfalls umfangreich beschrieben. Es finden sich Beschreibungen von Wasch-, Reinigungs- oder Pflegemitteln in Form verpresster Formkörper, also Tabletten, Blöcke, Briketts, Ringe und dergleichen sowie von in Folienbeuteln verpackten Portionen fester und/oder flüssiger Wasch-, Reinigungs- oder Pflegemittel.

Im Fall der Einzeldosis-Mengen von Wasch- oder Reinigungsmitteln, die in Folienbeuteln verpackt in den Markt gelangen, haben sich Folienbeutel aus wasserlöslicher Folie durchgesetzt. Diese machen ein Aufreißen der Verpackung durch den Verbraucher unnötig. Auf diese Weise ist ein bequemes Dosieren einer einzelnen, für einen Wasch- oder Reinigungsgang bemessenen Portion durch Einlegen des Beutels direkt in die Waschmaschine oder Geschirrspülmaschine, speziell in deren Einspülkammer, oder durch Einwerfen des Beutels in eine bestimmte Menge Wasser, beispielsweise in einem Eimer, einer Schüssel oder im Handwasch- bzw. -spülbecken, möglich. Der die Wasch-, Reinigungsmittel- oder Pflegemittel-Portion umgebende Folienbeutel löst sich bei Erreichen einer bestimmten Temperatur rückstandsfrei auf. Auch in Beuteln aus wasserlöslicher Folie verpackte Wasch- und Reinigungsmittel sind im Stand der Technik in großer Zahl beschrieben. So offenbart die ältere Patentanmeldung DE 198 31 703 eine portionierte Wasch- oder Reinigungsmittel-Zubereitung in einem Beutel aus wasserlöslicher Folie, insbesondere in einem Beutel aus (gegebenenfalls acetalisiertem) Polyvinylalkohol (PVAL), worin mindestens 70 Gew.-% der Teilchen der Wasch- oder Reinigungsmittel-Zubereitung Teilchengrößen > 800 µm aufweisen. Derartige Folienbeutel oder "pouches" sind zwar sehr verbraucherfreundlich und erleichterten das Dosieren, sind jedoch nicht in allen Fällen die geeignete Form zum Dosieren von Waschmittel-, Reinigungsmittel- und Pflegemittelzubereitungen, insbesondere dann, wenn feste und flüssige wasch-, reinigungs- oder pflegeaktive Zubereitungen nebeneinander zu dosieren sind. Weiter lassen derartige Beutel das Einarbeiten von in inelastischen oder leichtflüchtigen Phasen vorliegenden Waschmittel-, Reinigungsmittel- oder Pflegemittel-Zubereitungen in die Waschmittel-, Reinigungsmittel-oder Pflegemittel-Portion nicht zu. Den Pouches haftet insbesondere der Nachteil an, dass die Folienbeutel gegenüber mechanischen Einflüssen recht empfindlich sind. Bei dem Transport oder der Handhabung kann es dadurch zu unerwünschtem Produktaustritt führen, wenn die Folie durch Unachtsamkeit verletzt wird. Bloßes Anfassen mit spitzen oder rissigen Fingernägeln kann bereits zu einer Beschädigung und damit zu einer gerade im Bereich der Haushaltsmittel unerwünschten Verbraucherfrustration führen. Beutel und Kissen aus Folien haben außerdem den Nachteil, dass diese Siegelnähte oder umlaufende Nähte aufweisen, die undicht werden können. Außerdem lassen sich die zur Herstellung der Beutel und Kissen verwendbaren Folienschläuche und Folien nicht oder nur sehr aufwendig in andere geometrische Formen überführen. So lassen sich Kugeln aus Folienschläuchen in einem Arbeitszyklus nicht herstellen. Außerdem sind Folienbeutel und Folienkissen nicht formstabil. Bei Einwirkung einer Verformungskraft nehmen Beutel und Kissen aus verformbaren Folien im ungefüllten und gefüllten Zustand ihre ursprüngliche Form, d.h. vor Krafteinwirkung, nicht mehr selbstständig an.

Die Druckschrift DE-A 20 65 153 beschreibt mehrere Komponenten umfassende Tensid-Formkörper, die aus einer Außenhülle aus Natriumsilicat und darin eingeschlossenen Waschmittel-Komponenten bestehen. Die Silicat-Hülle wird durch Druckformen in zwei Halbkugeln hergestellt, die nach Einfüllen der für einen Waschgang ausreichenden Menge der Waschmittel-Komponenten zusammengesetzt und zu dem Formkörper verbunden werden. Das Verfahren ist äußerst unpraktisch und führt nicht zu brauchbaren Waschmittel-Portionen.

Die Druckschrift DE-A 20 07 413 beschreibt Detergentformlinge aus einem Kern aus einer oder mehreren Waschmittel-Komponente(n) und einer Schale aus pressgeformtem, überwiegend aus Natriummetalilicat bestehendem Hüllmaterial. Das Verpressen des Hüllmaterials zu Halbschalen und das Befüllen und Verschweißen der Halbschalen zu dem fertigen Formling erfordern eine aufwendige Technologie, und viele der Formlinge zerbrechen, bevor sie in den Waschvorgang gelangen.

Die Druckschriften DE-A 198 34 181, DE-A 198 34 180 und DE-A 198 34 172 beschreiben Waschmittel-, Geschirr-Pflegemittel- bzw. Reinigungs-/Entkalkungs-mittel-Zubereitungen aus einer durch Pressformen hergestellten, aus zwei gleichen Hälften bestehenden Tablette aus einer oder mehreren Waschmittel-, Pflegemittel- bzw. Reinigungsmittel-Komponenten und einem gegebenenfalls mit einer zusätzlichen Hohlkörper mit und ohne Kompartimente versehenen Kern aus einer weiteren Waschmittel-, Pflegemittel- bzw. Reinigungsmittel-Komponente. Abgesehen von der Tatsache, dass die Herstellung auch in diesem Fall nur in einem komplizierten, mehrstufigen Verfahren erfolgen kann, lässt sich nur ein fester Kern in die Tabletten-Hohlkörper mit und ohne Kompartimente einarbeiten, wenn nicht ein vorzeitiges Anlösen der Tablette von innen initiiert werden soll.

Die im Stand der Technik bekannten Verfahren zur Herstellung von Hohlkörpern, insbesondere Wasch-, Reinigungs- und/oder Pflegemittel enthaltende Hohlkörper, wie beispielsweise in der WO-A1 01/36290 beschrieben, weisen zum einen den Nachteil auf, dass die erzeugten Hohlkörper starr sind, d.h. nicht flexibel und/oder elastisch sind, so dass beim Einsatz in der Wasch- und/oder Reinigungsflotte während des Auflösvorgangs, scharfkantige Wandungen entstehen können, die Textilien beschädigen können.

Zum Zweiten, verhindert ein starrer, formstabiler Körper einen schnellen Austritt des in Kompartimenten enthaltenden Mittels, da dieser im Gegensatz zu einem flexiblen Körper, nicht stauchbar bzw. ohne größeren Kraftaufwand nach Entstehung einer Öffnung zusammenpressbar ist.

Zum Dritten, werden solche Hohlkörper mit einem oder mehreren Kompartimenten mittels Spritzgussverfahren hergestellt, diese Verfahren ist äußerst Aufwendung. Außerdem lassen sich mittels Spritzguß ohne aufwendige Zwangsentformung, praktisch nur Halbkörper, d.h. keine im wesentlichen geschlossenen Körper herstellen. Wenigstens zwei Halbkörper müssen dann in einem weiteren Schritt verbunden werden oder mittels einer Folien verschlossen werden, um einen geschlossen Körper auszubilden. Eine einfache Massenherstellung von Kugelförmigen Körpern in einem Spritzgußwekrzeug, d.h. in einem Zyklus, ist praktisch unmöglich.

Spritzgussverfahren wie in der WO-A1 01/36290 beschrieben, Thermoformverfahren wie in der WO-A1 00/55068 beschrieben oder die Verwendung von Folien, haben weiterhin den Nachteil, das man bei diesen Verfahren nicht in einem einzigen Arbeitszyklus geschlossene Hohlkörper mit einem oder mehreren Kompartimenten erzeugen kann, die flexible, vorzugsweise elastische, Wandungen aufweisen. Außerdem lassen sich unter Verwendung des gleichen Vorformlings nicht nahezu beliebige geometrische Formen von Hohlkörpern in einem Zyklus ausbilden, wie eine Kugelform, Flaschenform, Tierfigur, Weihnachtsmann oder dergleichen, ohne das man Zwangsentformen muss oder entstandene Halbkörper zu einem Hohlkörper verbinden muss.

Aufgabe der Erfindung war es daher ein technisch einfaches und schnelles Verfahren zur Herstellung eines wasserlöslichen Hohlkörpers, in möglichst einem Zyklus, enthaltend ein Mittel, insbesondere ein Waschmittel-, Reinigungsmittel- oder Pflegemittel, zur Verfügung zu stellen, das die vorgenannten Nachteile im Stand der Technik überwindet. Der Erfindung lag weiter die Aufgabe zugrunde, Waschmittel-, Reinigungsmittel- oder Pflegemittel-Komponenten räumlich voneinander zu trennen und sie trotzdem in der gleichen Waschmittel-, Reinigungsmittel- oder Pflegemittel-Portion zu konfektionieren, mit dem Ziel, einen Stoffaustausch oder eine gegenseitige Beeinträchtigung, die unter Umständen mit Verlusten der Aktivität verbunden sein können, so gering wie möglich zu halten. Dies hätte auch den Vorteil, dass die Lagerstabilität von Waschmittel-, Reinigungsmittel- oder Pflegemittel-Zubereitungen erheblich gesteigert werden könnte und auch die Gehalte an Aktivsubstanz in einzelnen Fällen gesenkt werden könnten, da im Stand der Technik bei deren Berechnung wegen eines zu erwartenden Aktivitätsverlustes einzelner Komponenten immer eine Überdosierung vorgesehen werden musste.

Aus der WO 01/64421 A1 ist bekannt, dass man mittels Blasformen wasserlösliche, flexible, vorzugsweise elastische, Hohlkörper herstellen kann, die Mittel, insbesondere Waschmittel-, Reinigungsmittel- und/oder Pflegemittel-Portionen, enthalten. Es wurde nun gefunden das sich mittels Blasformen vereinfachte wasserlösliche, flexible, vorzugsweise elastische, Hohlkörper in praktisch beliebigen Formen, die separate Kompartiment(en) aufweisen können, herstellen lassen, wobei das Blasformverfahren gegenüber Spritzgussverfahren, Thermoformverfahren, Tiefziehverfahren oder dergleichen, erhebliche verfahrenstechnische Vorteile aufweist. Außerdem ist das Blasformverfahren materialsparend, da keine Quetschkanten, oder andere überstehende bzw. überschüssige Teile vom blasgeformten Hohlkörper entfernt werden müssen. Die WO 01/64421 A1 offenbart auch einen Hohlkörper gemäß dem Oberbegriff des Anspruchs 69.

Die Erfindung betrifft ein Verfahren zur Herstellung eines flexiblen, vorzugsweise elastischen, wasserlöslichen Hohlkörpers, enthaltend ein Mittel, insbesondere ein Wasch-, Pflege- und/oder Reinigungsmittel gemäß Anspruch 1.

Die Erfindung betrifft auch einen Hohlkörper gemäß Anspruch 69.

Reinigungsmittel im Sinne dieser Erfindung umfassen auch Spülmittel.

Erfindungsgemäß geeignete Blasformverfahren umfassen Extrusionsblasen, Coextrusionsblasen, Spritz-Streckblasen und Tauchblasen.

Der erfindungsgemäße Hohlkörper mit und ohne Kompartimenten lässt sich vorzugsweise "umkrempeln", d.h. er ist in der Weise durchstülpbar, dass die ursprüngliche Innenseite zur Außenseite wird und vice versa. Diese Flexibilität führt zu der im Vergleich zu starren Formkörpern besonders erhöhten Resistenz gegen Leckagen bei Druckbeanspruchung, zur Vermeidung von Spannungsrissen oder von Bruch.

Die erfindungsgemäßen Hohlkörper lösen sich in Wasser vollständig oder im wesentlichen auf, wobei auf diese Weise die in dem geschlossenen Hohlköper und/oder in den Kompartimenten enthaltenen Mittel an die Umgebung abgegeben werden. Beispielsweise können die nach dem erfindungsgemäßen Verfahren Mittel enthaltenden Hohlkörper in einem wässrigen maschinellen Wasch-, Reinigungs- oder Pflegevorgang eingesetzt werden. Bevorzugt ist die Verwendung der erfindungsgemäß hergestellten Hohlkörper in handelsüblichen Waschmaschinen oder Geschirrspülmaschinen. Ein Einsatz der erfindungsgemäßen Hohlkörper in Handwaschbecken oder in einer Schüssel ist ebenfalls möglich. Wichtig zur Freisetzung des in dem Hohlkörper/Kompartimenten enthaltenen Mittel ist ein diese von außen umgebendes wässriges Milieu.

Der Hohlkörper und/oder die Kompartimente enthalten abgemessene Mengen, d.h. Portionen, wenigstens einer waschaktiven, reinigungsaktiven oder pflegeaktiven Zubereitung, üblicherweise abgemessene Mengen mehrerer waschaktiver, reinigungsaktiver oder pflegender Zubereitungen. Dabei ist es möglich, dass die Portionen nur waschaktive, reinigungsaktive oder pflegende Zubereitungen einer bestimmten Zusammensetzung enthalten. Gemäß der Erfindung bevorzugt ist es jedoch, dass mehrere, üblicherweise mindestens zwei, waschaktive, reinigungsaktive oder pflegeaktive Zubereitungen unterschiedlicher Zusammensetzung in den Waschmittel-, Reinigungsmittel- und/oder Pflegemittel-Portionen enthalten sind. Die Zusammensetzung kann dabei hinsichtlich der Konzentration der einzelnen Komponenten der waschaktiven, reinigungsaktiven oder pflegeaktiven Zubereitung (quantitativ) und/oder hinsichtlich der Art der einzelnen Komponenten der waschaktiven, reinigungsaktiven oder pflegeaktiven Zubereitung (qualitativ) unterschiedlich sein. Besonders bevorzugt ist, dass die Komponenten hinsichtlich Art und Konzentration an die Aufgaben angepasst sind, die die Waschmittel, Reinigungsmittel und/oder Pflegemittel-Teilportionen im Wasch-, Reinigungs- und/oder Pflegevorgang zu erfüllen haben.

Unter dem Begriff "waschaktive bzw. reinigungsaktive bzw. pflegeaktive Zubereitung" werden im Rahmen der vorliegenden Erfindung Zubereitungen aller denkbaren, im Zusammenhang mit einem Wasch-, Reinigungs- und/oder Pflegevorgang relevanten Substanzen verstanden. Bei Wasch- und Reinigungsmittel sind dies in erster Linie die eigentlichen Wasch- und/oder Reinigungsstoffe mit ihren im weiteren Verlauf der Beschreibung näher erläuterten Einzelkomponenten. Darunter fallen Aktivstoffe wie Tenside (anionische, nichtionische, kationische und amphotere Tenside), Buildersubstanzen (anorganische und organische Buildersubstanzen), Bleichmittel (wie beispielsweise Peroxo-Bleichmittel und Chlor-Bleichmittel), Bleichaktivatoren, Bleichstabilisatoren, Bleichkatalysatoren, Enzyme, spezielle Polymere (beispielsweise solche mit Cobuilder-Eigenschaften), Vergrauungsinhibitoren, Farbstoffe und Duftstoffe (Parfums), ohne dass der Begriff auf diese Substanzgruppen beschränkt ist.

Es werden unter dem Begriff "waschaktive bzw. reinigungsaktive Zubereitungen" jedoch auch Waschhilfsmittel und Reinigungshilfsmittel einschließlich Spülhilfsmittel verstanden. Beispiele für diese sind optische Aufheller, UV-Schutzsubstanzen, sog. Soil Repellents, also Polymere, die einer Wiederanschmutzung von Fasern oder harten Oberflächen (einschließlich Geschirr) entgegenwirken, sowie Silberschutzmittel, Färbemittel und Entfärbemittel. Auch Pflegemittel, wie Wäsche-Behandlungsmittel, insbesondere Weichspüler bzw. Geschirr-.Pflegemittel-Zusätze wie Klarspüler werden erfindungsgemäß als waschaktive bzw. als reinigungsaktive bzw. als pflegeaktive Zubereitungen betrachtet.

Erfindungsgemäß sind die Waschmittel-, Reinigungsmittel- oder Pflegemittel-Portionen in einem oder mehreren flexiblen, vorzugsweise elastischen, Hohlkörper(n) und/oder einem oder mehreren Kompartiment enthalten. Die genaue Form des Hohlkörpers ist in diesem Zusammenhang genauso wenig kritisch wie dessen Größe; einzige Vorgabe ist diesbezüglich, dass Form und Größe in Übereinstimmung mit der späteren Verwendung stehen, also einer Verwendung in einem Wasch-, Reinigungs- und/oder Pflegeverfahren, insbesondere in üblichen Waschmaschinen oder Spülmaschinen. Denkbar sind Hohlkörper in Kugel-, Ellipsoid-, Würfel-, Quader-, Trapezoid-, Kegel- oder Pyramiden- oder Trochoidform; quader- oder trochoidförmige Hohlkörper haben sich erfindungsgemäß bestens bewährt und können daher mit Vorteil verwendet werden. Am meisten Bevorzugt sind kugelförmige Hohlkörper, insbesondere Kugeln.

Die Größe der Hohlkörper ist in bevorzugten Ausführungsformen der Erfindung derart, dass die Hohlkörper in die Einspülkammer einer handelsüblichen Waschmaschine oder Geschirrspülmaschine, in der Wäsche mitlaufende Netze oder Säcke o.ä. eingegeben werden können. Besonders bevorzugte Ausführungsformen der erfindungsgemäßen Waschmittel-, Reinigungsmittel- oder Pflegemittel-Portionen überschreiten eine Länge (längste Achse) von 10 cm nicht, während die Größen der Breite und der Höhe deutlich niedriger liegen, beispielsweise bei 1 bis 5 cm.

Flexible Hohlkörper im Sinne dieser Erfindung umfassen insbesondere auch elastische Hohlkörper.

Unter dem Begriff "elastischer Hohlkörper" wird insbesondere verstanden, dass die die Mittel, insbesondere Waschmittel, Reinigungsmittel und/oder Pflegemittel enthaltenden Formkörper eine Eigen-Formstabilität aufweisen, die sie befähigt, unter üblichen Bedingungen der Herstellung, der Lagerung, des Transports und der Handhabung durch den Verbraucher eine gegen Bruch und/oder Druck stabile, nicht zusammenfallende Struktur zu haben, wobei der unbefüllte und/oder mit mindestens einem Mittel gefüllte, vorzugsweise Glycerin, blasgeformte Hohlkörper bei einer Dehnung entlang seiner längsten Achse eine Streckspannung von zwischen ≥ 3 N/mm² und ≤ 15 N/mm² aufweist, und/oder bei einem Stauchweg von 22 mm senkrecht, mittig, in Richtung seiner kürzesten Achse eine Verformungsarbeit von zwischen ≥ 0,05 Nm und ≤ 5 Nm auftritt, und/oder bei einer Kraft F₁ > 0,1 und ≤ 500 N längs eines Weges s₁ verformbar ist und nach Wegfall der Krafteinwirkung in Richtung der ursprünglichen Form zurückkehrt, oder nach Wegfall der Krafteinwirkung die ursprüngliche Form vollständig oder nahezu vollständig annimmt, und/oder nach Wegfall einer Verformungskrafteinwirkung eine Rückstellgeschwindigkeit v von zwischen > 0,01 mm/min und ≤ 650 mm/min aufweist, und/oder das Elastizitätsmodul der Hohlkörperwand des mittels Blasformung hergestellten flexiblen ungefüllten oder mit Mittel, vorzugsweise Glycerin, zu ≥ 80 Vol.-%, gefüllten Hohlkörpers ≤ 1 GNm², vorzugsweise ≤ 0,1 GNm², bevorzugt ≤ 0,01 GNm² beträgt, und/oder bei einem mit Mittel, vorzugsweise Glycerin, zu ≥ 80 Vol.-% gefüllten blasgeformten Hohlkörper ein Stauchwiderstand F*ₘₐₓ* von zwischen ≥ 20 N und ≤ 2000 N, auftritt.

Dabei ist es ohne Einfluß, ob diese Strukturstabilität aus den sich aufgrund verschiedener nachfolgend genannter Parameter ergebenden Eigenschaften des flexiblen, vorzugsweise elastischen, Hohlkörpers allein und/oder aus dem Vorhandensein von Kompartimentierungs-Einrichtungen und/oder aus der Befüllung mit waschaktiven, reinigungsaktiven und/oder pflegeaktiven Zubereitungen resultiert. In bevorzugten Ausführungsformen der Erfindung weisen bereits die flexiblen, vorzugsweise elastischen, Hohlkörper selbst eine ausreichende Eigen-Formstabilität auf, da sich dies vorteilhaft auf die Gängigkeit in Maschinen bei der Fertigung der Hohlkörper und der Befüllung während der Herstellung der erfindungsgemäßen Waschmittel-, Reinigungsmittel- oder Pflegemittel-Portionen auswirkt.

Die Druckbeständigkeit der flexiblen, vorzugsweise elastischen, blasgeformten Hohlkörper gemäß der Erfindung wird in der, an sich üblichen, Weise so gemessen, dass unbefüllte und gegebenenfalls mit Kompartimentierungs-Einrichtungen versehene geschlossene Hohlkörper bei Raumtemperatur ein innen anliegendes, stetig steigendes Vakuum angelegt wird, bis der Hohlkörper zu kollabieren beginnt. Die Eigen-Formstabilität der Hohlkörper sollte besonders bevorzugt so sein, dass bei derartigen Vakuum-Kollaps-Tests unbefüllter und gegebenenfalls mit Kompartimentierungs-Einrichtungen versehener Hohlkörper ein Kollabieren nicht vor Erreichen eines Vakuums von 900 mbar, vorzugsweise von 750 mbar und insbesondere von 500 mbar beginnt. Insofern unterscheiden sich die erfindungsgemäß verwendeten Hohlkörper grundlegend von Folien oder sogenannten "pouches", wie sie zur Bereitstellung von Waschmitteln, Reinigungsmitteln oder Pflegemitteln ebenfalls verwendet werden. Diese Kollabieren bereits bei einem Druck, der nur geringfügig unter dem Atmosphärendruck liegt. In ähnlicher Weise unterscheiden sich die erfindungsgemäßen flexiblen, vorzugsweise elastischen, Hohlkörper jedoch auch von (nachträglich auf Formkörper aufgebrachten) Coatings. Die erfindungsgemäßen Hohlkörper stellen eine eigenständige, selbst-tragende Hohlkörper mit und ohne Kompartimente dar, die im Regelfall bereits vor der Befüllung mit einer oder mehreren waschaktiven, pflegeaktiven oder reinigungsaktiven Komponente(n) existiert und anschließend befüllt wird. Im Gegensatz dazu werden Coatings auf bereits existierende Formkörper (z.B. Preßkörper, Granulate, Extrudate usw.) aufgebracht und dann getrocknet bzw. ausgehärtet; sie bilden erst danach eine den Formkörper umgebende Hohlkörper mit und ohne Kompartimente .

Besonders bevorzugt ist es, wenn die Wände der erfindungsgemäß verwendeten Hohlkörper - in gleicher Weise wie die später im einzelnen zu erläuternden Einrichtungen zur Kompartimentierung - weiter eine gute Diffusionsbarriere bilden, insbesondere für die waschaktiven, reinigungsaktiven oder pflegeaktiven Zubereitungen nachteilig beeinflussende Stoffe, insbesondere gasförmige Stoffe und ganz besonders Wasserdampf. Eine Diffusion von Wasserdampf sollte vorzugsweise maximal in einer Menge von 350 g/(m² · 24 h) möglich sein, weiter bevorzugt nur in einer Menge im Bereich von maximal 100 g/(m² · 24 h), noch mehr bevorzugt in einer Menge von maximal 50 g/(m² · 24 h).

Die unbefüllte Hohlkörper mit und ohne Kompartimente der portionierten Mittel lässt sich durch Krafteinwirkung zumindest teilweise reversibel verformen und weist nach Wegfall der Krafteinwirkung eine bestimmte Rückstellgeschwindigkeit auf. Hohe Rückstellgeschwindigkeiten (beispielsweise > 2000 mm/min) werden dabei von starren Körpern erreicht, die in die Ausgangsform "zurückspringen", sofern sie nicht im eingedrückten Zustand verbleiben. Dieses Verhalten des "Zurückspringens" ist unerwünscht, da auf diese Weise Spannungsrisse in der Hohlkörper mit und ohne Kompartimente entstehen können, die Produktaustritt ermöglichen. Es ist also einerseits erforderlich, eine geringe Rückstellgeschwindigkeit der Hohlkörper mit und ohne Kompartimente sicherzustellen, andererseits soll die Hohlkörper mit und ohne Kompartimente sich verformen lassen, ohne dabei zu brechen oder Risse zu bekommen.

Wie vorstehend erwähnt, sollen sich die Umhüllungen mindestens teilweise reversibel verformen lassen (bei irreversibler Verformung wäre keine Rückstellgeschwindigkeit messbar). In bevorzugten Ausführungsformen der vorliegenden Erfindung ist die Verformung vollständig reversibel, d.h. es sind erfindungsgemäße portionierte Wasch-, Spül- oder Reinigungsmittel bevorzugt, bei denen die unbefüllte Umhüllung nach Wegfall der Krafteinwirkung in ihre ursprüngliche Form zurückkehrt.

Die Kraft F₁ ist von der Eindrücktiefe abhängig, da die Hohlkörper mit und ohne Kompartimente dem eindringenden Körper zunehmenden Widerstand entgegensetzt. Zunächst kommt es für die vorliegende Erfindung nur darauf an, dass sich bei einer Kraft von 500 N oder weniger die Hohlkörper mit und ohne Kompartimente überhaupt verformen lässt. In bevorzugten Ausführungsformen der vorliegenden Erfindung beziehen sich die Angaben auf Kräfte der Eindringtiefen eines Rundstabes mit 8 mm Durchmesser, insbesondere von 10 mm Durchmesser, vorzugsweise von 15 mm Durchmesser, bevorzugt von 20 mm Durchmesser und weiter bevorzugt von 22 mm.

Wenn die Wegstrecke s₁ definiert ist, lässt sich nicht nur die Kraft, sondern auch die Verformungsarbeit exakt bestimmen. Bei den einer Krafteinwirkung durch einen Rundstab mit 8 mm Durchmesser und einer Eindringtiefe von S₁ = 22 mm liegt die Verformungsarbeit bei den mittels Blasformung hergestellten flexiblen, ungefüllten Hohlkörpers deutlich unter den Werten von vergleichbaren starren ungefüllten Körpern, bei denen eine Verformungsarbeiten von wenigstens > 5 Nm geleistet werden muß.

Wie vorstehend erwähnt, sollen sich die erfindungsgemäßen Hohlkörper mit und ohne Kompartimente mindestens teilweise reversibel verformen lassen (bei irreversibler Verformung wäre keine Rückstellgeschwindigkeit messbar). In bevorzugten Ausführungsformen der vorliegenden Erfindung ist die Verformung vollständig reversibel, d.h. es sind erfindungsgemäße portionierte Mittel bevorzugt, bei denen die unbefüllte Hohlkörper mit und ohne Kompartimente nach Wegfall der Krafteinwirkung in ihre ursprüngliche Form zurückkehrt.

In einer erfindungsgemäß geeigneten Ausführungsform ist der mittels Blasformung hergestellte flexible, ungefüllte oder zu ≥ 80 Vol.-% mit Glycerin gefüllte Hohlkörper durch eine Kraft F₁ ≤ 500 N längs eines Weges s₁ = 22 mm, insbesondere durch eine Kraft F₁ ≤ 100 N längs eines Weges s₁ = 22 mm, vorzugsweise durch eine Kraft F₁ ≤ 60 N längs eines Weges s₁ = 22 mm, bevorzugt durch eine Kraft F₁ ≤ 40 N längs eines Weges s₁ = 22 mm und weiter bevorzugt durch eine Kraft F₁ ≤ 20 N längs eines Weges s₁ = 22 mm, senkrecht, mittig, in Richtung der kürzesten Achse des Hohlkörpers, verformbar.

Die Prüfung der mit Mittel gefüllten Hohlkörper mit und ohne Kompartimente, wenn nicht anders angegeben wurde bei Temperaturen von 20 °C durchgeführt, wobei der Hohlkörper mit und ohne Kompartimente beispielsweise zu ≥ 80 Vol.-% bevorzugt mit Glycerin als Prüfmedium gefüllt wurde.

Vorteilhaft ist, wenn der mittels Blasformung hergestellte flexible, ungefüllte oder zu ≥ 80 Vol.-% mit Glycerin gefüllte Hohlkörper nach Wegfall der Krafteinwirkung eine Rückstellgeschwindigkeit v ≤ 650 mm/min, insbesondere v ≤ 500 mm/min, vorzugsweise v ≤ 100 mm/min, bevorzugt v ≤ 50 mm/min, weiter bevorzugt v ≤ 10 mm/min und insbesondere bevorzugt v ≤ 1 mm/min, aufweist.

Die zur Verformung des mittels Blasformung hergestellten flexiblen, ungefüllten Hohlkörpers erforderliche Verformungsarbeit sollte w ≤ 1,0 Nm längs eines Weges s₁ = 22 mm, vorzugsweise w ≤ 0,75 Nm längs eines Weges s₁ = 22 mm und bevorzugt w ≤ 0,50 Nm längs eines Weges s₁ = 22 mm, betragen. Zur Feststellung der Verformungsarbeit wirkt die Verformungskraft w senkrecht, mittig, in Richtung zur kürzesten Achse des Hohlkörpers.

Die zur Verformung des mittels Blasformung hergestellten flexiblen, zu ≥ 80 Vol.-% mit Glycerin gefüllten Hohlkörpers erforderliche Verformungsarbeit sollte w ≤ 5,0 Nm längs eines Weges s₁ = 22 mm, vorzugsweise w ≤ 2,5 Nm längs eines Weges s₁ = 22 mm, bevorzugt w ≤ 1 Nm längs eines Weges s₁ = 22 mm, weiter bevorzugt w ≤ 0,75 Nm längs eines Weges s₁ = 22 mm und insbesondere w ≤ 0,5 Nm längs eines Weges s₁ = 22 mm, betragen. Zur Feststellung der Verformungsarbeit wirkt die Verformungskraft w senkrecht, mittig, in Richtung zur kürzesten Achse des Hohlkörpers.

Eine weitere Größe zur Charakterisierung besonders bevorzugter portionierter Mittel ist der Stauchwiderstand. Dieser lässt sich in Form eines Kraft-Weg-Diagramms mit handelsüblichen Tablettenprüfgeräten bestimmen. Für die Belange der vorliegenden Erfindung wurde eine Universalprüfmaschine der Firma Zwick Typ 1425 verwendet.

Die Bestimmung des Stauchwiderstandes erfolgt gemäß DIN 55526 Teil 1 dadurch, dass Hohlkörper mit und ohne Kompartimente (= Behältnis) aufrecht stehend zwischen die Platten einer Druckprüfeinrichtung gestellt und gestaucht wird, wobei die Druckkraft und der Plattenweg solange aufgezeichnet werden, bis der geforderte Stauchwiderstand und Plattenweg erreicht werden oder durch kritische Verformung bzw. Undichtwerden des Behältnisses ein Versagen eintritt.

Die Druckpresse wurde auf eine Stauchgeschwindigkeit von 10 mm/min eingestellt. Danach wurde der Prüfvorgang gestartet. Die bei einer Eindringtiefe von 22 mm auf die Portion ausgeübte Kraft [N] wurde auf dem angeschlossenen Drucker ausgedruckt. Die Stauchfestigkeit wird in N angegeben. Hier sind erfindungsgemäße portioniertes Mittel enthaltende Hohlkörper mit und ohne Kompartimente bevorzugt, die dadurch gekennzeichnet sind, dass der Stauchwiderstand Fₘₐₓ des portioniertes Mittel enthaltenden Hohlkörpers (= der befüllten Hohlkörper mit und ohne Kompartimente) 20 bis 2000 N, vorzugsweise 50 bis 1000 N, besonders bevorzugt 75 bis 600 N, weiter bevorzugt 100 bis 500 N und insbesondere 150 bis 400 N beträgt. Zu Prüfzwecken wird der mittels Blasformung hergestellte Hohlkörper mit und ohne Kompartiment zu ≥ 80 Vol.-% mit Mittel, vorzugsweise Glycerin, gefüllt.

Der Stauchwiderstand des mittels Blasformung hergestellten flexiblen, ungefüllten oder zu ≥ 80 Vol.-% mit Glycerin gefüllten Hohlkörper sollte von zwischen 75 bis 400 N, vorzugsweise von zwischen 100 bis 300 N und insbesondere von zwischen 150 bis 250 N betragen.

Das Elastizitätsmodul der Hohlkörperwand des mittels Blasformung hergestellten flexiblen ungefüllten oder mit Glycerin zu ≥ 80 Vol.-% gefüllten Hohlkörpers sollte ≤ 1 GNm², vorzugsweise ≤ 0,1 GNm², bevorzugt ≤ 0,01 GNm² betragen.

Die nach dem erfindungsgemäßen Verfahren hergestellten flexiblen, vorzugsweise elastischen, wasserlöslichen Hohlkörper, enthaltend ein Mittel, insbesondere ein Wasch-, Pflege- und/oder Reinigungsmittel, zeichnen sich bevorzugt durch eine erhöhte Flexibilität im Vergleich zu steifen, starren Hohlkörpern aus. Die Flexibilität und Elastizität drückt sich insbesondere in der Möglichkeit der reproduzierenden Mehrfachbestimmung bei den vorbeschriebenen mechanischen Tests, insbesondere bei der Bestimmung der Verformbarkeit durch Krafteinwirkung, aus.
Bevorzugt im Rahmen der Erfindung ist daher, daß der mit mindestens einem Mittel oder Glycerin als Prüfmittel gefüllte und/oder unbefüllte blasgeformte Hohlkörper bei n-facher, mit n ≥ 2, beispielsweise 3 oder 4, bevorzugt 8, 10, 15 oder 20, Wiederholung der jeweiligen Messung an einem zu prüfenden Individuum eine prozentuale Standardabweichung, bezogen auf den mittleren Meßwert, von geringer als 100%, vorzugsweise geringer als 50%, weiter bevorzugt geringer als 40%, besonders bevorzugt geringer als 30%, insbesondere geringer als 20%, insbesondere bevorzugt geringer als 10%, äußerst bevorzugt geringer als 8%, beispielsweise geringer als 5%, vorteilhafterweise geringer als 3%, beispielsweise geringer als 2% und extrem bevorzugt geringer als 1 % aufweist.

Bevorzugt ist, wenn der flexible, wasserlösliche, blasgeformte Hohlkörper einstückig ausgebildet ist.

Besonders vorteilhaft ist jedoch die mehrstückige Ausbildung der blasgeformten Hohlkörper. Besonders im Hinblick auf die Dosierhoheit der Verbraucher und/oder im Hinblick auf die Produktästhetik und/oder im Hinblick auf die Löslichkeit und/oder Freisetzung eines umhüllten Mittels in einer wäßrigen Lösung und/oder einer anwendungstechnischen Umgebung wie beispielsweise einer Wasch- oder Reinigungsflotte zeigen sich Verbesserungen.

Einzeln in Behältnissen aus wasserlöslichem Material verpackte Zubereitungen lassen sich verbraucherfreundlich dosieren und stellen eine durch besondere Ästhetik gekennzeichnete Alternative zu sonstigen Einzeldosierungsformen, insbesondere Tabletten, dar. In vielen Bereichen wird diese Einzeldosierung als bequem empfunden: Der Verbraucher nimmt das entsprechende Produkt, dosiert es und braucht sich über die Abmessung geeigneter Mengen keine Gedanken zu machen. In vielen Fällen trifft diese Angebotsform aber auch die Kritik, daß eine situationsabhängige Abänderung der Dosierung nicht mehr möglich ist und somit beispielsweise mit einer Dosiereinheit zu wenig, mit zwei Einheiten aber zuviel dosiert wird. Bei der Angebotsform der Tablette wird regelmäßig der Vorschlag an die Hersteller herangetragen, diese wie Schokoladentafeln auszugestalten, damit der Verbraucher bedarfsgerecht seine einzelnen Dosiereinheiten "abbrechen" kann. Im Vergleich zu Pulvern oder Flüssigkeiten auf der einen Seite (vollständige Dosierhoheit mit nahezu unbegrenzter Vielzahl an Dosiermöglichkeiten) und Tabletten oder sogenannten Pouches auf der anderen Seite (eine Dosiermöglichkeit) besteht nach wie vor der Wunsch für ein Produktsegment, das beispielsweise mit zwei bis zwanzig separat dosierbaren Einheiten eine situationsbedingte Dosierung zuläßt, ohne jedesmal ein externes Meßgefäß nutzen zu müssen.

In einer erfindungsgemäß besonders bevorzugten Ausführungsform des Verfahrens sind die wasserlöslichen, blasgeformten Hohlkörper mehrstückig ausgebildet und weisen im Bereich des befüllten Hohlvolumens Wandstärken von 0,05 - 5 mm auf.

Bezüglich des grundsätzlichen Verfahrensablaufs und physikalischer Parameter der Verfahrensendprodukte sowie bezüglich bevorzugter Materialien für den Einsatz im erfindungsgemäßen Verfahren dieser Zusatzanmeldung wird auf die Angaben in der Stammanmeldung verwiesen.

Das erfindungsgemäße Verfahren ermöglicht die Herstellung befüllter und verschlossener Behälter und erfolgt vorzugsweise in-line nach dem "blow-fill-seal"-Verfahren (BFS-Technology). Bei dieser Blasform/Abfüll-Verschlußtechnik wird die jeweils gewünschte Form zuerst geblasen, dann mit dem Inhalt gefüllt und anschließend in einem Vorgang verschlossen. Hierbei wird ein Schlauch plastifizierten wasserlöslichen Kunststoffmaterials in eine geöffnete Blasform hinein extrudiert, die Blasform geschlossen und durch Erzeugen eines am Schlauch wirksamen Druckgradienten dieser aufgeweitet und zur Bildung des Behälters an die formgebende Wand der Blasform angelegt.

Bevorzugt sind die blasgeformten Hohlkörper mehrstückig ausgelegt, d.h. daß in der Blasform mehrere, voneinander getrennte Hohlvolumina erzeugt werden, die miteinander über Stege verbunden sind. Die Stege entstehen dabei durch Aneinanderpressen der beiden Schlauchwandungen in der Blasform, dort, wo diese keine Kavitäten zur Ausbildung der Hohlvolumina aufweist. Die Materialstärke der Stege kann durch die Wandungsdicke des extrudierten Schlauches sowie die Form des Preßwerkzeugs bestimmt werden, die Wandungsdicke der Hohlvolumina richtet sich nach der Menge an Polymermaterial, das für ein bestimmtes Volumen des herzustellenden Hohlkörpers zur Verfügung steht. Je nach Form der herzustellenden, aneinanderhängenden Hohlvolumina variiert die Wandstärke im Bereich der Hohlvolumina mehr oder weniger stark. Üblicherweise weisen blasgeformte Hohlkörper in der Nähe der Boden- und Kopfbereiche höhere Wandstärken auf als in der Mitte des Behälters. Dickere Wandstärken im Boden- und Kopfbereich können nicht nur das Resultat des Blasvorganges sein, sondern insbesondere auch unter Ausnutzung ihrer thermischen Wärmekapazität gezielt eingestellt sein, um eine bessere Siegelbarkeit der Schlauchendstücke bei minimierter Leckagegefahr zu erreichen. Insbesondere beim Befüllen mit im Vergleich zu dem Vorformling kälterem Inhalt/Mittel könnte es ansonsten zu einem unerwünschten vorzeitigen Abkühlen und Erstarren der thermoplastischen Schmelze kommen, was unzureichend und nicht flüssigkeitsdicht gesiegelte Verschlußpartien zur Folge hätte. Bei den erfindungsgemäß bevorzugten mehrstückigen Hohlkörpern kann die Wandstärke der Hohlkörper zudem in Stegnähe geringfügig höher sein als in den stegfernen ("ausgebauchten") Bereichen.

Der Begriff "blasgeformter Hohlkörper" umfaßt damit eine Grundeinheit bzw. Einheit von mindestens zwei miteinander verbundenen Einheiten ("Hohlvolumina") innerhalb einer Multiblockblistereinheit. Die einzelnen Einheiten bzw. Hohlvolumina sind vorzugsweise einzeln abtrennbar. Hierzu können die Multiblockblistereinheiten mit geeigneten Quetschnähten und/oder Perforationen versehen sein, die das Abtrennen einer gebrauchsfähigen Einheit vom Gesamtblock ermöglichen.

Eine bevorzugt herstellbare Multiblockblisterpackung weist die folgende Ausführungsform auf: Sie wird aus einem in seinem Umfang kongruenten Schlauch gebildet, welcher in seinem Querschnitt, also normal zur extrudierten Längsachse, ein elongiertes Oval bildet; diese beiden Längsseiten im Querschnittsoval werden spiegelbildlich zueinander geschweißt und bilden sowohl aneinander anliegende Flächen als auch nicht anliegende, nämlich die Hohlräume aufweisenden, Bereiche.

Verfahren, bei denen die wasserlöslichen, blasgeformten Hohlkörper im Bereich des befüllten Hohlvolumens Wandstärken von 0,06 - 2 mm, vorzugsweise zwischen 0,07 - 1,5 mm, weiter bevorzugt zwischen 0,08 - 1,2 mm, noch bevorzugter zwischen 0,09 - 1 mm und am meisten bevorzugt zwischen 0,1 - 0,6 mm, aufweisen, sind bevorzugt.

Die Wandstärke der die befüllten Hohlvolumina verbindenden Stege beträgt bei bevorzugten Verfahren maximal das Doppelte der im Bereich des befüllten Hohlvolumens befindlichen Wandstärken beträgt. In besonders bevorzugten Verfahren sind die die befüllten Hohlvolumina verbindenden Stege in ihrer Wandstärke weiter durch eine vorzugsweise mittig verlaufende Quetschnaht, vorzugsweise mit zusätzlicher Perforationslinie, zu Sollbruchstellen ausgedünnt, welche im Bereich von 5 bis 200 µm, vorzugsweise 10 bis 150 µm, besonders bevorzugt 15 bis 100 µm und insbesondere 20 bis 70 µm liegen. Die Abtrennbarkeit der einzelnen Hohlvolumina von der Multiblockblistereinheit ("blasgeformter Hohlkörper") kann somit durch eine genügend dünne Ausgestaltung der Stege oder durch eine Perforation der Stege erreicht werden.

Da jedes Hohlvolumen einzeln mittels eines Fülldorns befüllt wird, ist es möglich, die einzelnen Hohlvolumina mit unterschiedlichen Zusammensetzungen zu befüllen. Auf diese Weise können beispielsweise Wasch- oder Reinigungsmittel in Multiblockblisterform hergestellt werden, bei denen der Verbraucher das in einem Hohlvolumen befindliche Agens für einen Zusatznutzen (beispielsweise zusätzliches Bleichmittel und/oder zusätzlicher Aufheller für Weißwäsche, zusätzliche Farbübertragungsinhibitoren für Buntwäsche, zusätzliche Enzyme für bestimmte Verschmutzungen wie Blut usw.) nutzen oder durch Abtrennen des entsprechenden Hohlvolumens nicht nutzen kann. Diese Funktion kann soweit ausgeführt werden, daß jedes einzelne Hohlvolumen einer Multiblockblistereinheit unterschiedlich befüllt ist - aus Gründen der Verfahrensökonomie und der Verbraucherfreundlichkeit ist es allerdings bevorzugt, die Zahl der in einer Multiblockblistereinheit vorliegenden unterschiedlichen Zusammensetzungen in überschaubarer Zahl, zumeist ein, zwei oder drei Zusammensetzungen, zu halten.

Es ist auch möglich, zwei verschieden zusammengesetzte Mittel in ein und dasselbe Hohlvolumen zu füllen und diese innerhalb eines Hohlvolumens voneinander zu trennen. Diese Ausführungsform hat den Vorteil, daß der Verbraucher die Zusammensetzungen nicht voneinander trennen kann, da er hierzu das Hohlvolumen zerstören müßte, daß aber dennoch miteinander unverträgliche Substanzen (Im Bereich der Wasch- oder Reinigungsmittel beispielsweise Bleichmittel und Enzyme) nebeneinander konfektioniert werden können. Die Trennung in mehrere Kompartimente innerhalb eines Hohlvolumens gelingt dabei entweder durch entsprechend geformte Hohlvolumina mit mehreren, nicht voneinander trennbaren Kavitäten oder durch das Herstellen von Hohlvolumina, welche Trennwände aufweisen.

Die letztgenannte Ausführungsform ist bevorzugt und läßt sich einfach dadurch verwirklichen, daß ein Schlauch plastifizierten Kunststoffmaterials und zumindest eine aus dem Kunststoffmaterial gebildete, sich im Inneren des Schlauches durchgehend erstreckende Trennwand in eine geöffnete Blasform hinein extrudiert werden, die Blasform geschlossen und durch Erzeugen eines am Schlauch wirksamen Druckgradienten dieser aufgeweitet und zur Bildung des Behälters an die formgebende Wand der Blasform angelegt wird. Hierbei wird durch Schließen der geöffneten Blasform das beim Extrudieren vordere Ende des Schlauches und das vordere Ende jeder Trennwand miteinander verschweißt, um den mit jeder Trennwand verbundenen Behälterboden zu schließen, wobei das Aufweiten des Schlauches durch Zuführen von Blasluft von dem dem Behälterboden entgegengesetzten, dem Behälterhals zugeordneten Ende der geschlossenen Blasform her so erfolgt, daß die Blasluft zu beiden Seiten jeder Trennwand aufweitend wirkt, um im Behälter voneinander getrennte Kammern auszubilden.

Dadurch, daß die beim Extrudieren vorderen Enden von Schlauch und betreffender Trennwand, also die beim Extrusionsvorgang zum unteren Ende der Blasform gelangenden Partien des Kunststoffmaterials, zur Bildung des Behälterbodens verschweißt werden, ist das obere Ende des Formhohlraumes der Blasform dem Behälterhals zugeordnet. Dementsprechend kann die Weiterbearbeitung des aufgeweiteten Behälters innerhalb der geschlossenen Blasform durchgeführt werden, indem nach dem Aufweiten des Behälters mittels Blasluft, die durch den Behälterhals hindurch beidseits neben jeder Trennwand eingeführt wird, der Füllvorgang für jede innere Behälterkammer durch den Behälterhals hindurch durchgeführt wird, ohne die Blasform zu öffnen oder den Behälter zu entnehmen.

Es kann aber auch eine Herstellvariante kompartimentierter Hohlvolumina bevorzugt sein, bei welchem die mindestens eine mitextrudierte Trennwand selber einen coextrudierten, vorzugsweise im Querschnitt zu einem Oval elongierten, vorzugsweise konzentrischen Schlauch darstellt. Dieser kann analog dem oben beschriebenen Blas- und Füllvorgang lediglich beidseits beblasen und befüllt werden, so daß sich durch Kollaps des mittigen, eingeschlossenen Volumens wieder sinngemäß eine, also quasi zweischichtige, Trennwand ergibt. Es kann aber auch gewünscht sein, durch Bereitstellung eines weiteren Blas- und Fülldornes das mittlere Kompartiment ebenfalls zu befüllen. Es ist weiterhin vorstellbar, dieses Prinzip auf die Coextrusion mehrerer blasextrudierter und befüllter Kompartimente auszudehnen, wobei es besonders bevorzugt sein kann, den einzelnen Schläuchen/Vorformlingen durch eine unterschiedliche Materialwahl unterschiedliche Eigenschaften wie beispielsweise eine Sperrschichtfunktion, eine Funktion als mechanischer Stabilitätsgeber, eine Funktion als Temperaturschalter beizugeben. Weiterhin kann es aber auch erwünscht sein, die aus unterschiedlichem Material coextrudierten Schläuche/Vorformlinge respektive Trennwände zu Multilayer-Schläuchen/Vorformlingen zusammenzuführen d.h. kollabieren zu lassen. Auf diese Weise sind einkammrige Hohlvolumina herstellbar, welche durch mehrschichtige Hüllen umfaßt sind; beispielhaft seien Kombinationen von Polyethylenglykol, vorzugsweise innen, da klebrig, mit PVA oder recycliertem Polymer, vorzugsweise innen, mit frischem Thermoplasten genannt.

Der Füllvorgang kann sowohl bei einkammrigen Hohlvolumina als auch bei den Mehrkammer-Hohlvolumina mittels eines kombinierten Blas- und Fülldornes durchgeführt werden oder durch einen gesonderten Fülldorn, der nach dem Zurückziehen des Blasdornes aus dem Behälterhals in diesen eingeführt wird. Ein besonderer Vorteil des BFS-Verfahrens besteht darin, daß nach dem Befüllen des Behälters der Behälterhals mittels eines bei noch geschlossener Blasform erfolgenden zusätzlichen Schweißvorganges fertig geformt und dabei gleichzeitig mit einem durch den Schweißvorgang gebildeten Verschluß hermetisch abgeschlossen werden kann. Dies kann durch bewegliche obere Schweißbacken oder Kopfbacken, die an der Oberseite der Blasform angeordnet sind, erfolgen. Hierbei können beliebige, gewünschte Form- und/oder Verschlußvorgänge durchgeführt werden, beispielsweise kann ein an einer Sollbruchstelle oder Trennstelle abreißbarer Verschluß ausgebildet werden, vorzugsweise in Form eines Drehknebelverschlusses. Es versteht sich, daß auch ein Außengewinde am Behälterhals angeformt werden könnte, um einen Schraubverschluß mit einem separaten Verschlußelement zu bilden. Im Falle der erfindungsgemäßen Formkörper wird, aufgrund ihrer wasserlöslichen Beschaffenheit der Polymerhülle(n), eine besonders bevorzugte obere Verschlußform durch bloßes Versiegeln und Abtrennen überstehenden Butzenmaterials dargestellt, quasi analog dem Verschweißen des/der vorderen Schlauch- bzw. Trennwandende(n) zum Hohlkörperboden. Bei dem am Behälterhals durchgeführten Schweißvorgang können getrennte Verschlüsse für jede Kammer des Behälters oder ein sämtliche Kammern des Behälters gemeinsam verschließender Verschluß ausgebildet werden.

Die Ausbildung eines in sich unterteilten Extrusionsschlauches kann beispielsweise dadurch erreicht werden, daß das der Blasform zugewandte Ende der Extrudereinrichtung mit einem Düsenring ausgestattet wird, in dem koaxial zur Düsenlängsachse ein Düsenkem angeordnet ist, dessen Kernspitze mit dem Endbereich des Düsenringes einen ringförmigen Auslaß definiert, aus dem extrudiertes Kunststoffmaterial in Form eines Schlauches austritt. Das aufgeschmolzene Kunststoffmaterial gelangt zum Auslaß über einen zwischen Düsenring und Düsenkern gebildeten Ringspalt. Dieser Ringspalt verengt sich am Übergang zwischen der Kernspitze und dem sich stromaufwärts anschließenden Teil des Düsenkernes, so daß sich ein Staubereich für das zugeführte Kunststoffmaterial ergibt.

Die Kernspitze ist mit dem anschließenden, stromaufwärtigen Teil des Düsenkernes über einen Zapfen mit Außengewinde so verschraubt, daß die einander zugewandten Flächen von Kernspitze und anschließendem Teil des Düsenkernes in einem Abstand voneinander angeordnet sind. Die entsprechende Fläche der Kernspitze bildet eine Trichterfläche, während die zugewandte Fläche des übrigen Düsenkernes eine Kegelfläche definiert. Diese Flächen, die vorzugsweise zur Düsenlängsachse Neigungswinkel von 65° bzw. 60° einschließen, bilden zwischen sich eine Führungseinrichtung für aus dem Ringspalt abgezweigtes Kunststoffmaterial, das am Staubereich zwischen die Flächen eintritt. Durch Bohrungen in dem das Außengewinde aufweisenden Zapfen der Kernspitze gelangt dieses abgezweigte Kunststoffmaterial in einen in der Vorderseite der Kernspitze ausgebildeten Austrittsschlitz. Von dort tritt das abgezweigte Kunststoffmaterial als innerhalb des extrudierten Schlauches querverlaufende Bahn aus, die nach dem Aufweiten des Schlauches in dem dabei geformten Behälter die Trennwand bildet. Beidseits neben dem Austrittsschlitz, d.h. auf beiden Seiten der aus dem Austrittsschlitz austretenden Kunststoffbahn, befinden sich in der Endfläche der Kernspitze vorzugsweise je eine Austrittsöffnung für Stützluft, die über Zweigleitungen, die in dem das Außengewinde aufweisenden Zapfen ausgebildet sind, mit einem zentralen Luftkanal verbunden sind.

Die vom Luftkanal her über die Austrittsöffnungen zugeführte Luft ist als Stützluft vorgesehen, die lediglich das Zusammenfallen des extrudierten Schlauches und dessen Zusammenkleben mit der die Trennwand bildenden Bahn verhindert. Das Aufweiten des Behälters in der Blasform erfolgt in einem zusätzlichen Arbeitsschritt mittels eines Blas- und Fülldornes, welcher in analoger Anordnung zu den Austrittsöffnungen der Kernspitze Blasöffnungen für die Zufuhr aufweitender Blasluft aufweist. Diese Blasöffnungen können anschließend auch als Füllöffnungen für die Zufuhr des Füllgutes zu den Behälterkammern dienen.

Wie oben erwähnt erfolgt die Formgebung des Behälterhalses der nach dem erfindungsgemäßen Verfahren hergestellten Behälter mittels oberer beweglicher Schweißbacken an der betreffenden Blasform. Durch die oberen Schweißbacken kann eine beliebige Verschlußausbildung bei der Formgebung des Behälterhalses in der Weise erfolgen, wie es in der einschlägigen Technik bei Einkammerbehältern beispielsweise entsprechend dem bottelpack^{®}-System der Firma Rommelag bekannt ist. So kann am Behälterhals beispielsweise ein Drehknebelverschluß geformt werden. Hierbei wird der Schweißvorgang so durchgeführt, daß beide Kammern durch einen Abdrehknebel verschlossen sind, der an einer als Sollbruchstelle ausgebildeten Trennstelle abtrennbar ist, indem er mit Hilfe seines angeformten Griffstückes verdreht wird.

Nach Zurückziehen des Blasdornes und Einführen eines Fülldornes, der für jede durch die Trennwand getrennte Behälterkammer je eine Füllöffnung aufweist, können nun beide Kammern befüllt werden, während sich der Behälter noch innerhalb der Blasform befindet.

Nach erfolgtem Befüllen wird der Fülldorn zurückgezogen, und die oberen Schweißbacken werden zusammengefahren, um am Behälterhals einen weiteren Schweißvorgang durchzuführen, bei dem der Behälterhals endgültig geformt und gleichzeitig verschlossen wird.

Nach dem Füllen des Behälters und dem Zurückziehen des Fülldornes können, wenn dies gewünscht wird, vor dem hermetischen Verschließen des Behälters Einlegeteile in den Behälterhals eingebracht werden. Dabei kann es sich um weitere Aktivsubstanz in fester Form (beispielsweise eine Enzymtablette) oder um nichtfunktionelle "Gimmicks" oder ein sonstiges Fremdteil handeln, die mittels Vakuumgreifer eingelegt werden können, bevor die Schweißbacken zusammengefahren werden, um das Einlegeteil zu umschweißen und gleichzeitig einen hermetischen Verschluß zu bilden.

Das erfindungsgemäße Verfahren ist hinsichtlich der Größe der Multiblockblisterpackung und des einzelnen Hohlvolumens nicht beschränkt. Bevorzugte Verfahren sind dadurch gekennzeichnet, daß das Füllvolumen eines befüllten Hohlkörpers 1 bis 1000 ml, vorzugsweise 2 bis 500 ml, besonders bevorzugt 5 bis 250 ml, weiter bevorzugt 10 bis 100 ml und insbesondere 15 bis 50 ml, beträgt.

Auch hinsichtlich der Zahl zu einer Multiblockblisterpackung zu vereinigender Hohlvolumina ist das erfindungsgemäße Verfahren nicht beschränkt. Bevorzugt sind hier Verfahren, bei denen ein befüllter Behälter aus einer Reihe von 2 bis 100, vorzugsweise von 2 bis 50, besonders bevorzugt von 3 bis 20 und insbesondere von 4 bis 12, miteinander über Stege verbundenen befüllten Hohlvolumina gebildet wird.

Die Freisetzung der in den nach dem erfindungsgemäßen Verfahren hergestellten Hohlkörpern enthaltenen Mitteln erfolgt durch Desintegration bzw. Auflösung der Behälterwandung unter Anwendungsbedingungen. Dabei muß es nicht erforderlich sein, daß sich der gesamte Behälter auflöst, bevor eine Freisetzung eintritt. Eine schnellere Freisetzung kann erfindungsgemäß dadurch erfolgen, daß die Behälterwandung mit speziellen "Sollbruchstellen" versehen wird, die unter Anwendungsbedingungen schnell desintegrieren bzw. sich auflösen und so zu einer frühen Freisetzung der Inhaltsstoffe führen. Hier sind erfindungsgemäße Verfahren bevorzugt, bei denen die wasserlöslichen, blasgeformten Hohlkörper im Bereich des befüllten Hohlvolumens einen Bereich geringerer Wandstärke aufweisen, der vorzugsweise durch Einsenkung mechanisch geschützt ist. Die Bereiche geringerer Wandtstärke weisen dabei das 0,1- bis 0,9-fache, vorzugsweise das 0,2- bis 0,85-fache, besonders bevorzugt das 0,3- bis 0,8-fache und insbesondere das 0,5- bis 0,75-fache der Wandstärke der Hohlvolumina auf.

Die Form der Behälter, d.h. sowohl die des Multiblockblisters als auch die des einzelnen Hohlvolumens kann beliebig gewählt werden. Bevorzugte Verfahren sind dadurch gekennzeichnet, daß die befüllten Hohlvolumina rotationssymmetrisch zu ihrer längsten Achse und vorzugsweise zur Normalen auf die Quetschfläche ausgebildet sind. Diese bevorzugte Form weist für das einzelne Hohlvolumen vorzugsweise eine Länge: Durchmesser-Verhältnis von 1,5:1 bis 50:1 auf, wobei Verhältnisse von 4:1 bis 10:1 bevorzugt sind.

Die Verbindungsstege sind bei solchen Formen vorzugsweise entlang der langen Hohlvolumina-Seiten angeordnet.

Es kann auch bevorzugt sein, daß die befüllten Hohlvolumina zur Normalen auf die Quetschfläche nicht rotationssymmetrisch ausgebildet sind. Dies läßt sich beispielsweise durch die Wahl einer Blasform realisieren, deren Tiefe mehr als das 0,5-fache der Teilungsbreite ausmacht. Wird der extrudierte Schlauch nun zwischen zwei solchen Formen geblasen, entsteht ein Hohlvolumen, das eine Breite (Ausdehnung in Richtung der Quetschfläche, senkrecht zur Extrusionsrichtung des ursprünglichen Schlauches) aufweist, die der Teilungsbreite der Blasform entspricht, aber eine Tiefe (Ausdehnung in Richtung der Normalen auf die Quetschfläche und senkrecht zur Extrusionsrichtung des ursprünglichen Schlauches), die ein Mehrfaches der Teilungsbreite aufweist. Solche ovalisierten Hohlkörper können bevorzugt sein, wobei insbesondere Breite: Tiefe-Verhältnisse von 1:1,1 bis 1:3, vorzugsweise von 1:1,2 bis 1:2,5 und insbesondere von 1:1,3 bis 1:2, bevorzugt sind.

Bevorzugte Verfahren sind auch dadurch gekennzeichnet, daß die befüllten Hohlvolumina eine Länge (entlang der Extrusionsrichtung des ursprünglichen Schlauches) von 30 bis 120 mm, vorzugsweise von 40 bis 100 mm und insbesondere von 45 bis 70 mm, aufweisen.

Zwischen den einzelnen Verbindungsstegen weisen die befüllten Hohlvolumina in bevorzugten Verfahren eine Breite (in Richtung der Quetschfläche, senkrecht zur Extrusionsrichtung des ursprünglichen Schlauches) von 10 bis 70 mm, vorzugsweise von 15 bis 60 mm und insbesondere von 20 bis 40 mm, auf.

Die Wandstärken des Hohlkörpers lassen sich mittels Blasformen bereichsweise unterschiedlich herstellen, indem man die Wandstärken des Vorformlings, vorzugsweise entlang seiner vertikalen Achse, entsprechend unterschiedlich dick, vorzugsweise durch Regulierung der Menge an thermoplastischen Material, vorzugsweise mittels einer Stellspindel beim Ausbringen des Vorformlings aus der Extruderdüse, ausbildet.

Den Hohlkörper kann man mit Bereichen unterschiedlichen äußeren Umfangs und gleichbleibender Wandstärke blasformen, indem man die Wandstärken des Vorformlings, vorzugsweise entlang seiner vertikalen Achse, entsprechend unterschiedlich dick, vorzugsweise durch Regulierung der Menge an thermoplastischen Material mittels einer Stellspindel beim Ausbringen des Vorformlings aus der Extruderdüse, ausbildet.

Auf diese Weise lassen sich unterschiedliche geometrische Ausgestaltungen des Hohlkörpers mit und ohne Kompartimente blasformen. In einem einzigen Arbeitszyklus lassen sich so Flaschen, Kugeln, Weihnachtsmänner, Osterhasen oder andere Figuren blasformen, die mit Mittel gefüllt werden können, anschließend verschlossen und dann entformt werden.

Besonders vorteilhaft ist, dass sich der Hohlkörper beim Blasformen in der Blasform prägen und/oder dekorieren lässt. Durch entsprechende Ausgestaltung der Blasform, lässt sich ein Motiv spiegelbildlich auf den Hohlkörper übertragen. Auf diese Weise lässt sich die Oberfläche des Hohlkörpers praktisch beliebig gestalten. Beispielsweise lassen sich so auf dem Hohlkörper Informationen, wie Eichstriche, Anwendungshinweise, Gefahrensymbole, Marken, Gewicht, Füllmenge, Verfallsdatum, Bilder usw. aufbringen.

Der Vorformling, der Hohlkörper und/oder der flüssigkeitsdicht verschlossene Hohlkörper aus einer oder mehreren Komponente(n), wobei die Komponente ein oder mehrere Materialien, basierend auf einem oder unterschiedlichen wasserlöslichen polymeren Thermoplasten, umfaßt, besteht.

Der Vorformling, der Hohlkörper und/oder der flüssigkeitsdicht verschlossene Hohlkörper kann schlauch-, kugel- oder blasenförmig sein. Ein kugelförmiger Hohlkörper hat vorzugsweise einen Formfaktor (= shape faktor) von > 0,8, vorzugsweise von > 0,82, bevorzugt > 0,85, weiter bevorzugt > 0,9 und besonders bevorzugt von > 0,95.

Der Formfaktor (shape factor) im Sinne der vorliegenden Erfindung ist durch moderne Partikelmeßtechniken mit digitaler Bildverarbeitung präzise bestimmbar. Ein übliches Verfahren, ist beispielsweise das Camsizer®-System von Retsch Technology oder das KeSizer® der Firma Kemira. Diese Verfahren beruhen darauf, daß die Hohlkörper bzw. Körper mit einer Lichtquelle bestrahlt werden und die Hohlkörper als Projektionsflächen erfaßt, digitalisiert und computertechnisch verarbeitet werden. Die Bestimmung der Oberflächenkrümmung erfolgt durch ein optisches Meßverfahren, bei dem der "Schattenwurf" der zu untersuchenden Hohlkörper bestimmt wird und in einen entsprechenden Formfaktor umgerechnet wird. Das zugrundeliegende Prinzip zur Bestimmung des Formfaktors wurde beispielsweise von Gordon Rittenhouse in "A visual method of estimating two-dimensional sphericity" im Journal of Sedimentary Petrology, Vol. 13, Nr. 2, Seiten 79-81 beschrieben. Die Meßgrenzen dieses optischen Analyseverfahrens betragen 15 µm bis 90 mm. Verfahren zur Bestimmung des Formfaktors für größere Teilchen sind dem Fachmann bekannt. Diese beruhen in der Regel auf den Prinzipien der vorgenannten Verfahren.
Die Freisetzung aus dem Hohlkörper mit und ohne Kompartimente kann entweder dadurch zu unterschiedlichen Zeitpunkten erreicht werden, dass die blasgeformten Wandungen unterschiedliche Auflöse- bzw. Desintegrationsgeschwindigkeiten aufweisen. Dies ist beispielsweise durch die Wahl der Materialstärke möglich.

Die Wandungen des mittels Blasformung hergestellten Hohlkörpers und/oder der Kompartimente weise eine Wandstärke von zwischen 0,05 - 5 mm, vorzugsweise von zwischen 0,06 - 2 mm, bevorzugt von zwischen 0,07 - 1,5 mm, weiter bevorzugt von zwischen 0,08 - 1,2 mm, noch bevorzugter von zwischen 0,09 - 1 mm und am meisten bevorzugt, von zwischen 0,1 - 0,6 mm, auf.

Die Befüll-Öffnung des Hohlkörpers nach dem Befüllen lässt sich flüssigkeitsdicht, vorzugsweise durch Materialschluß, bevorzugt mittels thermischer Behandlung, besonders bevorzugt durch Aufsetzen eines Schmelzkleckses, verschließen.

Die Befüll-Öffnung oder Öffnungen des Hohlkörper lassen sich vorteilhaft durch thermische Behandlung, vorzugsweise durch Verschmelzen der Wandungen, die an die Öffnung angrenzen, insbesondere mittels Klemmbacken, flüssigkeitsdicht verschließen.

Besonders bevorzugt ist, wenn das in dem Hohlkörper und/oder den Kompartimenten enthaltende Wasch- und/oder Reinigungsmittel als waschaktive Substanzen Aniontenside und/oder Niotenside umfasst. Noch bevorzugter ist, wenn das in dem Hohlkörper und/oder den Kompartimenten enthaltende Wasch- und/oder Reinigungsmittel frei von Kationentensid und/oder Amphotensiden ist.

Die Hohlkörper und/oder Kompartimente des Hohlkörpers, welche wasch-, reinigungs- und/oder pflegeaktive Zubereitung enthalten, können miteinander zur Waschmittel-, Reinigungsmittel- und/oder Pflegemittel-Portion verbunden werden. Hierbei ist man erfindungsgemäß nicht daran gebunden, lediglich zwei Kompartimente zu verbinden. Vielmehr ist es auch möglich, weitere Kompartimente und/oder Hohlkörper, welche wasch-, reinigungs- und/oder pflegeaktive Zubereitung in weiteren Kompartimenten enthalten, anzufügen. Aus Gründen der Verfahrensökonomie sind hierbei Kompartimente und/oder Hohlkörper bevorzugt, welche ebene Verbindungsflächen aufweisen. Selbstverständlich ist man nicht daran gebunden, nur befüllte Hohlkörper mit und/ohne Kompartimente miteinander zur erfindungsgemäßen Waschmittel-, Reinigungsmittel- oder Pflegemittel-Portion zu verbinden. Es ist vielmehr auch möglich und bevorzugt, Hohlkörper, welche wasch-, reinigungs- oder pflegeaktive Zubereitung in den Kompartimenten (A) bzw. (B) enthalten, mit weiteren wasch-, reinigungs- und/oder pflegeaktive Zubereitungen enthaltenden blasgeformten Kompartimenten und/oder Hohlkörpern zu verbinden. Hier hat sich insbesondere das Verbinden von blasgeformten Hohlkörpern mit Tabletten als besonders vorteilhaft erwiesen.
Die jeweiligen Kompartimente des wasserlöslichen Hohlkörpers können mit einem unterschiedlichen Gehalt und/oder einer unterschiedlichen Zusammensetzung an wasch-, reinigungs- und/oder pflegeaktiven aktiven Substanzen befüllt werden.

Die mittels Blasformen hergestellten Mittel, insbesondere Wasch-, Pflege und/oder Reinigungsmittel, enthaltenden wasserlöslichen Hohlkörper weisen 2 bis 40 Kompartimente, bevorzugt 2 bis 4, weiter bevorzugt 2 bis 3 Kompartimente, auf.

Bevorzugt ist, wenn der Gehalt an Anionentensid von zwischen 3 Gew.-% - 40 Gew.-%, und der Gehalt an Niotensid von zwischen 15 Gew.-% - 65 Gew.-%, bezogen auf den Gesamtgewichtsanteil des in dem Hohlkörper enthaltenen Wasch- und/oder Reinigungsmittel, ausmacht, wobei der Gehalt an Anionentensid und Niotensid insgesamt ≤ 100 Gew.-% ist.

Die in dem blasgeformte Hohlkörper und/oder den jeweiligen Kompartimenten-, als waschaktive, reinigungsaktive, pflegeaktive Substanzen können kationische Tenside, amphotere Tenside, Buildersubstanzen, Bleichmittel, Bleichaktivatoren, Bleichstabilisatoren, Bleichkatalysatoren, Enzyme, Polymere, Cobuilder, Alkalisierungsmittel, Acidifizierungsmittel, Antiredepositionsmittel, Silberschutzmittel, Färbemittel, optische Aufheller, UV-Schutzsubstanzen, Weichspüler und/oder Klarspüler umfassen.

Es ist aber auch vorgesehen, das der blasgeformte, wasserlösliche Hohlkörper und/oder wenigstens ein Kompartiment Mittel enthält, ausgewählt aus der Gruppe umfassend Arzneimittel, Pflanzenschutzmittel, Lebensmittel, Waschmittel, Reinigungsmittel, Pflegemittel, Kosmetika, Haarfärbemittel, Agrochemikalien, Düngemittel, Baustoffe und/oder Klebstoff.

Die erfindungsgemäßen Hohlkörper mit und ohne Kompartimente können insbesondere für Agrochemikalien, wie Dünge- und Pflanzenschutzmittel, Nahrungsmitteln und Nahrungszusatzstoffe, Tierfuttermittel, Pharmazeutika, Farb- und Duftstoffe und/oder dergleichen eingesetzt werden.

Der blasgeformte, wasserlösliche Hohlkörper und/oder dessen Kompartimente können praktisch jedes denkbare Mittel enthalten. Bevorzugt ist, dass der Wassergehalt des Mittels ≤ 10 Gew.-%, bezogen auf das Gesamtgewicht des Mittels, in dem Hohlkörper und/oder Kompartiment ausmacht. Es kann in anderen denkbaren Fällen aber auch gerade bevorzugt sein, hochwässrige Anteile enthaltende Mittel abzufüllen, beispielsweise im Bereich von 30 - 50 %.

Eine weitere Voraussetzung ist, muss aber nicht zwingend sein, dass der Hohlkörper zwecks Freisetzung in einem wässrigen Milieu eingesetzt wird. Dies kann, muss aber nicht, beschränkend für die Auswahl der Mittel sein, die erfindungsgemäß verwendbar sind.

Bevorzugt ist, wenn wenigstens ein Enzym haltiges Kompartiment frei von Bleichmittel und/oder wenigstens ein Bleichmittel haltiges Kompartiment frei von Enzym ist.

Mittels Blasformen lässt sich mindestens ein Hohlkörperbereich und/oder Kompartimentbereich mit wenigstens einer äußeren Oberfläche von zwischen 0,01 mm² und 10 cm² erzeugen, wobei die Wandstärke dieser Fläche, um eine schnellere Auflösung in einer wässrigen Lösung zu gewährleisten, geringer als die Wandstärke der angrenzenden Fläche ist.

Die mittels Blasformung ausgebildete Wandstärke des Hohlkörpers und/oder der Kompartimente sollte so ausgebildet sein, dass das in dem Hohlkörper und/oder in den Kompartimenten enthaltende Mittel, insbesondere Wasch- und/oder Reinigungsmittel, in die wässrige Anwendungsflotte innerhalb von ≤ 5 min, vorzugsweise innerhalb von ≤ 3 min, bevorzugt innerhalb von ≤ 1 min, teilweise oder vollständig freigesetzt wird.

Zur Bestimmung der Freisetzungszeit wurden die Hohlkörper mit und ohne Kompartiment in 10 Liter bewegtes Wasser, Rührerdrehzahl ≥ 60 U/min, gegeben, wobei das Wasser auf 90 °C, vorzugsweise auf 60 °C, weiter bevorzugt auf 40 °C, noch weiter bevorzugt auf 30 °C und insbesondere bevorzugt auf 20 °C temperiert wird. Weiter bevorzugt wird die Freisetzungszeit direkt in der wässrigen Anwendungsflotte mindestens einer marktgängigen Wasch- und/oder Geschirrspülmaschine ermittelt.

Vorteilhaft ist, wenn man die Wandstärke des Hohlkörpers und/oder der Kompartimente mittels Blasformen so ausbildet, dass die in wenigstens einem Hohlkörper und/oder in wenigstens einem Kompartiment enthaltenen Enzyme zeitlich zumindest teilweise oder vollständig vor dem in dem oder wenigstens einem anderen Kompartiment enthaltenen Bleichmittel in die wässrige Anwendungsflotte freigesetzt werden.

Die Wandstärke des Hohlkörpers und/oder der Kompartimente kann mittels Blasformen so ausbildet werden, dass die in dem Hohlkörper und/oder in wenigstens einem Kompartiment enthaltenden Enzyme zeitlich zumindest teilweise oder vollständig ≥ 60 s, vorzugsweise ≥ 120 s, weiter bevorzugt ≥ 240 s und am meisten bevorzugt ≥ 360 s vor dem in dem oder wenigstens einem anderen Kompartiment enthaltenden Bleichmittel in die wässrige Anwendungsflotte freigesetzt werden.

Das Innenvolumen des mittels Blasformen erzeugten Hohlkörpers und/oder der Kompartimente kann beispielsweise von zwischen 0,5 ml und 2000 ml, vorzugsweise zwischen 2 ml und 500 ml, bevorzugt von zwischen 5 und 250 ml, weiter bevorzugt von zwischen 10 und 100 ml, noch bevorzugter von zwischen 20 und 75 ml und am bevorzugtesten von zwischen 40 und 50 ml, ausmachen.

Dem mittels Blasformung erzeugten Hohlkörper mit und ohne Kompartimente kann das Mittel, insbesondere Wasch-, Pflege- und/oder Reinigungsmittel, in fester Form, flüssiger Form und/oder Gelform, vorzugsweise in Form von Partikeln, Suspensionen, Emulsionen, einer homogenen Lösung, Pasten und/oder in Form durchsichtiger, vorzugsweise klarer, Lösungen, zugesetzt werden.

Der mittels Blasformung erzeugte erfindungsgemäße Hohlkörper und/oder die Kompartiment(e) können ein mehrphasiges Mittel, insbesondere Wasch- und/oder Reinigungsmittel enthalten, vorzugsweise ein temporäres Zwei- oder Dreiphasengemisch, welches beim Stehenlassen separate Phasen ausbildet und sich durch Schütteln temporär, reversibel, in eine Phase, beispielsweise in eine Emulsion, Suspension oder Dispersion überführen läßt.

Das mehrphasige Mittel kann insbesondere ein Wasch-, Pflege und/oder Reinigungsmittel sein, welches bevorzugt wenigstens eine wässrige und/oder nichtwässrige Phase umfaßt, wobei bevorzugt wenigstens eine nichtwässrige Phase flüssig oder festförmig und besonders bevorzugt wenigstens eine wässrige Phase gelförmig ist.

Der bei der Blasformung zur Bildung des Hohlkörpers und/oder der Kompartimente verwendete wasserlösliche Thermoplast ist vorzugsweise ausgewählt aus der Gruppe umfassend Polyvinylalkohol (PVA), acetalisierter Polyvinylalkohol, Polyvinylpyrrolidon, Polyethylenoxid, Gelatine, Cellulose, Stärke und Derivate der vorgenannten Stoffe, Polyvinylalkohol (PVA), acetalisierter Polyvinylalkohol und/oder Mischungen der vorgenannten Polymere, wobei Polyvinylalkohol(-blends resp. -compounds) besonders bevorzugt ist.

Die vorstehend beschriebenen Polyvinylalkohole sind kommerziell verfügbar, beispielsweise unter dem Warenzeichen Mowiol^{®} ex Clariant (aufgegangen in die Kuraray Specialities Europe KSE). Im Rahmen der vorliegenden Erfindung besonders geeignete Polyvinylalkohole sind beispielsweise Mowiol^{®} 3-83, Mowiol^{®} 4-88, Mowiol^{®} 5-88, Mowiol^{®} 8-88 sowie L648, L734, Mowiflex LPTC 221 ex Clariant/KSE sowie die Compounds der Firma Texas Polymers wie bespielsweise Vinex 2034.

Weitere als Material für die Hohlkörper besonders geeignete Polyvinylalkohole sind der nachstehenden Tabelle zu entnehmen:

| **Bezeichnung** | **Hydrolysegrad [%]** | **Molmasse [kDa]** | **Schmelzpunkt [°C]** |
|---|---|---|---|
| Airvol^{®} 205 | 88 | 15-27 | 230 |
| Vinex^{®} 2019 | 88 | 15-27 | 170 |
| Vinex^{®} 2144 | 88 | 44 - 65 | 205 |
| Vinex^{®} 1025 | 99 | 15-27 | 170 |
| Vinex^{®} 2025 | 88 | 25-45 | 192 |
| Gohsefimer^{®} 5407 | 30 - 28 | 23.600 | 100 |
| Gohsefimer^{®} LL02 | 41 - 51 | 17.700 | 100 |

Weitere als Material für die Hohlform geeignete Polyvinylalkohole sind ELVANOL^{®} 51-05, 52-22, 50-42, 85-82, 75-15, T-25, T-66, 90-50 (Warenzeichen der Du Pont), ALCOTEX^{®} 72.5, 78, B72, F80/40, F88/4, F88/26, F88/40, F88/47 (Warenzeichen der Harlow Chemical Co.), Gohsenol^{®} NK-05, A-300, AH-22, C-500, GH-20, GL-03, GM-14L, KA-20, KA-500, KH-20, KP-06, N-300, NH-26, NM11Q, KZ-06 (Warenzeichen der Nippon Gohsei K.K.).

Der bei der Blasformung zur Bildung des Hohlkörpers und/oder der Kompartimente verwendete wasserlösliche Thermoplast kann zusätzlich Polymere ausgewählt aus der Gruppe, umfassend Acrylsäure-haltige Polymere, Polyacrylamide, Oxazolin-Polymere, Polystyrolsulfonate, Polyurethane, Polyester, Polyether und/oder Mischungen der vorstehenden Polymere, aufweisen.

Bevorzugt ist, wenn der bei der Blasformung-zur Bildung des Hohlkörpers und/oder der Kompartimente verwendete wasserlösliche Thermoplast einen Polyvinylalkohol umfaßt, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Weiter bevorzugt ist, dass der bei der Blasformung zur Bildung des Hohlkörpers und/oder der Kompartimente verwendete wasserlösliche Thermoplast einen Polyvinylalkohol umfaßt, dessen Molekulargewicht im Bereich von 10.000 bis 100.000 gmol⁻¹, vorzugsweise von 11.000 bis 90.000 gmol⁻¹, besonders bevorzugt von 12.000 bis 80.000 gmol⁻¹ und insbesondere von 13.000 bis 70.000 gmol⁻¹ liegt.

In einer bevorzugten Ausführungsform weist der wasserlösliche Thermoplast, vorzugsweise der Polyvinylalkohol, eine enge Verteilung des Molekulargewichts auf, vorzugsweise mit einem Verteilungsquotienten von ungefähr d₁₀/d₉₀ ≦ 0,66.

In einer weiteren Ausführungsform umfasst die Blasformmasse die genannten Thermoplasten in Mengen von mindestens 50 Gew.-%, vorzugsweise von mindestens 70 Gew.-%, besonders bevorzugt von mindestens 80 Gew.-% und insbesondere von mindestens 90 Gew.-%, jeweils bezogen auf das Gewicht der Blasgussmasse.

Vorteilhaft ist, wenn der Schmelzflussindex (Melt Flow Index) der Blasformmasse beim Extrudieren, gemessen im ersten Schritt bei 10 kg Stempellast, zwischen 1 und 30, bevorzugt zwischen 5 und 15, besonders bevorzugt zwischen 8 und 12 und/oder der Schmelzflussindex (MFI) der Blasformmasse, gemessen bei 2,16 kg Stempellast, zwischen 4 und 40, bevorzugt zwischen 5 und 20, besonders bevorzugt zwischen 8 und 15 beträgt Im Rahmen der vorliegenden Erfindung besonders zum Blasformen geeignete Polyvinylalkohol-Typen sind mittel- bis hochviskos und besitzen beispielsweise MFI-Werte von 6-8 (bei 230°C, 2,16 kg Auflast, PVA-Blend von Hersteller Texas Polymers "Vinex 2034" oder "2144") bzw. 9-11 (bei 190°C; 10 kg Auflast, PVA-Blend "TP Vinex 5030").

Zur Erleichterung des Blasformen (also ihrer Herstellung) können die Hohlkörper Plastifizierhilfsmittel, d.h. Weichmacher, enthalten. Dies kann insbesondere dann von Vorteil sein, wenn als Material für die Hohlkörper Polyvinylalkohol oder partiell hydrolysiertes Polyvinylacetat gewählt wurden. Als Plastifizierhilfsmittel haben sich insbesondere Glycerin, Triethanolamin, Ethylenglycol, Propylenglycol, Diethylen- oder Dipropylenglycol, Diethanolamin und Methyldiethylamin bewährt.

Vorteilhaft ist, wenn die Blasformmasse Weichmacher in Mengen von mindestens > 0 Gew.-%, vorzugsweise von ≥ 10 Gew.-%, besonders bevorzugt von ≥ 20 Gew.-% und insbesondere von ≥ 30 Gew.-%, jeweils bezogen auf das Gewicht der Blasformmasse, enthält.

Der flexible, vorzugsweise elastische, wasserlösliche Hohlkörper kann Flanschteile aufweisen und gegebenenfalls durch Formschluß und/oder Materialschluß, vorzugsweise durch Verschweißung mit wenigstens einer weiteren Hohlform verbunden und/oder verschlossen werden.

Der mittels Blasformen erfindungsgemäß hergestellte Hohlkörper und/oder die Kompartimente können zu 20 bis 100%, vorzugsweise zu 30 bis 99%, besonders bevorzugt zu 40 bis 98% und insbesondere zu 50 bis 95% ihres Volumens mit Mittel, insbesondere Wasch-, Pflege- und/oder Reinigungsmittel, befüllt werden.

Der blasgeformte Hohlkörper und/oder die jeweiligen Kompartimente des wasserlöslichen Hohlkörpers können aus jeder Richtung, beispielsweise von oben, von der Seite und/oder von unten befüllt werden.

Der mittels Blasformen erfindungsgemäß hergestellte Hohlkörper und/oder dessen Kompartimente können mit mindestens einer, bevorzugt mehreren, waschaktive(n), reinigungsaktive(n), spülaktive(n), pflegeaktiv(en), pharmazeutisch aktiven Zubereitung(en), Lebensmittel, Pflanzenschutzmittel, Düngemittel, Baustoffe, Haarbehandlungsmittel, Körperpflegemittel, Kosmetika, Tapetenkleister oder Klebstoff, beispielsweise in Form von Pulver, Granulat, Extrudate, Pellets, Perlen, Tabletten, Tabs, Ringe, Blöcke, Briketts, Lösungen, Schmelzen, Gele, Suspensionen, Dispersionen, Emulsionen, Schäume und/oder Gase, teilweise oder vollständig gefüllt werden.

Der mittels Blasformen erfindungsgemäß hergestellte Hohlkörper und/oder dessen Kompartiment(e) ist besonders bevorzugt durchsichtig und/oder durchscheinend.

Der mittels Blasformen erfindungsgemäß hergestellte Hohlkörper und/oder dessen Kompartiment(e) weist keine Naht, insbesondere keine Sigelnaht, keine Quetschnaht und/oder keine Nut, insbesondere Flanschnut auf.

Es ist bevorzugt, wenn man beim Blasformen wenigstens eine Wandung des Hohlkörpers und/oder wenigstens eine Wandung wenigstens eines Kompartiments mehrschichtig ausbildet.

Es ist außerdem bevorzugt, wenn man beim Blasformen wenigstens zwei Schichten der Wandung des Hohlkörpers und/oder wenigstens zwei Schichten wenigstens eines Kompartiments so ausgestaltet, das ein Zwischenraum zwischen den Schichten ausgebildet wird.

In einer Ausführungsform des erfindungsgemäßen Verfahrens können auch in einen Hohlkörper mehrere Hohlkörper ausgebildet werden, indem man einen Vorformling mit mehreren Schichten blasformt, wobei während des Blasformens ein Zwischenraum zwischen den Schichten ausgebildet wird, so dass diese Schichten jeweils separate Hohlkörper bzw. Kompartimente ausbilden. Diese separaten Hohlkörper bzw. Kompartimente können miteinander verbunden sein.

Bei dem erfindungsgemäßen Verfahren kann man mittels Coextrudieren einen Vorformling mit mehreren Schichten, vorzugsweise 2 bis 5, erzeugen, der dann zu einem Hohlkörper blasgeformt wird, bei dem wenigstens eine Wandung des Hohlkörpers und/oder bei dem wenigstens eine Wandung wenigstens eines Kompartiments mehrschichtig ausgebildet ist.

Je nach Verfahrensführung und Verfahrensbedingungen können bei den erfindungsgemäßen Verfahren Blasformrückstände anfallen, die, je nach Form und Ausgestaltung der ein- oder mehrstückig ausgebildeten Blasformkörper, unterschiedlich hoch ausfallen können. Bei den Blasformrückständen handelt es sich in der Regel um Reste des Vorformlings, die nicht zur Blasformung des Hohlkörpers verwandt wurden und durch das Verschließen des blasgeformten Hohlkörpers und/oder Ausstanzen und/oder Ausschneiden der Blasformkörper von dem Vorformling getrennt wurden. Es wurde gefunden, daß sich die Blasformrückstände wiederverwerten lassen und sich dem Prozess zur Herstellung der Blasformkörper wieder zuführen lassen.
In einer bevorzugten Ausführungsform des erfindungsgemäßen Verfahrens werden die während des Herstellprozesses anfallenden Blasformrückstände recycliert und somit dem ursprünglichen Verfahren wieder zugeführt. Die aus wasserlöslichen polymeren Thermoplasten bestehenden Blasformrückstände werden aufgefangen, gegebenenfalls gesammelt, und dem ursprünglichen Blasformverfahren zugefügt. Die Blasformrückstände können je nach Verfahrensbedingung vor ihrer Rückführung in den Herstellprozeß der Blasformkörper mit zusätzlichen Komponenten, beispielsweise solchen, die der ursprünglichen Blasformmasse durch die thermische Behandlung verlorengegangen sind und nun der Polymermasse der Blasformrückstände fehlen, beaufschlagt werden. Zusätzliche Aufschlagskomponenten sind beispielsweise Wasser oder Weichmacherkomponenten. Vorzugsweise werden die gegebenenfalls zusätzlich beaufschlagten Blasformrückstände mit der ursprünglich eingesetzten Blasformmasse, vorzugsweise mit dem frischen Polymer-(compound)granulat noch vor dem Aufschmelzen, vermischt und anschließend dem erfindungsgemäßen Verfahren zugeführt. Dabei kann es besonders bevorzugt sein, im kontinuierlichen Betrieb ein stationäres Mischungsverhältnis von frischem zu recycliertem Granulat entsprechend dem auftretenden Recyclatrücklauf einzustellen. Es kann aber auch bevorzugt sein, zwischen dem Betrieb mit unvermischtem, frischen Polymer(compound)-granulat und dem mit gesammelten Recyclat in jeweiligen zeitlichen Intervallen umzuschalten.
Es hat sich als besonders vorteilhaft erwiesen, die Blasformrückstände vor ihrer Rückführung in das Verfahren zunächst zu zerkleinern. Geeignete Vorrichtungen für die Zerkleinerung von Polymerrückständen sind beispielsweise Schneidmühlen, wie sie von der Firma Pallmann, Zweibrücken, zu beziehen sind.
Der Transport der Blasformrückstände zur Zerkleinerungsstation und/oder zum Mischer, in dem gegebenenfalls zerkleinerte Blasformrückstände mit ursprünglicher Blasformmasse, welches beispielsweise in Form eines Polymergranulats oder -compounds vorliegt, gemischt werden, und/oder zum Extruder, mittels dessen aus Blasformrückstand und ursprünglicher Blasformmasse erneut Vorformlinge gebildet werden können, erfolgen über dem Fachmann geläufige Vorrichtungen, vorzugsweise über Transportbänder, Transportschnecken oder durch pneumatisch betriebene Rohrsysteme.

In einer weiteren bevorzugten Ausführungsform des erfindungsgemäßen Verfahrens folgt im Anschluß an das flüssigkeitsdichte Verschließen des blasgeformten Hohlkörpers ein zusätzlicher Detektionsschritt auf Leckagen. Insbesondere bei der industriellen Anwendung des erfindungsgemäßen Verfahrens mit einem hohen Produktdurchsatz ist es von Vorteil, die befüllten blasgeformten Hohlkörper direkt nach ihrer Produktion auf Leckagen hin zu überprüfen, um die Kontamination von weiteren befüllten Hohlkörpern, die sich gegebenenfalls in derselben Umverpackung wie der beschädigte Blasformhohlkörper befinden, zu vermeiden und die Qualitätssicherung zu gewährleisten. Eine rein visuelle Beurteilung der hergestellten blasgeformten Hohlkörper ist zwar prinzipiell möglich, bietet jedoch aus ökonomischer Sicht, insbesondere-bei der industriellen Produktion mit hohem Produktdurchsatz, wenig Vorteile, da sehr arbeitsintensiv. Als besonders vorteilhaft haben sich elektronische Detektionssysteme für Leckagen herausgestellt. Ein besonders geeignetes Detektionssystem zur Bestimmung von Leckagen in, insbesondere mit Flüssigkeiten, gefüllten blasgeformten Hohlkörpern ist der von der Firma Rommelag vertriebene Hochspannungsleckagendetektor (HVLD-Detektor; high voltage leak detektor). Die Detektionsmethode beruht auf der elektrischen Leitfähigkeit des Befüllgutes, das von einem nicht oder nur schwach leitenden Polymeren umhüllt ist. Ist eine Leckage vorhanden, so fließt der Entladungsstrom durch die Leckageöffnung in den Hohlkörper hinein und die Detektion dieses Stroms führt zum Ausstoß des beschädigten, befüllten Hohlkörpers. Geeignete Detektoren sind beispielsweise der HVLD 923 und HVLD 924 ex Rommelag.

Ein kritischer Punkt bei der Verarbeitung wasserlöslicher Polymere, insbesondere von Polyvinylalkohol, Polyvinylacetat oder teilhydrolysiertem Polyvinylacetat, ist das Schmelzen und das damit verbundene Einbringen von mechanischer und thermischer Energie in das zu verarbeitende Polymermaterial. Der Schmelzvorgang der Polymermaterialien findet dabei nicht an einem definierten Schmelzpunkt, sondern über einen längeren Schmelzbereich hinweg statt. Je nach Polymer und kristallinen Eigenschaften des Polymers kann die Obergrenze des Schmelzbereichs derart hoch sein, daß die Kristalle sich nur schwer in einem Extruder schmelzen lassen, da nicht geschmolzene Kristallite vermutlich einen Partikelstrom bilden. Das Auftreten von Kristallen in den Polymerschmelzen kann bei der Verarbeitung solcher Polymere zu Fehlstellen, beziehungsweise Stippen in den Behälterwänden führen. Ein erhöhter Eintrag thermischer Energie während des Extrusionsverfahrens, um die in der Schmelze verbleibenden Kristalle vollständig aufzuschmelzen, kann leicht zur Bildung eines sich zersetzenden oder vernetzenden Materials führen, wobei das Material dann Stippen aufweist, die der Struktur der Stippen ähnlich ist, die kristallinen Ursprungs sind, wobei jedoch der einzige Unterschied das Vorhandensein einer chemischen Bindung anstelle einer physikalischen Bindung ist. Eine erhöhte Vernetzung des Polymermaterials führt zu einer erheblichen Veränderung der physikalischen Eigenschaften, insbesondere kann dies zu einer Veränderung der Elastizität des Polymermaterials im Endprodukt oder zu einer schlechteren Wasserlöslichkeit führen. Die Verwendung externer Weichmacher kann zu einer Behebung des beschriebenen Problems beitragen, jedoch ist auch der Einsatz solcher Plastifizierhilfsmittel in ihrer Einsatzmenge limitiert. Ein erhöhter Einsatz von Weichmacherkomponenten kann beispielsweise zur Klebrigkeit der hergestellten Gegenstände, die wiederum dann einen geringeren oder keinen kommerziellen Wert haben, führen.
Zur Lösung des Problems wird in einer vorteilhaften Ausführungsform der Erfindung das Polymer derart aufgeschmolzen, daß ein übermäßiger Eintrag von Energie vermieden wird, der zur Zersetzung des Materials führen würde. Vorteilhaft ist insbesondere der Eintrag sowohl thermischer als auch mechanischer Energie. Der zusätzliche Eintrag mechanischer Energie führt dazu, daß die Bereiche der Kristallinität einer Scherung unterzogen werden, wobei gleichzeitig diese Scher-Energie abgeführt werden kann oder der Eintrag thermischer Energie verringert wird, um zu verhindern, daß die Schmelztemperatur die Zersetzungs-Temperatur übersteigt. Die zusätzliche Energie, die für die Durchführung der Scherung zugeführt wird, geht durch die Schmelze hindurch, wobei die Kristallinität beseitigt wird, und wird in einer weiteren vorteilhaften Ausführungsform durch Kühlen der Schmelze abgeführt, beispielsweise durch einen Kühlmantel des Extruders.

Die Anforderungen an den Extruder in einer bevorzugten Ausführungsform sind insbesondere, daß er intensive Mischelemente aufweist, damit die erforderliche Scherenergie bereitgestellt werden kann.

Der Extruder kann gegebenenfalls den Überschuß der zugeführten Energie, der beim Erwärmen, Schmelzen oder Scheren des Polymeren erforderlich ist, abführen. Dieser Energie-Überschuß kann beispielsweise durch das Extruder-Gehäuse, die Extruder-Schnecke oder durch Verdampfen des Weichmachers beim Schritt der Entfernung der flüchtigen Bestandteile abgeführt werden.

In einer bevorzugten Ausführungsform der vorliegenden Erfindung wird der die Schmelze vermischende Extruder mit hoher Rotationsgeschwindigkeit der Schnecke, vorzugsweise oberhalb von 10 Umdrehungen pro Minute, besonders bevorzugt oberhalb von 20 Umdrehungen pro Minute, insbesondere bevorzugt oberhalb von 70 Umdrehungen pro Minute, äußerst bevorzugt oberhalb von 150 Umdrehungen pro Minute, insbesondere oberhalb von 300 Umdrehungen pro Minute, beispielsweise 400, 500 oder 600 Umdrehungen pro Minute betrieben. Zusätzlich kann der Extruder mit einer Anzahl von intensiv knetenden Elementen in Reihe der Gestaltung der Schnecke betrieben werden, damit die erforderliche mechanische Energiezufuhr entsteht. Das Schneckengehäuse kann außerdem bei einer Temperatur unterhalb der Schmelztemperatur des Polymers betrieben werden, so daß es keine Nettoübertragung der Wärme aus dem Extruder gibt. Das Ergebnis ist ein hoher Grad der Zufuhr mechanischer Energie in das Polymer, der ausreichend ist, um Stippen oder kristalline Abschnitte der Polymerschmelze zu beseitigen, indem alle kristallinen Bereiche voneinander verschoben werden.

Ein hoher Eintrag kinetischer Energie in die Polymermasse hat sich als vorteilhaft herausgestellt. Insbesondere bevorzugt im Rahmen der Erfindung ist daher eine hohe scheinbare Wandschergeschwindigkeit. Die Schergeschwindigkeit wird üblicherweise als Winkelgeschwindigkeit ω(t) (Ableitung des Drehwinkels y(t) nach der Zeit t) angegeben und drückt dabei das Verhältnis der Geschwindigkeitsdifferenz δv (Delta v) zweier aneinander vorbeifließender Schichten zu deren Abstand δh (Delta h) senkrecht zur Strömungsrichtung aus. In einer bevorzugten Ausführungsform liegt die Schergeschwindigkeit im Extruder und am Blaskopf oberhalb von 1 s⁻¹, vorzugsweise oberhalb von 2 s⁻¹, weiter bevorzugt oberhalb von 3 s⁻¹, insbesondere oberhalb von 5 s⁻¹, insbesondere bevorzugt oberhalb von 8 s⁻¹, weiter bevorzugt oberhalb von 10 s⁻¹, noch weiter bevorzugt oberhalb von 20 s⁻¹, weiter noch oberhalb von 40 s⁻¹, äußerst bevorzugt oberhalb von 60 s⁻¹, vorteilhafterweise oberhalb von 100 s⁻¹ und besonders vorteilhaft oberhalb von 200 s⁻¹.
Gewöhnlicherweise liegen die Schergeschwindigkeiten an Düsenvorrichtungen, wie beispielsweise der Blasdüse, höher als an anderen Bauteilen des Extruders. Die Schergeschwindigkeit an Düsenvorrichtungen liegen oberhalb von oberhalb von 1 s⁻¹, vorzugsweise oberhalb von 2 s⁻¹, weiter bevorzugt oberhalb von 3 s⁻¹, insbesondere oberhalb von 5 s⁻¹, insbesondere bevorzugt oberhalb von 8 s⁻¹, weiter bevorzugt oberhalb von 10 s⁻¹, noch weiter bevorzugt oberhalb von 20 s⁻¹, weiter noch oberhalb von 40 s⁻¹, äußerst bevorzugt oberhalb von 60 s⁻¹, vorteilhafterweise oberhalb von 100 s⁻¹ und besonders vorteilhaft oberhalb von 200 s⁻¹, beispielsweise oberhalb von 500 s⁻¹, 1000 s⁻¹, 2000 s⁻¹ oder 4000 s⁻¹.

Besonders vorteilhaft ist eine geringe Verweilzeit des Polymermaterials im Extruder, um den Wärmeverlauf zu verringern. Geeignete Verweilzeiten liegen dabei unterhalb einer Stunde, vorzugsweise unterhalb von 30 Minuten, besonders bevorzugt unterhalb von 20 Minuten, äußerst bevorzugt unterhalb von 10 Minuten und insbesondere unterhalb von 5 Minuten.

Es ist insbesondere vorteilhaft, bei der Auslegung der Strömungsführung der thermoplastischen Schmelze in Extruder und Blaskopf darauf zu achten, dass etwaige Totzonen der Strömung vermieden werden und idealerweise eine schmale Verweilzeitverteilungsbreite, besonders bevorzugt als Plug Flow, angestrebt werden. Diese Maßnahme soll verhindern, dass in einzelnen Bereichen auch nur Teilvolumina des gesamt durchgesetzten Thermoplasten in Form von gestauter oder rückströmender Masse einer zu langen thermischen Belastung ausgesetzt sind mit den bekannten Nachteilen. Geeignete Maßnahmen können in einer geeigneten Extruderauslegung und/oder in kontinuierlich und/oder gerundet und/oder ohne Absatz erweiterten bzw. verjüngten Strömungskanal-Innenwänden- und Übergängen bestehen.
Es ist daher im Rahmen des vorliegenden erfindungsgemäßen Verfahrens zur Herstellung bevorzugt, daß die Extruderschnecken- und Schlauchkopfeinrichtungen im wesentlichen keine Totzonen aufweisen und/oder im wesentlichen keine Rückströmung auftritt.

Eine bevorzugte handelsübliche Vorrichtung ist der Doppelschnecken-Extruder von Werner und Pfleiderer, der ein gleichzeitig rotierender, voll ineinandergreifender Extruder ist. Die Schnecke ist segmentartig gestaltet, so daß auf mit Keil versehenen Schäften eine Anzahl unterschiedlicher Schneckenelemente angeordnet werden kann, wodurch der für die bestimmte Anwendung gewünschte Mischungsgrad erreicht wird. Die Schneckenelemente können entlang der Schnecke variieren, zwei Schnecken müssen jedoch zusammenpassen, damit vollständig ineinandergreifende Oberflächen erreicht werden. Allgemein ausgedrückt, gibt es zwei unterschiedliche Elementarten, Schneckenförderelemente und knetende oder mischende Scheiben. Die Schneckenelemente können entweder eine vorwärts gerichtete oder negative Steigung aufweisen, wohingegen die knetenden Scheiben zusätzlich zur vorwärts gerichteten oder negativen Steigung eine neutrale Steigung aufweisen können. Die knetenden Scheiben bestehen aus gestaffelten elliptischen Scheiben, die versetzt sind, so daß eine insgesamt befördernde Steigung erreicht wird. Die Breite der Scheiben kann von einem Element zum anderen schwanken, bei einem Element sind die Scheiben jedoch gleichmäßig breit. Zusätzlich zur geänderten Steigung in den Knetblöcken können unterschiedliche Schneckenelemente unterschiedliche befördernde Steigungen aufweisen. Der Fachmann kann geeignete Schnecken zusammenstellen, damit der optimale Scherverlauf und die optimale Förderwirkung erreicht wird, die zum gewünschten Endprodukt führen.

Je breiter außerdem die knetende Scheibe ist, desto stärker ist die Scherung, die der Schmelze verliehen wird. Je schmaler der Schneckengang ist, desto mehr Scherung wird übertragen. All diese Faktoren kann der Fachmann miteinander kombinieren, so daß eine Schnecke gestaltet wird, die ohne thermische Zersetzung und der häufig damit verbundenen Nachvernetzung des Produktes eine maximale Übertragung der Scherung erreicht.

Insbesondere für den Fall, daß gegebenenfalls anfallende Blasform-Rückstände recycliert werden sollen, ist ein möglichst geringer thermisch bedingter Nachvernetzungsgrad wünschenswert. Da die Blasform-Rückstände gegebenenfalls mehrfach den Extrusions-Schmelzprozeß durchlaufen müssen, hat es sich im Rahmen der vorliegenden Erfindung als vorteilhaft erwiesen, daß der Nachvernetzungsgrad des eingesetzten Polymers so gering ist, daß er bis zu zehn Mal recycliert werden kann. Der Nachvernetzungsgrad läßt sich anhand des durchschnittlichen Molekulargewichts des Polymers feststellen. Desto höher der durch Extrusion und Schmelze bedingte Nachvernetzungsgrad, desto höher ist auch die Zunahme des mittleren Molekulargewichts des Polymers. In einer bevorzugten Ausführungsform der vorliegenden Erfindung liegt die Erhöhung des mittleren Molekulargewichtes des wasserlöslichen polymeren Thermoplasten unterhalb von 15%, vorzugsweise unterhalb von 10%, besonders bevorzugt unterhalb von 8%, äußerst bevorzugt unterhalb von 5%, insbesondere unterhalb von 2%, bei einmaligem Durchlauf des Extrusionsprozesses. Das mittlere Molekulargewicht der Polymere, insbesondere des teilhydrolysierten Polyvinylacetats, wurde mittels Gelpermeationschromatographie bestimmt.

Der mittels Blasformen erfindungsgemäß hergestellte wasserlösliche, flexible, vorzugsweise elastische, geschlossene Hohlkörper enthält wenigstens ein Mittel, insbesondere ein Wasch-, Pflege- und/oder Reinigungsmittel.

Der Mittel, insbesondere Wasch-, Pflege und/oder Reinigungsmittel, enthaltende, mittels Blasformen erfindungsgemäß hergestellte, wasserlösliche, flexible, vorzugsweise elastische, geschlossene Hohlkörper kann zum Behandeln, Heilen, Waschen, Pflegen, kleben, düngen, zur Ungezieferbekämpfung, zur Behandlung von Pflanzen und/oder zur Reinigung, insbesondere zum Waschen, Spülen und/oder Reinigen von weichen und/oder harten Oberflächen verwendet werden.

Weitere bevorzugte Ausführungsformen enthalten Waschmittel-, Reinigungsmittel- und/oder Pflegemittel-Portionen, wobei in die in den Hohlkörpern bzw. Kompartimenten enthaltenen Portionen durch eine - vorzugsweise steuerbare - Wasserlöslichkeit des Hohlkörpermaterials zu einem bestimmten Zeitpunkt des Wasch-, Reinigungs- oder Pflegevorgangs oder bei Erreichen eines bestimmten pH-Werts oder einer bestimmten lonenstärke der Waschflotte oder auch aufgrund anderer steuerbarer Ereignisse oder Bedingungen in die wässrige Flotte eingespeist werden können. Die Qualität des Materials wie auch dessen Quantität/Stärke nehmen auf diese Löslichkeitseigenschaften direkten Einfluß. Besonders bevorzugt sind Materialien für die Hohlkörper, die sich - eine bestimmte, die Stabilität mitbestimmende Wandstärke zugrundegelegt - bei bestimmten Temperaturen, pH-Werten, Ionenstärken, oder nach einer bestimmten Verweilzeit in der wäßrigen Flotte lösen. Dabei kann ein solcher Lösevorgang den Hohlkörper als ganzes erfassen oder nur einen Teil davon, so dass sich Teile des Hohlkörpers bei Einstellung einer bestimmten Parameterkombination lösen, während sich andere Teile noch nicht (sondern erst später) oder auch gar nicht lösen. Letzteres kann durch unterschiedliche Qualität des Materials wie auch durch unterschiedlichen Materialmengen (Dicke der Wand) oder auch unterschiedliche Geometrien der Hohlkörper erreicht werden. Beispielsweise ist es möglich, durch die Hohlkörpergeometrie den Wasserzutritt zu erschweren und damit den Lösevorgang zu verzögern. In einer anderen bevorzugten Ausführungsform ist es möglich, Wände des Hohlkörpers unterschiedlich dick (gleichwohl aus demselben Material) zu gestalten und damit an den dünneren Stellen ein früheres Lösen zu ermöglichen. In ebenfalls bevorzugten Ausführungsformen können die Wände des Hohlkörpers aus Materialien unterschiedlicher Wasserlöslichkeit hergestellt werden, beispielsweise aus Polyvinylalkoholen (PVAL) mit unterschiedlichem Rest-Acetatgehalt. Dies führt zur Bildung perforierter Wände, die ein Eindringen von Wasser in den Hohlkörper und/oder ein Austreten der gelösten oder auch der ungelösten Inhaltsstoffe aus dem Hohlkörper erlauben.

Weiter ist es möglich, dass die Materialien der Wände der flexiblen, vorzugsweise elastischen, Hohlkörper aus einem waschaktiven, reinigungsaktiven oder pflegeaktiven Wirkstoff bestehen, wofür PVAL als Builder ein Beispiel ist, oder einen solchen enthalten. Im letztgenannten Fall können beispielsweise waschaktive, reinigungsaktive oder pflegeaktive Wirkstoffe, die nur in kleinen Mengen in den Zubereitungen zugegen sind und deren gleichmäßige Einarbeitung deswegen nicht unproblematisch ist, in das Material der Wand des Hohlkörpers oder in einen Teil des Materials der Wand des Hohlkörpers, beispielsweise einen solchen, der sich in dem Stadium des Wasch-, Reinigungs- und/oder Pflegegangs löst, in dem gerade der Wirkstoff benötigt wird, eingearbeitet und beim Lösen des Materials der Wand zum richtigen Zeitpunkt in die Flotte freigesetzt werden. Ein Beispiel hierfür mögen Duftstoffe sein, die in der letzten Phase des Wasch-, Reinigungs- und/oder Pflegevorgangs erwünscht sind, jedoch auch optische Aufheller, UV-Schutzsubstanzen, Farbstoffe und andere waschaktive, reinigungsaktive oder pflegeaktive Zubereitungen. Das Grundprinzip der Einarbeitung von derartigen (üblicherweise in kleinen Mengen eingearbeiteten) Komponenten in die Materialien, die die Umfassung der Waschmittel-, Reinigungsmittel- und/oder Pflegemittel-Portionen bilden, ist der parallel anhängigen Patentanmeldung 199 29 098.9 der Anmelderin mit dem Titel "Wirkstoff-Portionspackung" zu entnehmen, deren Offenbarung durch die Bezugnahme vollumfänglich in die Offenbarung der vorliegenden Anmeldung einbezogen wird.

In einer besonderen Ausführungsform der Erfindung ist es auch möglich, dass die Wände der flexiblen, vorzugsweise elastischen, Hohlkörper, die die Waschmittel-, Reinigungsmittel- oder Pflegemittel-Portionen enthalten, aus verschiedenen Materialien bestehen, also einen heterogenen Aufbau haben. Beispielsweise könnten in einem die Wand der Hohlkörper bildenden Polymermaterial Inseln aus einem in dem Polymer nicht löslichen Fremdmaterial dispergiert sein, beispielsweise aus einem anderen Polymer (mit unterschiedlicher Wasserlöslichkeit) oder gar aus einer völlig anderen Substanz (beispielsweise einer anorganischen oder organischen Substanz). Beispiele hierfür sind wasserlösliche Salze wie beispielsweise Natriumsulfat, Natriumchlorid, Natriumcarbonat, Calciumcarbonat, usw.; organische Säuren wie beispielsweise Citronensäure, Weinsäure, Adipinsäure, Phthalsäure usw.; Zucker wie Maltosen, Dextrosen, Sorbit usw.; Zeolithe; Silicate; vemetzte, beispielsweise schwach vernetzte Polymere wie beispielsweise Polyacrylate, Celluloseester, Celluloseether wie Carboxymethylcellulose. Ein derartiger Aufbau kann in besonders bevorzugten Ausführungsformen der Erfindung mit dem Vorteil verbunden sein, dass sich die andere Substanz schneller in Wasser löst als das Polymer, was ein Eindringen von Wasser in den Hohlkörper ermöglicht und dadurch zur beschleunigten Freisetzung waschaktiver, pflegeaktiver oder reinigungsaktiver Komponenten der Portion beiträgt. Insgesamt ist auch der gesamte formstabile Hohlkörper bei einer derartigen Konfektionierung schneller aufgelöst als ein Formkörper aus einem reinen Polymermaterial. In ähnlicher Weise ist es möglich, die Wände der Hohlkörper aus Schichten zweier oder mehrerer Polymerer auszubilden, die in besonders bevorzugten Ausführungsformen so gewählt werden können, dass sie sich hinsichtlich ihrer Eigenschaften (Stabilität, Wärmebeständigkeit, Wasserlöslichkeit, Gassperreigenschaften usw.) optimal ergänzen.

In einer besonders bevorzugten Ausführungsform der Erfindung umfaßt eine Waschmittel-, Reinigungsmittel- und/oder Pflegemittel-Portion einen flexiblen, vorzugsweise elastischen, Hohlkörper aus einer wenigstens eine waschaktive, reinigungsaktive oder pflegeaktive Zubereitung ganz oder teilweise umgebenden Umfassung aus einem unter Wasch-, Reinigungs- oder Pflegebedingungen desintegrierbaren, blasgeformten Material mit wenigstens einem Kompartiment, wobei das/die Kompartiment(e) eine oder mehrere waschaktive, reinigungsaktive oder pflegeaktive Zubereitung(en) enthält/enthalten.

In der genannten Ausführungsform umfaßt der eine Hohlkörper wenigstens ein Kompartiment, also eine Kammer, in seinem Innern. Eine derartige Kammer oder ein derartiges Kompartiment ist ein im Regelfall durch Wände (bei nur einem Kompartiment sind dies die Wände des Hohlkörpers) begrenzter Raum. Innerhalb der Wände des flexiblen, vorzugsweise elastischen, Hohlkörpers gemäß der Erfindung können sich jedoch auch mehrere Räume befinden. Diese können entweder dadurch gebildet sein, dass einzelne Räume durch Wände voneinander abgegrenzt sind, die im Rahmen der vorliegenden Erfindung als "Kompartimentierungs-Einrichtungen" bezeichnet werden und die gleiche oder verschiedene waschaktive, pflegeaktive und/oder reinigungsaktive Komponenten oder Zubereitungen räumlich voneinander trennen, oder dass verschiedene waschaktive, pflegeaktive oder reinigungsaktive Komponenten oder Zusammensetzungen direkt aneinander grenzen, aber sich nicht miteinander vermischen. In einem solchen Fall sind quasi die Grenzflächen (Phasen-Grenzflächen) der aneinandergrenzenden Komponenten oder Zusammensetzungen die Kompartimentierungs-Einrichtungen. Die Kammer oder das Kompartiment wird ganz oder teilweise, Vorteilhafterweise ganz, umgeben von der Umfassung aus einem unter Wasch-, Reinigungs- und/oder Pflegebedingungen desintegrierbaren, blasgeformten Material, das die Wand des flexiblen, vorzugsweise elastischen, Hohlkörpers bildet. In dem Kompartiment bzw. in der Kammer ist/sind eine oder mehrere waschaktive, reinigungsaktive oder pflegeaktive Zubereitung(en) enthalten. In den meisten Ausführungsformen der Erfindung enthält ein Kompartiment in vorteilhafter Weise mehrere waschaktive, reinigungsaktive oder pflegeaktive Zubereitungen; denkbar ist jedoch auch der Fall der Gegenwart nur einer derartigen Zubereitung in einem Kompartiment bzw. in einer Kammer.

In einer besonders bevorzugten Ausführungsform der Erfindung enthält der formstabile Hohlkörper in seinem Innern mehrere Kompartimente bzw. Kammern, die jeweils eine oder mehrere waschaktive, reinigungsaktive oder pflegeaktive Zubereitung(en) enthalten. Beispiele hierfür sind quaderförmige oder trochoidförmige, insbesondere kugelförmige flexible, vorzugsweise elastische, Hohlkörper, die zwei, drei oder vier oder sogar mehr Kompartimente aufweisen, die jeweils eine oder mehrere waschaktive, reinigungsaktive oder pflegeaktive Zubereitung(en) enthalten.-Ein großer Vorteil dieser Ausführungsform der Erfindung besteht darin, dass die verschiedenen waschaktiven, reinigungsaktiven oder pflegeaktiven Zubereitungen so auf die Kompartimente verteilt werden können, wie es für die speziellen Anforderungen am besten ist. So können Komponenten, die sich gegenseitig in Ihrer Wirksamkeit nachteilig beeinträchtigen (beispielsweise Enzyme, Alkali, Bleiche usw.) oder sich sonst - beispielsweise aufgrund des Aggregatzustandes - miteinander vermischen würden, beispielsweise feste und flüssige Komponenten, räumlich voneinander getrennt werden. Andererseits ist es möglich, Komponenten, die optimalerweise zu verschiedenen Zeitpunkten des Wasch-, Reinigungs- oder Pflegevorgangs in die jeweilige Flotte freigesetzt werden sollten, räumlich voneinander zu trennen und jeweils zum optimalen Zeitpunkt in die Flotte zu geben.

Die Größe und Form der einzelnen Kompartimente innerhalb eines flexiblen, vorzugsweise elastischen, Hohlkörpers ist nicht kritisch und kann weitgehend auf die Notwendigkeiten des Einzelfalls abgestellt werden. So können für bestimmte waschaktive, reinigungsaktive oder pflegeaktive Zubereitungen oder Mischungen daraus, die in größerer Menge zugegen sind, größere Kompartimente vorgesehen werden als für Zubereitungen, die nur in kleiner Menge zugegen sind. In anderen, mit Vorteil einsetzbaren Ausführungsformen der Erfindung können Mischungen bestimmter Zubereitungen, die zu Beginn des Wasch- Reinigungs- oder Pflegegangs vorgesehen werden und in bestimmten Mengen zugegen sind, von anderen oder in anderen Mengen benötigten Komponenten räumlich getrennt werden und in Kompartimenten anderer Größe angeordnet werden.

In einer besonders bevorzugten Ausführungsform eines flexiblen, vorzugsweise elastischen, Hohlkörper mit wenigstens einem, vorzugsweise mehreren Kompartiment(en), die Waschmittel-, Reinigungsmittel- oder Pflegemittel-Portion enthaltenen, werden zwei oder mehrere, eine oder mehrere waschaktive, reinigungsaktive oder pflegeaktive Zubereitung(en) enthaltende Kompartimente von dem Hohlkörper umfaßt, die einander umschließend angeordnet sind. Die Kompartimente mit der/den waschaktiven, reinigungsaktiven und/oder pflegeaktiven Zubereitung(en) sind also in dem Hohlkörper nicht nebeneinander oder über-/untereinander angeordnet, sondern einander umschließend, beispielsweise mehr oder weniger konzentrisch ("Zwiebelmodell") oder mehr oder weniger koaxial ("Mehrschichtenstab-Modell") oder derart, dass das innerste Kompartiment vollständig von dem nächst äußeren umgeben wird, dieses gegebenenfalls wieder vollständig von dem darauf folgenden usw.. In einem solchen Fall können die waschaktiven, reinigungsaktiven oder pflegeaktiven Substanzen auf die Kompartimente so verteilt sein, dass die im Wasch-, Reinigungs- oder Pflegevorgang als-erstes benötigten Komponenten in dem am weitesten außen liegenden Kompartiment enthalten sind, das als erstes dem Zutritt von Wasser oder Flotte ausgesetzt ist, während (eine) später benötigte Komponente(n) in (einem) weiter innen liegenden Kompartiment(en) angeordnet ist/sind und vor dem Zutritt von Wasser durch die weiter außen liegenden Kompartimente geschützt wird/werden. Im Rahmen dieser Ausführungsform ist es nicht erforderlich, dass die innen liegenden Kompartimente vollständig von den äußeren umschlossen sind; ein teilweiser Umschluß liegt ebenfalls im Bereich der vorliegenden Erfindung.

Gemäß einer weiteren bevorzugten Ausführungsform betrifft die Erfindung wenigstens einen Waschmittel-, Reinigungsmittel- und/oder Pflegemittel-Portion, enthaltenden flexiblen, vorzugsweise elastischen, Hohlkörper, wobei die Wandung des Hohlkörpers und/oder der Kompartimente wenigstens eine waschaktive, reinigungsaktive und/oder pflegeaktive Zubereitung umfasst, die unter Wasch-, Reinigungs- oder Pflegebedingungen desintegrierbar ist. Bevorzugt ist, wenn die zur Herstellung des Hohlkörpers und/oder der Kompartimente und/oder des Vorformling verwendete Blasformasse bereits waschaktive, reinigungsaktive und/oder pflegeaktive Zubereitung umfasst, die unter Wasch-, Reinigungs- und/oder Pflegebedingungen desintegrierbar ist.

Dabei können die Größe, Form und Anordnungen des/der Kompartiment(e) und der wenigstens einen waschaktiven, reinigungsaktiven oder pflegeaktiven Zubereitung genauso gestaltet sein wie im Rahmen der oben beschriebenen Ausführungsformen, d.h. es können in einem flexiblen, vorzugsweise elastischen, Hohlkörper ein oder mehrere Kompartimente beliebiger Form und Größe mit je einer oder mehreren waschaktiven, reinigungsaktiven oder pflegeaktiven Zubereitung(en) angeordnet sein. Im vorliegenden Fall sind jedoch mehrere derartiger flexibler, vorzugsweise elastischer, Hohlkörper gemeinsam zugegen.

Dabei entspricht es einer bevorzugten Ausführungsform, wenn die zwei oder mehreren flexiblen, vorzugsweise elastischen, Hohlkörper aus mehreren unterschiedlichen Materialien oder (gegebenenfalls ähnlichen) Materialien mit unterschiedlichen Eigenschaften bestehen, die - mit besonderem Vorteil - unter Wasch-, Reinigungs- oder Pflegebedingungen desintegrierbar sind. Derartige Materialien des/der Hohlkörper(s) schließen ein, sind jedoch nicht beschränkt auf ein oder mehrere wasserlösliche(s) Polymer(e), bevorzugt ein oder mehrere Materialien aus der Gruppe (gegebenenfalls acetalisierter) Polyvinylalkohol (PVAL), Polyvinylpyrrolidon, Polyethylenoxid, Gelatine, Cellulose, und deren Derivate und deren Mischungen, weiter bevorzugt (gegebenenfalls acetalisierter) Polyvinylalkohol (PVAL).

Serielle, parallele und/oder konzentrische Anordnungen von Hohlkörpern und/oder Kompartimenten, vorzugsweise mit Wandungen aus gleichen oder unterschiedlichen Materialien, wie vorstehend beschrieben, lassen sich bevorzugt mittels Blasformen herstellen, vorzugsweise, jedoch nicht ausschließlich, indem man wenigstens einen Doppel- und/oder Mehrfach- und/oder Coextrusions-Blasdorn verwendet. Bevorzugt ist, wenn hierbei die Vorformlinge auf gleichen oder unterschiedlichen Thermoplasten basieren.

In einer weiteren, ebenfalls bevorzugten Ausführungsform ist es von Vorteil, wenn der/die flexibl(en), vorzugsweise elastisch(en), Hohlkörper ein oder mehrere Materialien aus der Gruppe Acrylsäure-haltige Polymere, Polyacrylamide, Oxazolin-Polymere, Polystyrolsulfonate, Polyurethane, Polyester und Polyether und deren Mischungen umfaßt/umfassen.

Mit besonderem Vorteil kann/können ein oder mehrere Material(ihn) aus der folgenden beispielhaften, jedoch nicht beschränkenden Aufzählung genannt werden:
- Mischungen aus 50 bis 100% Polyvinylalkohol oder Poly(vinylalkohol - co - vinylacetat) mit Molekulargewichten im Bereich von 10.000 bis 200.000 g/mol und Acetatgehalten von 0 bis 30 Mol-%; diese können Verarbeitungszusätze wie Weichmacher (Glycerin, Sorbit, Wasser, PEG usw.), Gleitmittel (Stearinsäure und andere Mono-, Di- und Tricarbonsäuren), Mono-, Di, Triglyceride, sogenannte "Slipmittel" (z.B. "Aerosil"), organische und anorganische Pigmente, Salze, Blasformmittel (Citronensäure-Natriumbicarbonat-Mischungen) enthalten;
- Acrylsäure-haltige Polymere, wie z. B. Copolymere, Terpolymere oder Tetrapolymere, die mindestens 20 % Acrylsäure enthalten und ein Molekulargewicht von 5.000 bis 500.000 g/mol besitzen; als Comonomere sind besonders bevorzugt Acrylsäureester wie Ethylacrylat, Methylacrylat, Hydroxy-ethylacrylat, Ethylhexylacrylat, Butylacrylat, und Salze der Acrylsäure wie Natriumacrylat, Methacrylsäure und deren Salze und deren Ester wie Methylmethacrylat, Ethylmethacrylat, Trimethylammoniummethylmethacrylatchlorid (TMAEMC), Methacrylat-amidopropyl-trimethylammoniumchlorid (MAPTAC). Weitere Monomere wie Acrylamid, Styrol, Vinylacetat, Maleinsäureanhydrid, Vinylpyrrolidon sind ebenfalls mit Vorteil verwendbar;
- Polyalkylenoxide, bevorzugt Polyethylenoxide mit Molekulargewichten von 600 bis 100.000 g/mol und deren durch Pfropfcopolymerisation mit Monomeren wie Vinylacetat, Acrylsäure und deren Salzen und deren Estern, Methacrylsäure und deren Salzen und deren Estern, Acrylamid, Styrol, Styrolsulfonat und Vinylpyrrolidon modifizierte Derivate (Beispiel: Poly-(ethylenglykol - graft - vinylacetat). Der Polyglykol-Anteil sollte 5 bis 100 Gew.-% betragen, der Pfropfanteil sollte 0 bis 95 Gew.-% betragen; letzterer kann aus einem oder aus mehreren Monomeren bestehen. Besonders bevorzugt ist ein Pfropfanteil von 5 bis 70 Gew.-%; dabei sinkt die Wasserlöslichkeit mit dem Pfropfanteil;
- Polyvinylpyrrolidon (PVP) mit einem Molekulargewicht von 2.500 bis 750.000 g/mol;
- Polyacrylamid mit einem Molekulargewicht von 5.000 bis 5.000.000 g/mol;
- Polyethyloxazolin und Polymethyloxazolin mit einem Molekulargewicht von 5.000 bis 100.000 g/mol;
- Polystyrolsulfonate und deren Copolymere mit Comonomeren wie Ethyl-(meth-)acrylat, Methyl(meth-)acrylat, Hydroxyethyl(meth-)acrylat, Ethylhexyl(meth-)acrylat, Butyl-(meth-)acrylat und den Salzen der (Meth-) Acrylsäure wie Natrium-(meth-)acrylat, Acrylamid, Styrol, Vinylacetat, Maleinsäureanhydrid, Vinylpyrrolidon; der Comonomer-Gehalt sollte 0 bis 80 Mol-% betragen, und das Molekulargewicht sollte im Bereich von 5.000 bis 500.000 g/mol liegen;
- Polyurethane, insbesondere die Umsetzungsprodukte von Diisocyanaten (z.B. TMXDI) mit Polyalkylenglykolen, insbesondere Polyethylenglykolen des Molekulargewichts 200 bis 35.000, oder mit anderen difunktionellen Alkoholen zu Produkten mit Molekulargewichten von 2.000 bis 100.000 g/mol;
- Polyester mit Molekulargewichten von 4.000 bis 100.000 g/mol, basierend auf Dicarbonsäuren (z.B. Terephthalsäure, Isophthalsäure, Phthalsäure, Sulfoisophthalsäure, Oxalsäure, Bernsteinsäure, Sulfobernsteinsäure, Glutarsäure, Adipinsäure, Sebacinsäure usw.) und Diolen (z. B. Polyethylenglykole, beispielsweise mit Molekulargewichten von 200 bis 35.000 g/mol);
- Celluloseether/ester, z. B. Celluloseacetate, Cellulosebutyrate, Methylcellulose, Hydroxypropylcellulose, Hydroxyethylcellulose, Methylhydroxypropylcellulose usw.;
- Polyvinylmethylether mit Molekulargewichten von 5.000 bis 500.000 g/mol;
- Pfropfpolymere, die erhältlich sind durch radikalische Polymerisation von Vinylestern von aliphatischen C1-C24-Carbonsäuren in Gegenwart von Polyethern eines mittleren Molekulargewichts von mindestens 300 (Zahlenmittel), beispielsweise durch die radikalische Polymerisation von Vinylacetat in Gegenwart von Polyethylenglycolen mit einem Molekulargewicht von 500 bis 100000, vorzugsweise einem Molekulargewicht von 1000 bis 50000, und Hydrolyse von 20 bis 100 mol-% der Vinylacetateinheiten der Pfropfpolymere, wie in der WO 02/31096 A1 offenbart.

In einer weiteren bevorzugten Ausführungsform der Erfindung können die zwei oder mehreren flexiblen, vorzugsweise elastischen, Hohlkörper aus zwei oder mehreren unterschiedlichen Materialien bestehen, die beispielsweise aus den oben aufgezählten Materialien gewählt sein können, jedoch auch andere Materialien umfassen können. Mit besonderem Vorteil können im Fall der Präsenz mehrerer flexibler, vorzugsweise elastischer, Hohlkörper die Wände (= Wandungen) dieser Hohlkörper aus zwei oder mehreren ähnlichen Materialien, beispielsweise Materialien aus den gleichen Monomerbausteinen, jedoch Materialien mit unterschiedlichen Eigenschaften, bestehen. Beispiele hierfür können ähnliche Materialien mit unterschiedlichem Molekulargewicht (und damit unterschiedlicher Löslichkeit), PVAL-Materialien mit unterschiedlichem Acetalisierungsgrad (und damit unterschiedlicher Löslichkeit bzw. unterschiedlicher Lösungstemperatur in Wasser), Materialien mit unterschiedlichem Anteil an aufgepfropften Co-Monomeren o. ä. sein.

Es entspricht einer weiteren bevorzugten Ausführungsform, dass in dem Fall, in dem mehrere flexible, vorzugsweise elastische, Hohlkörper zugegen sind, diese flexiblen, vorzugsweise elastischen, Hohlkörper unterschiedliche geometrische Form aufweisen. Dies kann in vorteilhafter Weise zu unterschiedlichem Löseverhalten oder unterschiedlicher Kinetik der Freisetzung der in dem/den Kompartiment(en) der Hohlkörper enthaltenen Waschmittel-, Reinigungsmittel- oder Pflegemittel-Portion führen.

Weiter bevorzugt ist eine Ausführungsform der Waschmittel-, Reinigungsmittel- oder Pflegemittel-Portionen, in der die zwei oder mehreren flexible, vorzugsweise elastische, Hohlkörper einen - besonders bevorzugt, jedoch nicht zwingend lösbaren - Verbund bilden. Ein Verbund aus zweien oder mehreren flexible, vorzugsweise elastischen, Hohlkörpern kann mit besonderem Vorteil verwendet werden, wenn entweder Waschmittel-, Reinigungsmittel- oder Pflegemittel-Portionen unterschiedlicher Zusammensetzung dosiert werden sollen (z. B. Vollwaschmittel und Buntwaschmittel; in letzteren sind beispielsweise bleichende Komponenten nicht oder nicht in derselben Konzentration erwünscht wie in ersteren; der Bleiche enthaltende Hohlkörper könnte dann vom Anwender entfernt werden, wenn bunte Wäsche gewaschen werden soll) oder wenn - beispielsweise für kleine Wäschemengen oder Geschirrmengen - nur eine Teildosis der in flexiblen, vorzugsweise elastischen, Hohlkörpern enthaltenen Waschmittel- oder Pflegemittel-Portion verwendet werden soll. Besonders bevorzugt könnte ein solcher Verbund durch Verkleben, Verschmelzen, Verschweißen oder Verklammern der flexiblen, vorzugsweise elastischen, Hohlkörper hergestellt werden; ein mechanisches Verklammern erlaubt auch das leichte Lösen des Verbunds. In besonders bevorzugten Ausführungsformen sind derartige Verbund-Hohlkörper in wäßriger Umgebung wieder voneinander lösbar, beispielsweise durch Verwendung eines wasserlöslichen Klebers; dadurch könnte sichergestellt werden, dass ein im automatischen Wasch-, Reinigungs- oder Pflegevorgang verwendeter Verbund vollständig aufgelöst und mit der Wasch-, Reinigungs- oder Spülflotte aus der Maschine abgezogen wird.

Für die Materialien, aus denen die Einrichtungen zum Kompartimentieren bestehen, gelten die obigen Angaben zu den Materialien der flexiblen, vorzugsweise elastischen, Hohlkörper entsprechend. Im Hinblick auf eine zuverlässige und einfache Herstellungsweise bestehen in einer bevorzugten Ausführungsform der Erfindung die Kompartimentierungs-Einrichtungen innerhalb der flexiblen, vorzugsweise elastischen, Hohlkörper aus denselben Materialien wie die Hohlkörper selbst. Dies erlaubt die einstückige Herstellung in einem Verfahrensschritt und macht das Herstellungsverfahren besonders wirtschaftlich.

Grundsätzlich ist es jedoch auch möglich, die Materialien der Einrichtungen zum Kompartimentieren unabhängig von den Materialien der flexiblen, vorzugsweise elastischen, Hohlkörper auszuwählen. Dies hat den Vorteil, dass besonderen Erfordernissen bei den Eigenschaften, beispielsweise bei der Wasserlöslichkeit, der Kompartimentierungs-Einrichtungen Rechnung getragen werden kann.

In einer bevorzugten Ausführungsform ist/sind die Kompartimentierungs-Einrichtung(en) eine (oder mehrere) eine Aktivitätsminderung wenigstens einer Komponente einer waschaktiven, reinigungsaktiven oder pflegeaktiven Zubereitung inhibierende Einrichtung(en). Beispiele hierfür sind alle die Fälle, in denen Komponenten waschaktiver, reinigungsaktiver oder pflegeaktiver Zubereitungen unter Berücksichtigung einer gegenseitigen Beeinträchtigung ihrer Aktivität räumlich voneinander getrennt werden. Die Kompartimentierungs-Einrichtungen sollten dann Eigenschaften haben, die diesen Erfordernissen Rechnung tragen, beispielsweise im wesentlichen undurchlässig für Wasserdampf sein, um Bleichmittel frei von Feuchtigkeit zu halten, oder sollten säure- oder alkalifrei sein, um Enzyme vor vorzeitigem Zerfall zu schützen. Eine derartige Inhibierung einer Aktivitätsminderung trägt nicht nur direkt zu einer besseren Aktivität der jeweiligen geschützten Komponente bei, sondern erlaubt auch, die Mengen an derartigen Komponenten zu verringern, da ein Überschuß in Erwartung des sonst üblichen Aktivitätsverlusts nicht mehr erforderlich ist.
In anderen besonders bevorzugten Ausführungsformen ist/sind die Kompartimentierungs-Einrichtung(en) (eine) die Qualität und/oder Quantität der Freisetzung von Komponenten einer waschaktiven, reinigungsaktiven oder pflegeaktiven Zubereitung bestimmende Einrichtung(en). Es können in den Fällen, in denen die Kompartimentierungs-Einrichtungen eine derartige Funktion haben, in vorteilhafter Weise entweder Komponenten der waschaktiven, reinigungsaktiven oder pflegeaktiven Zubereitungen zu unterschiedlichen Zeitpunkten des Wasch-, Reinigungs- und/oder Pflegevorgangs in die Flotte abgegeben werden (qualitative Steuerung), oder es können unterschiedliche Mengen bestimmter (qualitativ gleicher) Zubereitungen in die Flotte abgegeben werden (quantitative Steuerung).

Im erstgenannten Fall weist ein flexibler, vorzugsweise elastischer, Hohlkörper beispielsweise mehrere Kompartimente auf, deren Wände eine unterschiedliche Löslichkeit (bzw. Temperatur des Lösens) in Wasser bzw. in der Flotte haben. Die Kompartimente enthalten (wasch-, reinigungs-, Pflege-) aktive Komponenten für den ersten, zweiten und gegebenenfalls weitere (Wasch-, Reinigungs-, Pflege-) Gänge, die unterschiedliche Zusammensetzungen haben, und setzen diese zu unterschiedlichen Zeiten bzw. bei unterschiedlichen Temperaturen des Wasch-, Reinigungs- oder Pflegevorgangs frei.

Im zweitgenannten beispielhaften Fall können die flexiblen, vorzugsweise elastischen, Hohlkörper - nur beispielsweise - Wände und Kompartimentierungs-Einrichtungen aufweisen, in die Materialien eingearbeitet sind, die sich bei unterschiedlichen Temperaturen oder unter unterschiedlichen anderen Randbedingungen lösen. Beispielsweise bilden sich in den Kompartment-Wänden zuerst kleine Löcher, die einen nur schwachen Stoffaustausch zwischen einzelnen Kompartimenten und der Außenumgebung gestatten und damit nur kleine Mengen einer waschaktiven, reinigungsaktiven oder pflegeaktiven Zubereitung in die Flotte abgeben; unter anderen, später einstellbaren Bedingungen werden die Löcher oder Poren vergrößert, weil sich bei anderen Bedingungen lösliche Wand-Komponenten lösen; durch die größeren Löcher können größere Stoffmengen zwischen dem Innern des/der Kompartiment(e) und der Außenumgebung (d. h. der Flotte) ausgetauscht werden und damit die gewünschten höheren Konzentrationen der waschaktiven, reinigungsaktiven oder pflegeaktiven Zubereitung in der Flotte eingestellt werden.

Mögliche "Schalter" der Freisetzung der Komponenten durch die Kompartimentierungs-einrichtungen sind in besonders bevorzugten Ausführungsformen physikochemische Parameter, die die Desintegration der Kompartimentierungs-Einrichtungen und/oder der Wände der flexiblen, vorzugsweise elastischen, Hohlkörper bewirken bzw. steuern. Beispiele hierfür, die jedoch nicht als Beschränkung verstanden werden sollten, sind
- die Zeit, d.h. der Ablauf einer bestimmten Zeit, in der die Wände der flexiblen, vorzugsweise elastischen, Hohlkörper und/oder die Kompartimentierungs-Einrichtungen mit einem bestimmten Medium, beispielsweise mit einer wäßrigen Flotte, in Kontakt stehen, wobei eine zuverlässige Zeitsteuerung eine lineare Lösungskinetik voraussetzt;
- die Temperatur, d.h. das Erreichen eines bestimmten Temperaturwertes im Verlauf des Temperaturprofils des Wasch-, Reinigungs- oder Pflegevorgangs; die Steuerung über die Temperatur stellt insbesondere bei Geschirrpflegemitteln wegen der mit jeder Stufe des Pflegevorgangs steigenden Temperatur eine zuverlässige und damit bevorzugte Ausführungsform dar;
- der pH-Wert, d.h. die Einstellung eines bestimmten pH-Wertes im Verlauf eines Wasch-, Reinigungs- oder Pflegevorgangs durch Komponenten der waschaktiven, reinigungsaktiven oder pflegeaktiven Zubereitung oder das Verlassen eines bestimmten pH-Wertes nach Zerfall einer den pH-Wert beeinflussenden oder bestimmenden Komponente;
- die lonenstärke;
- die mechanische Stabilität, welche - in Abhängigkeit von der Zeit, von der Temperatur oder von anderen Parametern - ein die Desintegration bestimmender Faktor sein kann;
- die Permeabilität für eine bestimmte - vornehmlich gasförmige oder flüssige - Komponente; und dergleichen.

Die vorgenannten Parameter stellen nur Beispiele dar, die die Erfindung nicht beschränken sollen.

In einer weiteren bevorzugten Ausführungsform ist/sind die Kompartimentierungs-Einrichtung(en) (eine) die Aktivität wenigstens einer Komponente einer waschaktiven, reinigungsaktiven oder pflegeaktiven Zubereitung steuernde Einrichtung(en). Diese Ausführungsform kommt insbesondere in solchen Fällen zum Tragen, in denen es erforderlich ist, dass die Freisetzung eines oder mehrere Wirkstoffe eine waschaktiven, reinigungsaktiven oder pflegeaktiven Zubereitung mit einer vorgegebenen Kinetik in die Wasch-, Reinigungs- oder Spülflotte erfolgt. Ein besonderes Beispiel ist eine sogenannte "controlled release"-Freisetzung, die sich nach den oben angegebenen Parametern über die Eigenschaften der Wand des flexiblen, vorzugsweise elastischen, Hohlkörpers und/oder der Kompartimentierungs-Einrichtungen steuern läßt. Auf diesem Weg kann ein zerstörerischer Einfluß der Flotte oder allein des Wassers auf die aktive Substanz verringert und die Substanz über eine längere Zeit aktiv in die Flotte freigesetzt werden.

Es entspricht einer weiteren bevorzugten Ausführungsform, dass eine oder mehrere Kompartimentierungs-Einrichtung(en) einen Teil oder die Gesamtmenge wenigstens einer Komponente wenigstens einer waschaktiven, reinigungsaktiven oder pflegeaktiven Zubereitung enthält/enthalten. Mit besonderem Vorteil kann dies dadurch erreicht werden, dass eine oder mehrere Komponente(n) wenigstens einer waschaktiven, reinigungsaktiven oder pflegeaktiven Zubereitung in das Material der Kompartimentierungs-Einrichtung eingearbeitet wird/werden. Beispiele für derartige Substanzen wurden bereits oben im Zusammenhang mit dem den/die flexiblen, vorzugsweise elastischen, Hohlkörper bildenden Material genannt und umfassen (sind jedoch nicht beschränkt auf) Komponenten, die in relativ kleinen Mengen in den Waschmittel-, Reinigungsmittel- oder Pflegemittel-Portionen enthalten sind und sich daher relativ schlecht in große Massenansätze waschaktiver, reinigungsaktiver oder pflegeaktiver Zubereitungen einarbeiten lassen. Eine sehr einfache Einarbeitung gelingt in die Materialien der Kompartimentierungs-Einrichtungen, und aus diesen gelingt auch eine zuverlässige, steuerbare Freisetzung im Verlauf des Wasch-, Reinigungs- oder Pflegevorgangs. Durch geeignete Wahl der Materialien kann auch die Freisetzung mit "controlled release"-Kinetik erfolgen.

Eine weitere, ebenfalls bevorzugte Ausführungsform besteht darin, dass eine oder mehrere Kompartimentierungs-Einrichtung(en) zum Teil oder insgesamt aus wenigstens einer Komponente wenigstens einer waschaktiven, reinigungsaktiven oder pflegeaktiven Zubereitung bestehen. Dies ist deswegen bevorzugt, weil damit die Kompartimentierungs-Einrichtung nicht nur eine die Kinetik der Freisetzung beeinflussende oder sogar steuernde Komponente der Waschmittel-, Reinigungsmittel- oder Pflegemittel-Portion ist, sondern gleichzeitig auch noch als Komponente an dem Erfolg des Wasch-, Reinigungs- oder Pflegevorgangs beteiligt ist. Aufgrund der großen Auswahl an zur Verfügung stehenden Materialien gibt es für diese Ausführungsform zahlreiche Beispiele; besonders bevorzugt sind Kompartimentierungs-Einrichtungen, die aus (Meth-)Acrylsäure und ihre Derivate (Salze, Ester) umfassenden Polymeren bestehen oder diese umfassen.

Entsprechend einer weiteren bevorzugten Ausführungsform besteht/bestehen die Kompartimentierungs-Einrichtung(en) aus einer Grenzfläche zwischen zwei aneinandergrenzenden Komponenten einer waschaktiven, reinigungsaktiven oder pflegeaktiven Zubereitung oder einer Grenzfläche zwischen zwei aneinandergrenzenden waschaktiven, reinigungsaktiven oder pflegeaktiven Zubereitungen. Dies kann in bevorzugten Ausführungsformen der Erfindung beispielsweise dann der Fall sein, wenn waschaktive, reinigungsaktive oder pflegeaktive Zubereitungen mittels geeigneter Maßnahmen, beispielsweise durch Coextrudieren in der Blasformmasse verarbeitet werden, aus der über einen Vorformling dann der Hohlkörper mit und ohne Kompartimente blasgeformt wird. In diesen Fällen können aktivitätsmindernde oder in sonstiger Weise nachteilige Einflüsse der waschaktiven, reinigungsaktiven oder pflegeaktiven Zubereitungen aufeinander minimiert oder gar ausgeschlossen werden. Dabei besteht die Möglichkeit, dass entweder einzelne Komponenten einer waschaktiven, reinigungsaktiven oder pflegeaktiven Zubereitung unter Ausbildung aneinandergrenzender Grenzflächen vereinigt werden oder dass waschaktive, reinigungsaktive oder pflegeaktive Zubereitungen, die Mischungen mehrerer Komponenten sind, unter Ausbildung von Grenzflächen vereinigt werden. Beides kann im Rahmen der erfindungsgemäßen flexiblen, vorzugsweise elastischen, Hohlkörper zu Waschmittel-, Reinigungsmittel- und/oder Pflegemittel-Portionen mit besonders vorteilhaften Eigenschaften führen, beispielsweise mit guter Lösekinetik der Komponenten in den wäßrigen Flotten.

Eine weitere bevorzugte Ausführungsform besteht in einer in einem oder mehreren flexiblen, vorzugsweise elastischen, Hohlkörper(n) mit wenigstens einem Kompartiment enthaltenen Waschmittel-, Reinigungsmittel- und/oder Pflegemittel-Portion, in der der flexible, vorzugsweise elastische, Hohlkörper aus einem n begrenzende Flächen aufweisenden, nicht kugelförmigen Hohlkörper besteht, von denen eine Fläche die Funktion eines "Deckels" übernimmt, der zum Abschluß eines Verfahrens zum Herstellen der Waschmittel-, Reinigungsmittel- oder Pflegemittel-Portionen gemäß der Erfindung, d. h. nach Befüllen des/der Kompartimente(s) im Innern des Hohlkörpers mit einer oder mehreren waschaktiven, reinigungsaktiven oder pflegeaktiven Zubereitung(en), unter Schließen des Hohlkörpers aufgebracht wird. Der "Deckel" besteht besonders bevorzugt aus einem Material mit steuerbarer Wasserlöslichkeit und kann mit dem restlichen Hohlkörper unter Verkleben, beispielsweise mit einem wasserlöslichen Kleber, Verschmelzen, Verschweißen oder einem an sich bekannten anderen Verfahren zum Verbinden von Materialien verbunden werden. Diese Ausführungsform ist für das Herstellen der erfindungsgemäßen Waschmittel-, Reinigungsmittel- oder Pflegemittel-Portionen besonders vorteilhaft, da ein schrittweises Befüllen des/der Kompartimente mit einer oder mehreren waschaktiven, reinigungsaktiven oder pflegeaktiven Zubereitung möglich ist und die Handhabung bei der späteren Verwendung zu optimalen Ergebnissen führt, insbesondere zu einer zuverlässigen Steuerung des Zutritts von Wasser bzw. wäßriger Flotte zum Innern des flexiblen, vorzugsweise elastischen, Hohlkörpers bzw. des Austritts von waschaktiver, reinigungsaktiver oder pflegeaktiver Zubereitung aus dem Innern des blasgeformten Hohlkörpers.

In einer weiteren bevorzugten Ausführungsform des erfindungsgemäßen Verfahrens ist das Hüllmaterial des erfindungsgemäß hergestellten Hohlkörpers zumindest teilweise optisch unterscheidbar, vorzugsweise durch Einsatz von Farbstoffen, von der uneingefärbten Blasformmasse. Die optische Modifizierung kann dabei nach jeglichen, dem Fachmann bekannten, technischen Verfahren ausgeführt werden.
Vorzugsweise wird die optische Modifizierung durch Farbstoffe bewerkstelligt. Prinzipiell einsetzbar sind alle Farbstoffklassen, die ein Einarbeiten in das Hüllmaterial oder ein Aufziehen auf das Hüllmaterial zulassen. Die Farbstoffe sind in einer bevorzugten Ausführungsform zumindest teilweise, vorzugsweise vollständig, in organischen Lösungsmitteln und/oder besonders bevorzugt zumindest teilweise oder vollständig in Wasser löslich. Besonders bevorzugt sind Farbstoffe, die toxikologisch unbedenklich sind, wie beispielsweise Lebensmittelfarbstoffe. Weiterhin bevorzugt, insbesondere für die mit Wasch-, Reinigungs- und/oder Textilpflegemittel gefüllten Hohlkörper, sind die üblicherweise in Wasch-, Reinigungs- und/oder Textilpflegemittel enthaltenden Farbstoffe, die keine oder nur eine geringe Substantivität zu Textilfasern aufweisen. Von besonderer Bedeutung, insbesondere aufgrund ihrer leichten biologischen Abbaubarkeit, sind die natürlichen Farbstoffe, wie beispielsweise Anthocyane, Anthocyanidine, Flavon und seine Derivate, Carotinoide, Naphtho- und Anthrachinonfarbstoffe, wie beispielsweise Echinochrom und Carminsäure, Melanine, Indigofarbstoffe, Phthalocyanine, usw. Geeignet im Rahmen der Erfindung sind aber auch organische und anorganische Pigmentfarbstoffe, Küpenfarbstoffe, Beizenfarbstoffe, Direktfarbstoffe, Dispersionsfarbstoffe, Azofarbstoffe, Triphenylmethanfarbstoffe, Anthrachinonfarbstoffe, Indigofarbstoffe, sowie pH-Wert sensitive Farbstoffe, wie sie beispielsweise als Indikatoren verwandt werden, usw.. Vollumfänglich beinhaltet sind ebenfalls kosmetische Färbemittel, wie sie im Artikel "Kosmetische Färbemittel" der Farbstoffkommission der Deutschen Forschungsgemeinschaft, Verlag Chemie, Weinheim 1984, (S. 81-106) beschrieben werden.

Das Hüllmaterial der Hohlkörper kann im Rahmen der Erfindung ganz oder teilweise mit einem oder mehreren Farbstoffen eingefärbt sein. Es können dabei die unterschiedlichsten Muster, Schriftzüge und/oder Streifen auf das Hüllmaterial aufgebracht sein. Bevorzugt sind insbesondere optisch ansprechende Kombinationen von eingefärbtem Hüllmaterial und eingefärbtem Füllmaterial.
Die Einfärbung des Hüllmaterials kann über alle dem Fachmann geläufigen Techniken erfolgen. Im Rahmen der vorliegenden Erfindung bevorzugt ist jedoch der Einsatz einer gefärbten Blasformmasse. Der Farbstoff kann der Masse in jeder nur erdenklichen Art und Weise zugefügt werden, bevorzugt ist jedoch der Einsatz eines bereits vorgefärbten Polymergranulats oder Polymercompounds. Der/die Farbstoff(e) kann/können bereits über den Weichmacher der Polymermasse zugefügt werden oder aber auch durch separate Zugabe farbiger Feststoffe, beispielsweise Granulate oder Pulver, oder als Farbstofflösung, beispielsweise als organische oder wässerige Lösung, über eine weitere Dosierpumpe am Extruder. Die Zugabe der Farbstoffe zur Blasformmasse kann im Verlauf des Verfahrens an unterschiedlichen Positionen erfolgen, beispielsweise im Extruder und/oder im/am Blaskopf und/oder im Formwerkzeug. Der Eintrag des Farbstoffmaterials im Formwerkzeug kann beispielsweise durch eine in die Gravur gepumpte Farbstofflösung, welche die noch heiße Polymerhülle dort lokal aufnehmen kann, erfolgen.
Besonders bevorzugt im Rahmen des erfindungsgemäßen Verfahrens ist das Einfärben mittels des In-Mould-Labeling -Verfahrens. Im Verlauf des Blasformverfahrens können die nach dem erfindungsgemäßen Verfahren hergestellten Hohlkörper mit einem Schriftzug oder einem Label versehen werden. Hierzu wird in das Formwerkzeug ein vorbedrucktes Label, vorzugsweise ein vorbedrucktes polymeres Flächengebilde, besonders bevorzugt ein vorbedrucktes wasserlösliches polymeres Flächengebilde, gelegt, welches sich während des Blasvorgangs mit der thermoplastischen Blasformmasse des Blasformlings verbindet, vorzugsweise verschweißt.

Weiterhin bevorzugt ist die Coextrusion mehrerer gegebenenfalls unterschiedlich eingefärbter Stränge.
Die Einfärbung der erfindungsgemäß hergestellten Hohlkörper kann jedoch selbstverständlich auch in einem zusätzlichen Verfahrensschritt extern auf das Hüllkörpermaterial erfolgen. Der Farbauftrag auf die Hohlkörper kann dabei beispielsweise durch Aufsprühen oder Aufstreichen der Farbstoffe über an dem Blaskopf fest heranstehende Filzköpfe oder Pinsel auf den Vorformling oder das fertige Produkt erfolgen. Weitere geeignete Einfärbeverfahren sind Tauchen, Wälzen, Abpudern, Bemalen oder Printverfahren. In einer weiteren Ausführungsform wird die unterschiedliche Diffusion mehrerer Farbstoffkomponenten in der wasserlöslichen Blasformmasse ausgenutzt. Durch ein "Verlaufen" der Farben, beispielsweise durch Weichmacher im Hüllmaterial oder durch Diffusionsprozesse des flüssigen Hohlkörperinhalts in das Hüllmaterial, werden chromatographisch verlaufende Farben auf dem Hüllmaterial erzeugt.

Die Waschmittel-, Reinigungsmittel und/oder Pflegemittel-Portionen enthalten einen oder mehrere Stoffe aus der Gruppe der Tenside, Tensidcompounds, Gerüststoffe, Bleichmittel, Bleichaktivatoren, Enzyme, Schauminhibitoren, Farb- und Duftstoffe sowie - in dem Fall, dass die Wasch- oder Reinigungsmittel-Portionen zumindest zum Teil als Formkörper vorliegen - Binde- und Desintegrationshilfsmittel. Diese Stoffklassen werden nachstehend beschrieben.

Zur Entfaltung der Waschleistung können die Wasch- und Reinigungsmittel-Portionen grenzflächenaktive Substanzen aus der Gruppe der anionischen, nichtionischen, zwitterionischen oder kationischen Tenside enthalten, wobei anionische Tenside aus ökonomischen Gründen und aufgrund ihres Leistungsspektrums deutlich bevorzugt sind.

Die portionierten Wasch-, Pflege- oder Reinigungsmittel können als Waschmittel, als Reinigungsmittel oder als Pflegemittel konfektioniert werden, je nachdem, welche Inhaltsstoffe von der Hohlkörper mit und ohne Kompartimente umschlossen werden. Neben Textilwaschmitteln lassen sich beispielsweise Reinigungsmittel für das maschinelle oder manuelle Geschirrspülen, Universal-Haushaltsreiniger, WC-Reiniger, Glasreiniger usw. herstellen. Je nach Anwendungszweck kann die Auswahl der Inhaltsstoffe in den Wasch-, Pflege- oder Reinigungsmittelzusammensetzungen, die innerhalb der Hohlkörper mit und ohne Kompartimente vorliegen unterschiedlich sein. Wichtige Inhaltsstoffe dieser Zusammensetzungen werden nachstehend beschrieben.

Die Wasch-, Pflege- und/oder Reinigungsmittelzusammensetzungen enthalten vorzugsweise Tensid(e), wobei anionische, nichtionische, kationische und/oder amphotere Tenside eingesetzt werden. Bevorzugt sind aus anwendungstechnischer Sicht bei Textilwaschmitteln Mischungen aus anionischen und nichtionischen Tensiden, wobei der Anteil der anionischen Tenside größer sein sollte als der Anteil an nichtionischen Tensiden. Der Gesamttensidgehalt der Wasch-, Pflege- oder Reinigungsmittelzusammensetzung liegt vorzugsweise unterhalb von 30 Gew.-%, bezogen auf das gesamte Mittel.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO, 4 EO oder 7 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO,-PO-Copolymere. Selbstverständlich sind auch gemischt alkoxylierte Niotenside einsetzbar, in denen EO- und PO-Einheiten nicht blockweise sondern statistisch verteilt sind. Solche Produkte sind durch gleichzeitige Einwirkung von Ethylen- und Propylenoxid auf Fettalkohole erhältlich.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel I, 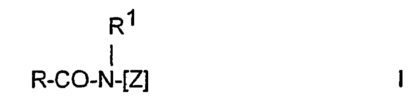 in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel II, 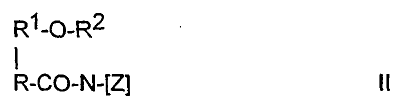 in der R für einen linearen oder verzweigten Alkyl- oder Alkenylrest mit 7 bis 12 Kohlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propxylierte Derivate dieses Restes.

[Z] wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen-können dann durch Umsetzung mit Fettsäuremethylestern in Gegenwart eines Alkoxids als Katalysator in die gewünschten Polyhydroxyfettsäureamide überführt werden.

Der Gehalt bevorzugter für die Textilwäsche geeigneter portionierter Wasch-, Pflege- oder Reinigungsmittelzusammensetzungen an nichtionischen Tensiden beträgt 5 bis 20 Gew.-%, vorzugsweise 7 bis 15 Gew.-% und insbesondere 9 bis 14 Gew.-%, jeweils bezogen auf das gesamte Mittel.

In maschinellen Geschirrspülmitteln werden vorzugsweise schwachschäumende nichtionische Tenside eingesetzt. Mit besonderem Vorzug enthalten maschinelle Geschirrspülmittel ein nichtionisches Tensid, das einen Schmelzpunkt oberhalb Raumtemperatur aufweist. Demzufolge sind bevorzugte Mittel dadurch gekennzeichnet, daß sie nichtionische(s) Tensid(e) mit einem Schmelzpunkt oberhalb von 20°C, vorzugsweise oberhalb von 25°C, besonders bevorzugt zwischen 25 und 60°C und insbesondere zwischen 26,6 und 43,3°C, enthalten.

Geeignete Niotenside, die Schmelz- bzw. Erweichungspunkte im genannten Temperaturbereich aufweisen, sind beispielsweise schwachschäumende nichtionische Tenside, die bei Raumtemperatur fest oder hochviskos sein können. Werden bei Raumtemperatur hochviskose Niotenside eingesetzt, so ist bevorzugt, daß diese eine Viskosität oberhalb von 20 Pas, vorzugsweise oberhalb von 35 Pas und insbesondere oberhalb 40 Pas aufweisen. Auch Niotenside, die bei Raumtemperatur wachsartige Konsistenz besitzen, sind bevorzugt.

Bevorzugt als bei Raumtemperatur feste einzusetzende Niotenside stammen aus den Gruppen der alkoxylierten Niotenside, insbesondere der ethoxylierten primären Alkohole und Mischungen dieser Tenside mit strukturell komplizierter aufgebauten Tensiden wie Polyoxypropylen/Polyoxyethylen/Polyoxypropylen (PO/EO/PO)-Tenside. Solche (PO/EO/PO)-Niotenside zeichnen sich darüber hinaus durch gute Schaumkontrolle aus.

In einer bevorzugten Ausführungsform ist das nichtionische Tensid mit einem Schmelzpunkt oberhalb Raumtemperatur ein ethoxyliertes Niotensid, das aus der Reaktion von einem Monohydroxyalkanol oder Alkylphenol mit 6 bis 20 C-Atomen mit vorzugsweise mindestens 12 Mol, besonders bevorzugt mindestens 15 Mol, insbesondere mindestens 20 Mol Ethylenoxid pro Mol Alkohol bzw. Alkylphenol hervorgegangen ist.

Ein besonders bevorzugtes bei Raumtemperatur festes, einzusetzendes Niotensid wird aus einem geradkettigen Fettalkohol mit 16 bis 20 Kohlenstoffatomen (C₁₆₋₂₀-Alkohol), vorzugsweise einem C₁₈-Alkohol und mindestens 12 Mol, vorzugsweise mindestens 15 Mol und insbesondere mindestens 20 Mol Ethylenoxid gewonnen. Hierunter sind die sogenannten "narrow range ethoxylates" (siehe oben) besonders bevorzugt.

Demnach enthalten besonders bevorzugte Mittel ethoxylierte(s) Niotensid(e), das/die aus C₆₋₂₀-Monohydroxyalkanolen oder C₆₋₂₀-Alkylphenolen oder C₁₆₋₂₀-Fettalkoholen und mehr als 12 Mol, vorzugsweise mehr als 15 Mol und insbesondere mehr als 20 Mol Ethylenoxid pro Mol Alkohol gewonnen wurde(n).

Das Niotensid besitzt vorzugsweise zusätzlich Propylenoxideinheiten im Molekül. Vorzugsweise machen solche PO-Einheiten bis zu 25 Gew.-%, besonders bevorzugt bis zu 20 Gew.-% und insbesondere bis zu 15 Gew.-% der gesamten Molmasse des nichtionischen Tensids aus. Besonders bevorzugte nichtionische Tenside sind ethoxylierte Monohydroxyalkanole oder Alkylphenole, die zusätzlich Polyoxyethylen-Polyoxypropylen Blockcopolymereinheiten aufweisen. Der Alkohol- bzw. Alkylphenolteil solcher Niotensidmoleküle macht dabei vorzugsweise mehr als 30 Gew.-%, besonders bevorzugt mehr als 50 Gew.-% und insbesondere mehr als 70 Gew.-% der gesamten Molmasse solcher Niotenside aus. Bevorzugte Klarspülmittel sind dadurch gekennzeichnet, daß sie ethoxylierte und propoxylierte Niotenside enthalten, bei denen die Propylenoxideinheiten im Molekül bis zu 25 Gew.-%, bevorzugt bis zu 20 Gew.-% und insbesondere bis zu 15 Gew.-% der gesamten Molmasse des nichtionischen Tensids ausmachen, enthalten.

Weitere besonders bevorzugt einzusetzende Niotenside mit Schmelzpunkten oberhalb Raumtemperatur enthalten 40 bis 70% eines Polyoxypropylen/Polyoxyethylen/Polyoxypropylen-Blockpolymerblends, der 75 Gew.-% eines umgekehrten Block-Copolymers von Polyoxyethylen und Polyoxypropylen mit 17 Mol Ethylenoxid und 44 Mol Propylenoxid und 25 Gew.-% eines Block-Copolymers von Polyoxyethylen und Polyoxypropylen, initiiert mit Trimethylolpropan und enthaltend 24 Mol Ethylenoxid und 99 Mol Propylenoxid pro Mol Trimethylolpropan.

Nichtionische Tenside, die mit besonderem Vorzug eingesetzt werden können, sind beispielsweise unter dem Namen Poly Tergent^{®} SLF-18 von der Firma Olin Chemicals erhältlich.

Ein weiter bevorzugtes erfindungsgemäßes portioniertes Wasch-, Pflege- oder Reinigungsmittel enthält nichtionische Tenside der Formel

R¹O[CH₂CH(CH₃)O]ₓ[CH₂CH₂O]_{y}[CH₂CH(OH)R²],

in der R¹ für einen linearen oder verzweigten aliphatischen Kohlenwasserstoffrest mit 4 bis 18 Kohlenstoffatomen oder Mischungen hieraus steht, R² einen linearen oder verzweigten Kohlenwasserstoffrest mit 2 bis 26 Kohlenstoffatomen oder Mischungen hieraus bezeichnet und x für Werte zwischen 0,5 und 1,5 und y für einen Wert von mindestens 15 steht.

Weitere bevorzugt einsetzbare Niotenside sind die endgruppenverschlossenen Poly(oxyalkylierten) Niotenside der Formel

R¹O[CH₂CH(R³)O]ₓ[CH₂]ₖCH(OH)[CH₂]ⱼOR²

in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen. Wenn der Wert x ≥ 2 ist, kann jedes R³ in der obenstehenden Formel unterschiedlich sein. R¹ und R² sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest R³ sind H, -CH₃ oder -CH₂CH₃ besonders bevorzugt. Besonders bevorzugte Werte für x liegen im Bereich von 1 bis 20, insbesondere von 6 bis 15.

Wie vorstehend beschrieben, kann jedes R³ in der obenstehenden Formel unterschiedlich sein, falls x ≥ 2 ist. Hierdurch kann die Alkylenoxideinheit in der eckigen Klammer variiert werden. Steht x beispielsweise für 3, kann der Rest R³ ausgewählt werden, um Ethylenoxid- (R³ = H) oder Propylenoxid- (R³ = CH₃) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO), (PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)-Gruppen einschließt, oder umgekehrt.

Insbesondere bevorzugte endgruppenverschlossenen Poly(oxyalkylierte) Alkohole der obenstehenden Formel weisen Werte von k = 1 und j = 1 auf, so daß sich die vorstehende Formel zu

R¹O[CH₂CH(R³)O]ₓCH₂CH(OH)CH₂OR²

vereinfacht. In der letztgenannten Formel sind R¹, R² und R³ wie oben definiert und x steht für Zahlen von 1 bis 30, vorzugsweise von 1 bis 20 und insbesonders von 6 bis 18. Besonders bevorzugt sind Tenside, bei denen die Reste R¹ und R² 9 bis 14 C-Atome aufweisen, R³ für H steht und x Werte von 6 bis 15 annimmt.

Faßt man die letztgenannten Aussagen zusammen, sind portionierte Wasch-, Pflege- oder Reinigungsmittel bevorzugt, die endgruppenverschlossenen Poly-(oxyalkylierten) Niotenside der Formel

R¹O[CH₂CH(R³)O]ₓ[CH₂]ₖCH(OH)[CH₂]ⱼOR²

enthalten, in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen, wobei Tenside des Typs

R¹O[CH₂CH(R³)O]ₓCH₂CH(OH)CH₂OR²

in denen x für Zahlen von 1 bis 30, vorzugsweise von 1 bis 20 und insbesonder von 6 bis 18 steht, besonders bevorzugt sind.

In Verbindung mit den genannten Tensiden können auch anionische, kationische und/oder amphotere Tenside eingesetzt werden, wobei diese wegen ihres Schaumverhaltens in maschinellen Geschirrspülmitteln nur untergeordnete Bedeutung besitzen und zumeist nur in Mengen unterhalb von 10 Gew.-%, meistens sogar unterhalb von 5 Gew.-%, beispielsweise von 0,01 bis 2,5 Gew.-%, jeweils bezogen auf das Mittel, eingesetzt werden. Die erfindungsgemäßen Mittel können somit als Tensidkomponente auch anionische, kationische und/oder amphotere Tenside enthalten.

Als kationische Aktivsubstanzen können die Mittel beispielsweise kationische Verbindungen der Formeln III, IV oder V enthalten: 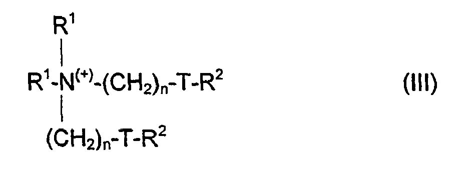 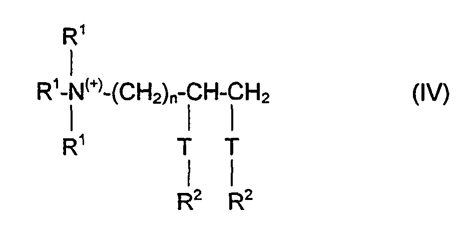 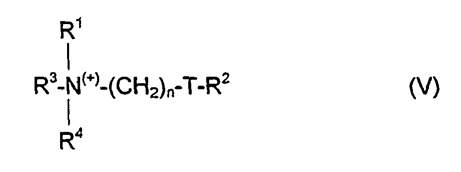 worin jede Gruppe R¹ unabhängig voneinander ausgewählt ist aus C₁₋₆-Alkyl-, -Alkenyl- oder -Hydroxyalkylgruppen; jede Gruppe R² unabhängig voneinander ausgewählt ist aus C₈₋₂₈-Alkyl- oder -Alkenylgruppen; R³ = R¹ oder (CH₂)ₙ-T-R²; R⁴ = R¹ oder R² oder (CH₂)ₙ-T-R²; T = -CH₂-, -O-CO- oder -CO-O- und n eine ganze Zahl von 0 bis 5 ist.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), z.B. die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestem sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, z.B. Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Der Gehalt bevorzugter Textilwaschmittel an anionischen Tensiden beträgt 5 bis 25 Gew.-%, vorzugsweise 7 bis 22 Gew.-% und insbesondere 10 bis 20 Gew.-%, jeweils bezogen auf das gesamte Mittel.

Bevorzugte Mittel enthalten zusätzlich einen oder mehrere Stoffe aus der Gruppe der Gerüststoffe, Bleichmittel, Bleichaktivatoren, Enzyme, Elektrolyte, nichtwäßrigen Lösungsmittel, pH-Stellmittel, Duftstoffe, Parfümträger, Fluoreszenzmittel, Farbstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel sowie UV-Absorber.

Als Gerüststoffe, die in den Mitteln enthalten sein können, sind insbesondere Phosphate, Silikate, Aluminiumsilikate (insbesondere Zeolithe), Carbonate, Salze organischer Di- und Polycarbonsäuren sowie Mischungen dieser Stoffe zu nennen.

Der Einsatz der allgemein bekannten Phosphate als Buildersubstanzen ist erfindungsgemäß möglich, sofern ein derartiger Einsatz nicht aus ökologischen Gründen vermieden werden sollte. Unter der Vielzahl der kommerziell erhältlichen Phosphate haben die Alkalimetallphosphate unter besonderer Bevorzugung von Pentanatrium- bzw. Pentakaliumtriphosphat (Natrium- bzw. Kaliumtripolyphosphat) in der Wasch- und Reinigungsmittel-Industrie die größte Bedeutung.

Alkalimetallphosphate ist dabei die summarische Bezeichnung für die Alkalimetall- (insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen bzw. Kalkinkrustationen in Geweben und tragen überdies zur Reinigungsleistung bei.

Natriumdihydrogenphosphat, NaH₂PO₄, existiert als Dihydrat (Dichte 1,91 gcm⁻³, Schmelzpunkt 60°) und als Monohydrat (Dichte 2,04 gcm⁻³). Beide Salze sind weiße, in Wasser sehr leicht lösliche Pulver, die beim Erhitzen das Kristallwasser verlieren und bei 200°C in das schwach saure Diphosphat (Dinatriumhydrogendiphosphat, Na₂H₂P₂O₇ bei höherer Temperatur in Natiumtrimetaphosphat (Na₃P₃O₉) und Maddrelisches Salz (siehe unten), übergehen. NaH₂PO₄ reagiert sauer; es entsteht, wenn Phosphorsäure mit Natronlauge auf einen pH-Wert von 4,5 eingestellt und die Maische versprüht wird. Kaliumdihydrogenphosphat (primäres oder einbasiges Kaliumphosphat, Kaliumbiphosphat, KDP), KH₂PO₄, ist ein weißes Salz der Dichte 2,33 gcm⁻³, hat einen Schmelzpunkt 253° [Zersetzung unter Bildung von Kaliumpolyphosphat (KPO₃)ₓ] und ist leicht löslich in Wasser.

Dinatriumhydrogenphosphat (sekundäres Natriumphosphat), Na₂HPO₄, ist ein farbloses, sehr leicht wasserlösliches kristallines Salz. Es existiert wasserfrei und mit 2 Mol. (Dichte 2,066. gcm⁻³, Wasserverlust bei 95°), 7 Mol. (Dichte 1,68 gcm⁻³, Schmelzpunkt 48° unter Verlust von 5 H₂O) und 12 Mol. Wasser (Dichte 1,52 gcm⁻³, Schmelzpunkt 35° unter Verlust von 5 H₂O), wird bei 100° wasserfrei und geht bei stärkerem Erhitzen in das Diphosphat Na₄P₂O₇ über. Dinatriumhydrogenphosphat wird durch Neutralisation von Phosphorsäure mit Sodalösung unter Verwendung von Phenolphthalein als Indikator hergestellt. Dikaliumhydrogenphosphat (sekundäres od. zweibasiges Kaliumphosphat), K₂HPO₄, ist ein amorphes, weißes Salz, das in Wasser leicht löslich ist.

Trinatriumphosphat, tertiäres Natriumphosphat, Na₃PO₄, sind farblose Kristalle, die als Dodecahydrat eine Dichte von 1,62 gcm⁻³ und einen Schmelzpunkt von 73-76°C (Zersetzung), als Decahydrat (entsprechend 19-20% P₂O₅) einen Schmelzpunkt von 100°C und in wasserfreier Form (entsprechend 39-40% P₂O₅) eine Dichte von 2,536 gcm⁻³ aufweisen. Trinatriumphosphat ist in Wasser unter alkalischer Reaktion leicht löslich und wird durch Eindampfen einer Lösung aus genau 1 Mol Dinatriumphosphat und 1 Mol NaOH hergestellt. Trikaliumphosphat (tertiäres oder dreibasiges Kaliumphosphat), K₃PO₄, ist ein weißes, zerfließliches, körniges Pulver der Dichte 2,56 gcm⁻³, hat einen Schmelzpunkt von 1340° und ist in Wasser mit alkalischer Reaktion leicht löslich. Es entsteht z.B. beim Erhitzen von Thomasschlacke mit Kohle und Kaliumsulfat. Trotz des höheren Preises werden in der Reinigungsmittel-Industrie die leichter löslichen, daher hochwirksamen, Kaliumphosphate gegenüber entsprechenden Natrium-Verbindungen vielfach bevorzugt.

Tetranatriumdiphosphat (Natriumpyrophosphat), Na₄P₂O₇, existiert in wasserfreier Form (Dichte 2,534 gcm⁻³, Schmelzpunkt 988°, auch 880° angegeben) und als Decahydrat (Dichte 1,815-1,836 gcm⁻³, Schmelzpunkt 94° unter Wasserverlust). Bei Substanzen sind farblose, in Wasser mit alkalischer Reaktion lösliche Kristalle. Na₄P₂O₇ entsteht beim Erhitzen von Dinatriumphosphat auf >200° oder indem man Phosphorsäure mit Soda im stöchiometrischem Verhältnis umsetzt und die Lösung durch Versprühen entwässert. Das Decahydrat komplexiert Schwermetall-Salze und Härtebildner und verringert daher die Härte des Wassers. Kaliumdiphosphat (Kaliumpyrophosphat), K₄P₂O₇, existiert in Form des Trihydrats und stellt ein farbloses, hygroskopisches Pulver mit der Dichte 2,33 gcm⁻³ dar, das in Wasser löslich ist, wobei der pH-Wert der 1 %igen Lösung bei 25° 10,4 beträgt. Durch Kondensation des NaH₂PO₄ bzw. des KH₂PO₄ entstehen höhermol. Natrium- und Kaliumphosphate, bei denen man cyclische Vertreter, die Natrium- bzw. Kaliummetaphosphate und kettenförmige Typen, die Natrium- bzw. Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Maddrellsches Salz. Alle höheren Natrium- und Kaliumphosphate werden gemeinsam als kondensierte Phosphate bezeichnet.

Das technisch wichtige Pentanatriumtriphosphat, Na₅P₃O₁₀ (Natriumtripolyphosphat), ist ein wasserfrei oder mit 6 H₂O kristallisierendes, nicht hygroskopisches, weißes, wasserlösliches Salz der allgemeinen Formel NaO-[P(O)(ONa)-O]ₙ-Na mit n=3. In 100 g Wasser lösen sich bei Zimmertemperatur etwa 17 g, bei 60° ca. 20 g, bei 100° rund 32 g des kristallwasserfreien Salzes; nach zweistündigem Erhitzen der Lösung auf 100° entstehen durch Hydrolyse etwa 8% Orthophosphat und 15% Diphosphat. Bei der Herstellung von Pentanatriumtriphosphat wird Phosphorsäure mit Sodalösung oder Natronlauge im stöchiometrischen Verhältnis zur Reaktion gebracht und die Lsg. durch Versprühen entwässert. Ähnlich wie Grahamsches Salz und Natriumdiphosphat löst Pentanatriumtriphosphat viele unlösliche Metall-Verbindungen (auch Kalkseifen usw.). Pentakaliumtriphosphat, K₅P₃O₁₀ (Kaliumtripolyphosphat), kommt beispielsweise in Form einer 50 Gew.-%igen Lösung (> 23% P₂O₅, 25% K₂O) in den Handel. Die Kaliumpolyphosphate finden in der Wasch- und Reinigungsmittel-Industrie breite Verwendung. Weiter existieren auch Natriumkaliumtripolyphosphate, welche ebenfalls im Rahmen der vorliegenden Erfindung einsetzbar sind. Diese entstehen beispielsweise, wenn man Natriumtrimetaphosphat mit KOH hydrolysiert:

(NaPO₃)₃ + 2 KOH → Na₃K₂P₃O₁₀ + H₂O

Diese sind genau wie Natriumtripolyphosphat, Kaliumtripolyphosphat oder Mischungen aus diesen beiden einsetzbar; auch Mischungen aus Natriumtripolyphosphat und Natriumkaliumtripolyphosphat oder Mischungen aus Kaliumtripolyphosphat und Natriumkaliumtripolyphosphat oder Gemische aus Natriumtripolyphosphat und Kaliumtripolyphosphat und Natriumkaliumtripolyphosphat sind erfindungsgemäß einsetzbar.

Geeignete kristalline, schichtförmige Natriumsilikate besitzen die allgemeine Formel NaMSiₓO₂ₓ₊₁ H₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilikate Na₂Si₂O₅·yH₂O bevorzugt,.

Einsetzbar sind auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/ Verdichtung oder durch Übertrocknung hervorgerufen worden sein. Im Rahmen dieser Erfindung wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silikate, weisen ebenfalls eine Löseverzögerung gegenüber den herkömmlichen Wassergläsern auf. Insbesondere bevorzugt sind verdichtete/kompaktierte amorphe Silikate, compoundierte amorphe Silikate und übertrocknete röntgenamorphe Silikate.

Der eingesetzte feinkristalline, synthetische und gebundenes Wasser enthaltende Zeolith ist vorzugsweise Zeolith A und/oder P. Als Zeolith P wird Zeolith MAP^{®} (Handelsprodukt der Firma Crosfield) besonders bevorzugt. Geeignet sind jedoch auch Zeolith X sowie Mischungen aus A, X und/oder P. Kommerziell erhältlich und im Rahmen der vorliegenden Erfindung bevorzugt einsetzbar ist beispielsweise auch ein Co-Kristallisat aus Zeolith X und Zeolith A (ca. 80 Gew.-% Zeolith X), das von der Firma CONDEA Augusta S.p.A. unter dem Markennamen VEGOBOND AX^{®} vertrieben wird und durch die Formel

nNa₂O · (1-n)K₂O · Al₂O₃ · (2 - 2,5)SiO₂ · (3,5 - 5,5) H₂O

beschrieben werden kann. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Weitere wichtige Gerüststoffe sind insbesondere die Carbonate, Citrate und Silikate. Bevorzugt werden Trinatriumcitrat und/oder Pentanatriumtripolyphosphat und/oder Natriumcarbonat und/oder Natriumbicarbonat und/oder Gluconate und/oder silikatische Builder aus der Klasse der Disilikate und/oder Metasilikate eingesetzt.
Als weitere Bestandteile können Alkaliträger zugegen sein. Als Alkaliträger gelten Alkalimetallhydroxide, Alkalimetallcarbonate, Alkalimetallhydrogencarbonate, Alkalimetallsesquicarbonate, Alkalisilikate, Alkalimetasilikate, und Mischungen der vorgenannten Stoffe, wobei im Sinne dieser Erfindung bevorzugt die Alkalicarbonate, insbesondere Natriumcarbonat, Natriumhydrogencarbonat oder Natriumsesquicarbonat eingesetzt werden.

Besonders bevorzugt ist ein Buildersystem enthaltend eine Mischung aus Tripolyphosphat und Natriumcarbonat.
Ebenfalls besonders bevorzugt ist ein Buildersystem enthaltend eine Mischung aus Tripolyphosphat und Natriumcarbonat und Natriumdisilikat.
Daneben können weitere Inhaltsstoffe zugegen sein, wobei erfindungsgemäße Wasch-, Pflege- oder Reinigungsmittel bevorzugt sind, die zusätzlich einen oder mehrere Stoffe aus der Gruppe der Acidifizierungsmittel, Chelatkomplexbildner oder der belagsinhibierenden Polymere enthalten.

Als Acidifizierungsmittel bieten sich sowohl anorganische Säuren als auch organische Säuren an, sofern diese mit den übrigen Inhaltsstoffen verträglich sind. Aus Gründen des Verbraucherschutzes und der Handhabungssicherheit sind insbesondere die festen Mono-, Oligo- und Polycarbonsäuren einsetzbar. Aus dieser Gruppe wiederum bevorzugt sind Citronensäure, Weinsäure, Bernsteinsäure, Malonsäure, Adipinsäure, Maleinsäure, Fumarsäure, Oxalsäure sowie Polyacrylsäure. Auch die Anhydride dieser Säuren können als Acidifizierungsmittel eingesetzt werden, wobei insbesondere Maleinsäureanhydrid und Bernsteinsäureanhydrid kommerziell verfügbar sind. Organische Sulfonsäuren wie Amidosulfonsäure sind ebenfalls einsetzbar. Kommerziell erhältlich und als Acidifizierungsmittel im Rahmen der vorliegenden Erfindung ebenfalls bevorzugt einsetzbar ist Sokalan^{®} DCS (Warenzeichen der BASF), ein Gemisch aus Bernsteinsäure (max. 31 Gew.-%), Glutarsäure (max. 50 Gew.-%) und Adipinsäure (max. 33 Gew.-%).

Eine weitere mögliche Gruppe von Inhaltsstoffen stellen die Chelatkomplexbildner dar. Chelatkomplexbildner sind Stoffe, die mit Metallionen cyclische Verbindungen bilden, wobei ein einzelner Ligand mehr als eine Koordinationsstelle an einem Zentralatom besetzt, d.h. mind. "zweizähnig" ist. In diesem Falle werden also normalerweise gestreckte Verbindungen durch Komplexbildung über ein Ion zu Ringen geschlossen. Die Zahl der gebundenen Liganden hängt von der Koordinationszahl des zentralen Ions ab.

Gebräuchliche und im Rahmen der vorliegenden Erfindung bevorzugte Chelatkomplexbilder sind beispielsweise Polyoxycarbonsäuren, Polyamine, Ethylendiamintetraessigsäure (EDTA) und Nitrilotriessigsäure (NTA). Auch komplexbildende Polymere, also Polymere, die entweder in der Hauptkette selbst oder seitenständig zu dieser funktionelle Gruppen tragen, die als Liganden wirken können und mit geeigneten Metall-Atomen in der Regel unter Bildung von Chelat-Komplexen reagieren, sind erfindungsgemäß einsetzbar.

Die Polymer-gebundenen Liganden der entstehenden Metall-Komplexe können dabei aus nur einem Makromolekül stammen oder aber zu verschiedenen Polymerketten gehören. Letzteres führt zur Vernetzung des Materials, sofern die komplexbildenden Polymere nicht bereits zuvor über kovalente Bindungen vernetzt waren.

Komplexierende Gruppen (Liganden) üblicher komplexbildender Polymere sind Iminodiessigsäure-, Hydroxychinolin-, Thioharnstoff-, Guanidin-, Dithiocarbamat-, Hydroxamsäure-, Amidoxim-, Aminophosphorsäure-, (cycl.) Polyamino-, Mercapto-, 1,3-Dicarbonyl- und Kronenether-Reste mit z. T. sehr spezif. Aktivitäten gegenüber Ionen unterschiedlicher Metalle. Basispolymere vieler auch kommerziell bedeutender komplexbildender Polymere sind Polystyrol, Polyacrylate, Polyacrylnitrile, Polyvinylalkohole, Polyvinylpyridine und Polyethylenimine. Auch natürliche Polymere wie Cellulose, Stärke od. Chitin sind komplexbildende Polymere. Darüber hinaus können diese durch polymeranaloge Umwandlungen mit weiteren Ligand-Funktionalitäten versehen werden.

Besonders bevorzugt sind im Rahmen der vorliegenden Erfindung Wasch-, Pflege- oder Reinigungsmittel, die ein oder mehrere Chelatkomplexbildner aus den Gruppen der
(i) Polycarbonsäuren, bei denen die Summe der Carboxyl- und gegebenenfalls Hydroxylgruppen mindestens 5 beträgt,
(ii) stickstoffhaltigen Mono- oder Polycarbonsäuren,
(iii) geminalen Diphosphonsäuren,
(iv) Aminophosphonsäuren,
(v) Phosphonopolycarbonsäuren,
(vi) Cyclodextrine
in Mengen oberhalb von 0,1 Gew.-%, vorzugsweise oberhalb von 0,5 Gew.-%, besonders bevorzugt oberhalb von 1 Gew.-% und insbesondere oberhalb von 2,5 Gew.-%, jeweils bezogen auf das Gewicht des Geschirrspülmittels, enthalten.

Alle Komplexbildner des Standes der Technik können eingesetzt werden. Diese können unterschiedlichen chemischen Gruppen angehören. Vorzugsweise werden einzeln oder im Gemisch miteinander eingesetzt:
a) Polycarbonsäuren, bei denen die Summe der Carboxyl- und gegebenenfalls Hydroxylgruppen mindestens 5 beträgt wie Gluconsäure,
b) stickstoffhaltige Mono- oder Polycarbonsäuren wie Ethylendiamintetraessigsäure (EDTA), N-Hydroxyethylethylendiamintriessigsäure, Diethylentriaminpentaessigsäure, Hydroxyethyliminodiessigsäure, Nitridodiessigsäure-3-propionsäure, Isoserindiessigsäure, N,N-Di-(β-hydroxyethyl)-glycin, N-(1,2-Dicarboxy-2-hydroxyethyl)-glycin, N-(1,2-Dicarboxy-2-hydroxyethyl)-asparaginsäure oder Nitrilotriessigsäure (NTA),
c) geminale Diphosphonsäuren wie 1-Hydroxyethan-1,1-diphosphonsäure (HEDP), deren höhere Homologe mit bis zu 8 Kohlenstoffatomen sowie Hydroxy- oder Aminogruppen-haltige Derivate hiervon und 1-Aminoethan-1,1-diphosphonsäure, deren höhere Homologe mit bis zu 8 Kohlenstoffatomen sowie Hydroxy- oder Aminogruppen-haltige Derivate hiervon,
d) Aminophosphonsäuren wie Ethylendiamintetra(methylenphosphonsäure), Diethylentriaminpenta(methylenphosphonsäure) oder Nitrilotri(methylenphosphonsäure),
e) Phosphonopolycarbonsäuren wie 2-Phvsphonobutan-1,2,4-tricarbonsäure sowie
f) Cyclodextrine.

Als Polycarbonsäuren a) werden im Rahmen dieser Patentanmeldung Carbonsäuren - auch Monocarbonsäuren- verstanden, bei denen die Summe aus Carboxyl- und den im Molekül enthaltenen Hydroxylgruppen mindestens 5 beträgt. Komplexbildner aus der Gruppe der stickstoffhaltigen Polycarbonsäuren, insbesondere EDTA, sind bevorzugt. Bei den erfindungsgemäß erforderlichen alkalischen pH-Werten der Behandlungslösungen liegen diese Komplexbilner zumindest teilweise als Anionen vor. Es ist unwesentlich, ob sie in Form der Säuren oder in Form von Salzen eingebracht werden. Im Falle des Einsatzes als Salze sind Alkali-, Ammonium- oder Alkylammoniumsalze, insbesondere Natriumsalze, bevorzugt.

Belagsinhibierende Polymere können ebenfalls in den Mitteln enthalten sein. Diese Stoffe, die chemisch verschieden aufgebaut sein könne, stammen beispielsweise aus den Gruppen der niedermolekularen Polyacrylate mit Molmassen zwischen 1000 und 20.000 Dalton, wobei Polymere mit Molmassen unter 15.000 Dalton bevorzugt sind.

Belagsinhibierende Polymere können auch Cobuildereigenschaften aufweisen. Als organische Cobuilder können in den erfindungsgemäßen maschinellen Geschirrspülmitteln insbesondere Polycarboxylate/Polycarbonsäuren, polymere Polycarboxylate, Asparaginsäure, Polyacetale, Dextrine, weitere organische Cobuilder (siehe unten) sowie Phosphonate eingesetzt werden. Diese Stoffklassen werden nachfolgend beschrieben.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Als Builder bzw. Belagsinhibitor sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Bei den für polymere Polycarboxylate angegebenen Molmassen handelt es sich im Sinne dieser Schrift um gewichtsmittlere Molmassen M_{w} der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 500 bis 20000 g/mol aufweisen. Aufgrund ihrer überlegenen Löslichkeit können aus dieser Gruppe wiederum die kurzkettigen Polyacrylate, die Molmassen von 1000 bis 10000 g/mol, und besonders bevorzugt von 1000 bis 4000 g/mol, aufweisen, bevorzugt sein.

Besonders bevorzugt werden in den Mitteln sowohl Polyacrylate als auch Copolymere aus ungesättigten Carbonsäuren, Sulfonsäuregruppen-haltigen Monomeren sowie gegebenenfalls weiteren ionischen oder nichtionogenen Monomeren eingesetzt. Die Sulfonsäuregruppen-haltigen Copolymere werden weiter unten ausführlich beschrieben.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 70000 g/mol, vorzugsweise 20000 bis 50000 g/mol und insbesondere 30000 bis 40000 g/mol.

Die (co-)polymeren Polycarboxylate können entweder als Pulver oder als wäßrige Lösung eingesetzt werden. Der Gehalt der Mittel an (co-)polymeren Polycarboxylaten beträgt vorzugsweise 0,5 bis 20 Gew.-%, insbesondere 3 bis 10 Gew.-%.

Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten. Weitere bevorzugte Copolymere sind solche, die als Monomere vorzugsweise Acrolein und Acrylsäure/Acrylsäuresalze bzw. Acrolein und Vinylacetat aufweisen.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate, die neben Cobuilder-Eigenschaften auch eine bleichstabilisierende Wirkung aufweisen.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000 g/mol.

Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Ein an C₆ des Saccharidrings oxidiertes Produkt kann besonders vorteilhaft sein.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate. Geeignete Einsatzmengen liegen in zeolithhaltigen und/oder silicathaltigen Formulierungen bei 3 bis 15 Gew.-%.

Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten.

Eine weitere Substanzklasse mit Cobuildereigenschaften stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z. B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Zusätzlich zu den Stoffen aus den genannten Stoffklassen können die erfindungsgemäßen Mittel weitere übliche Inhaltsstoffe von Wasch-, Pflege- oder Reinigungsmitteln enthalten, wobei insbesondere Bleichmittel, Bleichaktivatoren, Enzyme, Silberschutzmittel, Farb- und Duftstoffe von Bedeutung sind. Diese Stoffe werden nachstehend beschrieben.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure.

Um beim Waschen bei Temperaturen von 60 °C und darunter eine verbesserte Bleichwirkung zu erreichen, können Bleichaktivatoren in die Wasch- und Reinigungsmittelformkörper eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Zusätzlich zu den konventionellen Bleichaktivatoren oder an deren Stelle können auch sogenannte Bleichkatalysatoren in die Formkörper eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Amminkomplexe sind als Bleichkatalysatoren verwendbar.

Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie Bacillus subtilis, Bacillus licheniformis, Streptomyceus griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich verschiedene Cellulase-Typen durch ihre CMCase- und Avicelase-Aktivitäten unterscheiden, können durch gezielte Mischungen der Cellulasen die gewünschten Aktivitäten eingestellt werden.

Die Enzyme können an Trägerstoffe adsorbiert oder in Hüllsubstanzen eingebettet sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,12 bis etwa 2 Gew.-% betragen.

Enzyme werden nach dem Stand der Technik in erster Linie einer Reinigungsmittel-Zubereitung zugesetzt, insbesondere einem Geschirr-Pflegemittel zugesetzt, das für den Hauptspülgang bestimmt ist. Nachteil war dabei, dass das Wirkungsoptimum verwendeter Enzyme die Temperaturwahl beschränkte und auch Probleme bei der Stabilität der Enzyme im stark alkalischen Milieu auftraten. Mit den Wasch- oder Reinigungsmittel-Portionen ist es möglich, Enzyme in ein separates Kompartiment einzuführen und diese dann auch im Vorspülgang zu verwenden und damit den Vorspülgang zusätzlich zum Hauptspülgang für eine Enzymeinwirkung auf Verschmutzungen des Spülguts zu nutzen.

Besonders bevorzugt ist also, der für den Vorspülgang vorgesehenen waschaktiven Zubereitung oder Teilportion einer Reinigungsmittel-oder Pflegemittel-Portion Enzyme zuzusetzen und eine derartige Zubereitung dann - weiter bevorzugt - mit einem bereits bei niedriger Temperatur wasserlöslichen Material eines flexiblen, vorzugsweise elastischen, Hohlkörpers zu umfassen, um beispielsweise die enzymhaltige Zubereitung vor einem Wirkungsverlust durch Umgebungsbedingungen zu schützen. Die Enzyme sind weiter bevorzugt für den Einsatz unter den Bedingungen des Vor-Pflegegangs, also beispielsweise in kaltem Wasser, optimiert.

Vorteilhaft können die Reinigungsmittel-Portionen dann sein, wenn die Enzymzubereitungen flüssig vorliegen, wie sie teilweise im Handel angeboten werden, weil dann eine schnelle Wirkung erwartet werden kann, die bereits im (relativ kurzen und in kaltem Wasser durchgeführten) Vorspülgang eintritt. Auch wenn - wie üblich - die Enzyme in fester Form eingesetzt werden und diese mit einer Hohlkörper-Umfassung aus einem wasserlöslichen Material versehen sind, das bereits in kaltem Wasser löslich ist, können die Enzyme bereits vor dem Hauptwaschgang bzw. Hauptreinigungsgang ihre Wirkung entfalten. Vorteil der Verwendung einer Umfassung aus wasserlöslichem-Material, insbesondere aus kaltwasserlöslichem Material ist, dass das Enzym/die Enzyme in kaltem Wasser nach Auflösen der Umfassung schnell zur Wirkung kommt/kommen. Damit kann deren Wirkungszeit ausgedehnt werden, was dem Wasch- bzw. Spülergebnis zugute kommt.

Die Reinigungsmittel für das maschinelle Geschirrspülen können zum Schutze des Spülgutes oder der Maschine Korrosionsinhibitoren enthalten, wobei besonders Silberschutzmittel im Bereich des maschinellen Geschirrspülens eine besondere Bedeutung haben. Einsetzbar sind die bekannten Substanzen des Standes der Technik. Allgemein können vor allem Silberschutzmittel ausgewählt aus der Gruppe der Triazole, der Benzotriazole, der Bisbenzotriazole, der Aminotriazole, der Alkylaminotriazole und der Übergangsmetallsalze oder -komplexe eingesetzt werden. Besonders bevorzugt zu verwenden sind Benzotriazol und/oder Alkylaminotriazol. Man findet in Reinigerformulierungen darüber hinaus häufig aktivchlorhaltige Mittel, die das Korrodieren der Silberoberfläche deutlich vermindern können. In chlorfreien Reinigern werden besonders Sauerstoff- und stickstoffhaltige organische redoxaktive Verbindungen, wie zwei- und dreiwertige Phenole, z. B. Hydrochinon, Brenzkatechin, Hydroxyhydrochinon, Gallussäure, Phloroglucin, Pyrogallol bzw. Derivate dieser Verbindungsklassen. Auch salz- und komplexartige anorganische Verbindungen, wie Salze der Metalle Mn, Ti, Zr, Hf, V, Co und Ce finden häufig Verwendung. Bevorzugt sind hierbei die Übergangsmetallsalze, die ausgewählt sind aus der Gruppe der Mangan und/oder Cobaltsalze und/oder -komplexe, besonders bevorzugt der Cobalt(ammin)-Komplexe, der Cobalt(acetat)-Komplexe, der Cobalt-(Carbonyl)-Komplexe, der Chloride des Cobalts oder Mangans und des Mangansulfats. Ebenfalls können Zinkverbindungen zur Verhinderung der Korrosion am Spülgut eingesetzt werden.

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide und Sulfate. Aus herstellungstechnischer Sicht ist der Einsatz von NaCl oder MgCl₂ in den erfindungsgemäßen Mitteln bevorzugt. Der Anteil an Elektrolyten in den Mitteln beträgt üblicherweise 0,5 bis 5 Gew.-%.

Nichtwäßrige Lösungsmittel, die in den Mitteln eingesetzt werden können, stammen beispielsweise aus der Gruppe ein- oder mehrwertigen Alkohole, Alkanolamine oder Glycolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propyl-ether, Dipropylenglykolmonomethyl-, oder -ethylether, Di-isopropylenglykolmonomethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether sowie Mischungen dieser Lösungsmittel. Nichtwäßrige Lösungsmittel können in den Flüssigwaschmitteln in Mengen zwischen 0,5 und 10 Gew.-%, bevorzugt aber unter 5 Gew.-% und insbesondere unterhalb von 3 Gew.-% eingesetzt werden.

Um den pH-Wert der erfindungsgemäßen Mittel in den gewünschten Bereich zu bringen, kann der Einsatz von pH-Stellmitteln angezeigt sein.Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 5 Gew.-% der Gesamtformulierung nicht.

Um den ästhetischen Eindruck der Mittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Als Schauminhibitoren, die in den Mitteln eingesetzt werden können, kommen beispielsweise Seifen, Paraffine oder Silikonöle in Betracht, die gegebenenfalls auf Trägermaterialien aufgebracht sein können. Geeignete Antiredepositionsmittel, die auch als soil repellents bezeichnet werden, sind beispielsweise nichtionische Celluloseether wie Methylcellulose und Methylhydroxypropylcellulose mit einem Anteil an Methoxygruppen von 15 bis 30 Gew.-% und an Hydroxypropylgruppen von 1 bis 15 Gew.-%, jeweils bezogen auf den nichtionischen Celluloseether sowie die aus dem Stand der Technik bekannten Polymere der Phthalsäure und/oder Terephthalsäure bzw. von deren Derivaten, insbesondere Polymere aus Ethylenterephthalaten und/oder Polyethylenglycolterephthalaten oder anionisch und/oder nichtionisch modifizierten Derivaten von diesen. Insbesondere bevorzugt von diesen sind die sulfonierten Derivate der Phthalsäure- und Terephthalsäure-Polymere.

Optische Aufheller (sogenannte "Weißtöner") können den Mitteln zugesetzt werden, um Vergrauungen und Vergilbungen der behandelten Textilien zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3-Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,05 und 0,3 Gew.-%, bezogen auf das fertige Mittel, eingesetzt.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw. Auch Polyvinylpyrrolidon ist brauchbar. Bevorzugt werden jedoch Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxy-methylcellulose und deren Gemische in Mengen von 0,1, bis 5 Gew.-%, bezogen auf die Mittel, eingesetzt

Werden die Mittel als Mittel für das maschinelle Geschirrspülen konfektioniert, so können weitere Inhaltsstoffe eingesetzt werden. An maschinell gespültes Geschirr werden heute häufig höhere Anforderungen gestellt als an manuell gespültes Geschirr. So wird auch ein von Speiseresten völlig gereinigtes Geschirr dann als nicht einwandfrei bewertet, wenn es nach dem maschinellen Geschirrspülen noch weißliche, auf Wasserhärte oder anderen mineralischen Salzen beruhende Flecken aufweist, die mangels Netzmittel aus eingetrockneten Wassertropfen stammen. Um glasklares und fleckenloses Geschirr zu erhalten, setzt man daher heute mit Erfolg Klarspüler ein. Der Zusatz von Klarspüler am Ende des Spülprogramms sorgt dafür, daß das Wasser möglichst vollständig vom Spülgut abläuft, so daß die unterschiedlichen Oberflächen am Ende des Spülprogramms rückstandsfrei und makellos glänzend sind. Das maschinelle Reinigen von Geschirr in Haushaltsgeschirrspülmaschinen umfaßt üblicherweise einen Vorspülgang, einen Hauptspülgang und einen Klarspülgang, die von Zwischenspülgängen unterbrochen werden. Bei den meisten Maschinen ist der Vorspülgang für stark verschmutztes Geschirr zuschaltbar, wird aber nur in Ausnahmefällen vom Verbraucher gewählt, so daß in den meisten Maschinen ein Hauptspülgang, ein Zwischenspülgang mit reinem Wasser und ein Klarspülgang durchgeführt werden. Die Temperatur des Hauptspülgangs variiert dabei je nach Maschinentyp und Programmstufenwahl zwischen 40 und 65°C. Im Klarspülgang werden aus einem Dosiertank in der Maschine Klarspülmittel zugegeben, die üblicherweise als Hauptsbestandteil nichtionische Tenside enthalten. Solche Klarspüler liegen in flüssiger Form vor und sind im Stand der Technik breit beschrieben. Ihre Aufgabe besteht vornehmlich darin, Kalkflecken und Beläge auf dem Geschirr zu verhindern.

Die Mittel können als "normale" Reiniger formuliert werden, welche zusammen mit handelsüblichen Ergänzungsmitteln (Klarspüler, Regeneriersalz) eingesetzt werden. Mit besonderem Vorteil kann aber mit den erfindungsgemäßen Produkten auf die zusätzliche Dosierung von Klarspülmitteln verzichtet werden. Diese sogenannten "2in1"-Produkte führen zu einer Vereinfachung der Handhabung und nehmen dem Verbraucher die Last der zusätzlichen Dosierung zweier unterschiedlicher Produkte (Reiniger und Klarspüler) ab.

Selbst beim Einsatz von "2in1"-Produkten sind zum Betrieb einer Haushaltsgeschirrspülmaschine in Zeitabständen zwei Dosiervorgänge erforderlich, da nach einer bestimmten Anzahl von Spülvorgängen das Regeneriersalz im Wasserenthärtungssystem der Maschine nachgefüllt werden muß. Diese Wasserenthärtungssysteme bestehen aus Ionenaustauscherpolymeren, welche das der Maschine zulaufende Hartwasser enthärten und im Anschluß an das Spülprogramm durch eine Spülung mit Salzwasser regeneriert werden.

Es lassen sich aber auch Produkte, welche als sogenannte "3in1"-Produkte die herkömmlichen Reiniger, Klarspüler und eine Salzersatzfunktion in sich vereinen, bereitstellen. Hierzu sind maschinelle Geschirrspülmittel bevorzugt, die zusätzlich 0,1 bis 70 Gew.-% an Copolymeren aus
i) ungesättigten Carbonsäuren
ii) Sulfonsäuregruppen-haltigen Monomeren
iii) gegebenenfalls weiteren ionischen oder nichtionogenen Monomeren
enthalten.

Diese Copolymere bewirken, daß die mit solchen Mitteln behandelten Geschirrteile bei nachfolgenden Reinigungsvorgängen deutlich sauberer werden, als Geschirrteile, die mit herkömmlichen Mitteln gespült wurden.

Als zusätzlicher positiver Effekt tritt eine Verkürzung der Trocknungszeit der mit dem Reinigungsmittel behandelten Geschirrteile auf, d.h. der Verbraucher kann nach dem Ablauf des Reinigungsprogramms das Geschirr früher aus der Maschine nehmen und wiederbenutzen.

Diese Mittel zeichnen sich durch eine verbesserte "Reinigbarkeit" der behandelten Substrate bei späteren Reinigungsvorgängen und durch ein erhebliche Verkürzung der Trocknungszeit gegenüber vergleichbaren Mitteln ohne den Einsatz Sulfonsäuregruppen-haltiger Polymere aus.

Unter *Trocknungszeit* wird im Rahmen der erfindungsgemäßen Lehre im allgemeinen die wortsinngemäße Bedeutung verstanden, also die Zeit, die verstreicht, bis eine in einer Geschirrspülmaschine behandelte Geschirroberfläche getrocknet ist, im besonderen aber die Zeit, die verstreicht, bis 90 % einer mit einem Reinigungs- oder Klarspülmittel in konzentrierter oder verdünnter Form behandelten Oberfläche getrocknet ist.

Ungesättigte Carbonsäuren der Formel VI als Monomer sind bevorzugt,

R¹(R²)C=C(R³)COOH (VI),

in der R¹ bis R³ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert oder für-COOH oder-COOR⁴ steht, wobei R⁴ ein gesättigter oder ungesättigter, geradkettigter oder verzweigter Kohlenwasserstoffrest mit 1 bis 12 Kohlenstoffatomen ist.

Unter den ungesättigten Carbonsäuren, die sich durch die Formel VI beschreiben lassen, sind insbesondere Acrylsäure (R¹ = R² = R³ = H), Methacrylsäure (R¹ = R² = H; R³ = CH₃) und/oder Maleinsäure (R¹ = COOH; R² = R³ = H) bevorzugt.

Bei den Sulfonsäuregruppen-haltigen Monomeren sind solche der Formel VII bevorzugt,

R⁵(R⁶)C=C(R⁷)-X-SO₃H (VII),

in der R⁵ bis R⁷ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-.

Unter diesen Monomeren bevorzugt sind solche der Formeln VIIa, VIIb und/oder VIIc,

H₂C=CH-X-SO₃H (VIIa),

H₂C=C(CH₃)-X-SO₃H (VIIb),

HO₃S-X-(R⁶)C=C(R⁷)-X-SO₃H (VIIc),

in denen R⁶ und R⁷ unabhängig voneinander ausgewählt sind aus -H, -CH₃, -CH₂CH₃, -CH₂CH₂CH₃, -CH(CH₃)₂ und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-.

Besonders bevorzugte Sulfonsäuregruppen-haltige Monomere sind dabei 1-Acrylamido-1-propansulfonsäure (X = -C(O)NH-CH(CH₂CH₃) in Formel VIIa), 2-Acrylamido-2-propansulfonsäure (X = -C(O)NH-C(CH₃)₂ in Formel Vlla), 2-Acrylamido-2-methyl-1-propansulfonsäure (X = -C(O)NH-CH(CH₃)CH₂- in Formel VIIa), 2-Methacrylamido-2-methyl-1-propansulfonsäure (X = -C(O)NH-CH(CH₃)CH₂- in Formel VIIb), 3-Methacrylamido-2-hydroxy-propansulfonsäure (X = -C(O)NH-CH₂CH(OH)CH₂- in Formel Vllb), Allylsulfonsäure (X = CH₂ in Formel VIIa), Methallylsulfonsäure (X = CH₂ in Formel VIIb), Allyloxybenzolsulfonsäure (X = -CH₂-O-C₆H₄- in Formel XVIIa), Methallyloxybenzolsulfonsäure (X = - CH₂-O-C₆H₄- in Formel VIIb), 2-Hydroxy-3-(2-propenyloxy)propansulfonsäure, 2-Methyl-2-propen1-sulfonsäure (X = CH₂ in Formel VIIb), Styrolsulfonsäure (X = C₆H₄ in Formel Vlla), Vinylsulfonsäure (X nicht vorhanden in Formel VIIa), 3-Sulfopropylacrylat (X = - C(O)NH-CH₂CH₂CH₂- in Formel VIIa), 3-Sulfopropylmethacrylat (X = -C(O)NH-CH₂CH₂CH₂- in Formel Vllb), Sulfomethacrylamid (X = -C(O)NH- in Formel Vllb), Sulfomethylmethacrylamid (X = -C(O)NH-CH₂- in Formel Vllb) sowie wasserlösliche Salze der genannten Säuren.

Als weitere ionische oder nichtionogene Monomere kommen insbesondere ethylenisch ungesättigte Verbindungen in Betracht. Vorzugsweise beträgt der Gehalt der erfindungsgemäß eingesetzten Polymere an Monomeren der Grupp iii) weniger als 20 Gew.-%, bezogen auf das Polymer. Besonders bevorzugt zu verwendende Polymere bestehen lediglich aus Monomeren der Gruppen i) und ii).

Zusammenfassend sind Copolymere aus
i) ungesättigten Carbonsäuren der Formel VI.

   R¹(R²)C=C(R³)COOH (VI),

   in der R¹ bis R³ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist,
ii) Sulfonsäuregruppen-haltigen Monomeren der Formel VII

   R⁵(R⁶)C=C(R⁷)-X-SO₃H (VII),

   in der R⁵ bis R⁷ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-
iii) gegebenenfalls weiteren ionischen oder nichtionogenen Monomeren besonders bevorzugt.

Besonders bevorzugte Copolymere bestehen aus
i) einer oder mehrerer ungesättigter Carbonsäuren aus der Gruppe Acrylsäure, Methacrylsäure und/oder Maleinsäure
ii) einem oder mehreren Sulfonsäuregruppen-haltigen Monomeren der Formeln VIIa, VIIb und/oder VIIc:

   H₂C=CH-X-SO₃H (VIIa),

   H₂C=C(CH₃)-X-SO₃H (VIIb),

   HO₃S-X-(R⁶)C=C(R⁷)-X-SO₃H (VIIc),

   in der R⁶ und R⁷ unabhängig voneinander ausgewählt sind aus -H, -CH₃, -CH₂CH₃, -CH₂CH₂CH₃, -CH(CH₃)₂ und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-
iii) gegebenenfalls weiteren ionischen oder nichtionogenen Mono meren.

Die in den Mitteln anthaltenen Copolymere können die Monomere aus den Gruppen i) und ii) sowie gegebenenfalls iii) in variierenden Mengen enthalten, wobei sämtliche Vertreter aus der Gruppe i) mit sämtlichen Vertretern aus der Gruppe ii) und sämtlichen Vertretern aus der Gruppe iii) kombiniert werden können. Besonders bevorzugte Polymere weisen bestimmte Struktureinheiten auf, die nachfolgend beschrieben werden.

So sind beispielsweise Mittel bevorzugt, die dadurch gekennzeichnet sind, daß sie ein oder mehrere Copolymere enthalten, die Struktureinheiten der Formel VIII

-[CH₂-CHCOOH]ₘ-[CH₂-CHC(O)-Y-SO₃H]ₚ- (VIII),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

Diese Polymere werden durch Copolymerisation von Acrylsäure mit einem Sulfonsäuregruppen-haltigen Acrylsäurederivat hergestellt. Copolymerisiert man das Sulfonsäuregruppen-haltige Acrylsäurederivat mit Methacrylsäure, gelangt man zu einem anderen Polymer, dessen Einsatz in den Mitteln ebenfalls bevorzugt und dadurch gekennzeichnet ist, daß die Mittel ein oder mehrere Copolymere enthalten, die Struktureinheiten der Formel IX

-[CH₂-C(CH₃)COOH]ₘ-[CH₂-CHC(O)-Y-SO₃H]ₚ- (IX),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

Völlig analog lassen sich Acrylsäure und/oder Methacrylsäure auch mit Sulfonsäuregruppen-haltigen Methacrylsäurederivaten copolymerisieren, wodurch die Struktureinheiten im Molekül verändert werden. So sind Mittel, die ein oder mehrere Copolymere enthalten, welche Struktureinheiten der Formel X

-[CH₂-CHCOOH]ₘ-[CH₂-C(CH₃)C(O)-Y-SO₃H]ₚ- (X),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind, ebenfalls eine bevorzugte Ausführungsform , genau wie auch Mittel bevorzugt sind, die dadurch gekennzeichnet sind, daß sie ein oder mehrere Copolymere enthalten, die Struktureinheiten der Formel XI

-[CH₂-C(CH₃)COOH]ₘ-[CH₂-C(CH₃)C(O)-Y-SO₃H]ₚ- (XI),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

Anstelle von Acrylsäure und/oder Methacrylsäure bzw. in Ergänzung hierzu kann auch Maleinsäure als besonders bevorzugtes Monomer aus der Gruppe i) eingesetzt werden. Man gelangt auf diese Weise zu bevorzugten Mitteln, die dadurch gekennzeichnet sind, daß sie ein oder mehrere Copolymere enthalten, die Struktureinheiten der Formel XI

-[HOOCCH-CHCOOH]ₘ-[CH₂-CHC(O)-Y-SO₃H]ₚ- (XI),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind und zu Mitteln, welche dadurch gekennzeichnet sind, daß sie ein oder mehrere Copolymere enthalten, die Struktureinheiten der Formel XII

-[HOOCCH-CHCOOH]ₘ-[CH₂-C(CH₃)C(O)O-Y-SO₃H]ₚ- (XII),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

Zusammenfassend sind maschinelle Geschirrspülmittel bevorzugt, die als Inhaltsstoff b) ein oder mehrere Copolymere enthält, die Struktureinheiten der Formeln VII und/oder VIII und/oder IX und/oder X und/oder XI und/oder XII

-[CH₂-CHCOOH]ₘ-[CH₂-CHC(O)-Y-SO₃H]ₚ- (VII),

-[CH₂-C(CH₃)COOH]ₘ-[CH₂-CHC(O)-Y-SO₃H]ₚ- (VIII),

-[CH₂-CHCOOH]ₘ-[CH₂-C(CH₃)C(O)-Y-SO₃H]ₚ- (IX),

-[CH₂-C(CH₃)COOH]ₘ-[CH₂-C(CH₃)C(O)-Y-SO₃H]ₚ- (X),

-[HOOCCH-CHCOOH]ₘ-[CH₂-CHC(O)-Y-SO₃H]ₚ- (XI),

-[HOOCCH-CHCOOH]ₘ-[CH₂-C(CH₃)C(O)O-Y-SO₃H]ₚ- (XII),

enthalten, in denen m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

In den Polymeren können die Sulfonsäuregruppen ganz oder teilweise in neutralisierter Form vorliegen, d.h. daß das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Entsprechende Mittel, die dadurch gekennzeichnet sind, daß die Sulfonsäuregruppen im Copolymer teil- oder vollneutralisiert vorliegen, sind bevorzugt.

Die Monomerenverteilung der in den Mitteln eingesetzten Copolymeren beträgt bei Copolymeren, die nur Monomere aus den Gruppen i) und ii) enthalten, vorzugsweise jeweils 5 bis 95 Gew.-% i) bzw. ii), besonders bevorzugt 50 bis 90 Gew.-% Monomer aus der Gruppe i) und 10 bis 50 Gew.-% Monomer aus der Gruppe ii), jeweils bezogen auf das Polymer.

Bei Terpolymeren sind solche besonders bevorzugt, die 20 bis 85 Gew.-% Monomer aus der Gruppe i), 10 bis 60 Gew.-% Monomer aus der Gruppe ii) sowie 5 bis 30 Gew.-% Monomer aus der Gruppe iii) enthalten.

Die Molmasse der in den Mitteln eingesetzten Polymere kann variiert werden, um die Eigenschaften der Polymere dem gewünschten Verwendungszweck anzupassen. Bevorzugte maschinelle Geschirrspülmittel sind dadurch gekennzeichnet, daß die Copolymere Molmassen von 2000 bis 200.000 gmol⁻¹, vorzugsweise von 4000 bis 25.000 gmol⁻¹ und insbesondere von 5000 bis 15.000 gmol⁻¹ aufweisen.

Der Gehalt an einem oder mehreren Copolymeren in den Mitteln kann je nach Anwendungszweck und gewünschter Produktleistung varieren, wobei bevorzugte maschinelle Geschirrspülmittel dadurch gekennzeichnet sind, daß sie das bzw. die Copolymer(e) in Mengen von 0,25 bis 50 Gew.-%, vorzugsweise von 0,5 bis 35 Gew.-%, besonders bevorzugt von 0,75 bis 20 Gew.-% und insbesondere von 1 bis 15 Gew.-% enthalten.

Wie bereits weiter oben erwähnt, werden in den Mitteln besonders bevorzugt sowohl Polyacrylate als auch die vorstehend beschriebenen Copolymere aus ungesättigten Carbonsäuren, Sulfonsäuregruppen-haltigen Monomeren sowie gegebenenfalls weiteren ionischen oder nichtionogenen Monomeren eingesetzt. Die Polyacrylate wurden dabei weiter oben ausführlich beschrieben. Besonders bevorzugt sind Kombinationen aus den vorstehend beschriebenen Sulfonsäuregruppen-haltigen Copolymeren mit Polyacrylaten niedriger Molmasse, beispielsweise im Bereich zwischen 1000 und 4000 Dalton. Solche Polyacrylate sind kommerziell unter dem Handelsnamen Sokalan^{®} PA15 bzw. Sokalan^{®} PA25 (BASF) erhältlich.

Die Mittel können auch als Weichspüler oder Waschzusatzmittel konfektioniert werden. Je nach gewünschtem Verwendungszweck können weitere Inhaltsstoffe eingesetzt werden. Weichspülerzusammensetzungen für die Spülbadavivage sind im Stand der Technik breit beschrieben. Üblicherweise enthalten diese Zusammensetzungen als Aktivsubstanz eine kationische quartäre Ammoniumverbindung, die in Wasser dispergiert wird. Je nach Gehalt der fertigen Weichmacherzusammensetzung an Aktivsubstanz spricht man von verdünnten, anwendungsfertigen Produkten (Aktivsubstanzgehalte unter 7 Gew.-%) oder sogenannten Konzentraten (Aktivsubstanzgehalt über 7 Gew.-%). Wegen des geringeren Volumens und den damit gleichzeitig verringerten Verpackungs- und Transportkosten besitzen die Textilweichmacherkonzentrate Vorteile aus ökologischer Sicht und haben sich im Markt mehr und mehr durchgesetzt. Aufgrund der Einarbeitung von kationischen Verbindungen, die nur eine geringe Wasserlöslichkeit aufweisen, liegen übliche Weichspülerzusammensetzungen in Form von Dispersionen vor, besitzen ein milchig-trübes Aussehen und sind nicht durchscheinend. Aus Gründen der Produktästhetik kann es aber auch gewünscht sein, dem Verbraucher durchscheinende, klare Weichspüler zur Verfügung zu stellen, die sich optisch von den bekannten Produkten abheben.

Als textilweichmachende Aktivsubstanz enthalten portionierte Weichspüler vorzugsweise kationische Tenside, die bereits weiter oben ausführlich beschrieben wurden (Formeln XII, XIII und XIV). Besonders bevorzugt enthalten "WeichPflege- Portionen" sogenannte Esterquats. Während es eine Vielzahl möglicher Verbindungen aus dieser Substanzklasse gibt, werden mit besonderem Vorzug Esterquats eingesetzt, die sich durch Umsetzung von Trialkanolaminen mit einer Mischung aus Fettsäuren und Dicarbonsäuren, gegebenenfalls nachfolgende Alkoxylierung des Reaktionsproduktes und Quaternierung in an sich bekannter Weise herstellen lassen, wie es in der DE 195 39 846 beschrieben ist.

Die auf diese Weise hergestellten Esterquats eignen sich in hervorragender Weise zur Herstellung von Portionen, die als Weichspüler eingesetzt werden können. Da je nach Wahl des Trialkanolamins, der Fettsäuren und der Dicarbonsäuren sowie des Quaternierungsmittels eine Vielzahl geeigneter Produkte hergestellt und in den Mitteln eingesetzt werden kann, ist eine Beschreibung der vorzugsweise einzusetzenden Esterquats über ihren Herstellungsweg präziser als die Angabe einer allgemeinen Formel.

Die genannten Komponenten, die miteinander zu den vorzugsweise einzusetzenden Esterquats reagieren, können in variierenden Mengenverhältnissen zueinander eingesetzt werden. Im Rahmen der vorliegenden Erfindung sind portionierte Weichspüler bevorzugt, in denen ein Umsetzungsprodukt von Trialkanolaminen mit einer Mischung aus Fettsäuren und Dicarbonsäuren im molaren Verhältnis 1:10 bis 10:1, vorzugsweise 1:5 bis 5:1, das gegebenenfalls alkoxyliert und anschließend in an sich bekannter Weise quaterniert wurde, in Mengen von 2 bis 60, vorzugsweise 3 bis 35 und insbesondere 5 bis 30 Gew.-% enthalten ist. Besonders bevorzugt ist dabei die Verwendung von Triethanolamin, so daß weitere bevorzugte portionierte Weichspüler der vorliegenden Erfindung ein Umsetzungsprodukt von Triethanolamin mit einer Mischung aus Fettsäuren und Dicarbonsäuren im molaren Verhältnis 1:10 bis 10:1, vorzugsweise 1:5 bis 5:1, das gegebenenfalls alkoxyliert und anschließend in an sich bekannter Weise quaterniert wurde, in Mengen von 2 bis 60, vorzugsweise 3 bis 35 und insbesondere 5 bis 30 Gew.-% enthalten.

Als Fettsäuren können im Reaktionsgemisch zur Herstellung der Esterquats sämtliche aus pflanzlichen oder tierischen Ölen und Fetten gewonnenen Säuren verwendet werden. Dabei kann im Rekationsgemisch als Fettsäure durchaus auch eine bei Raumtemperatur nicht-feste, d.h. pastöse bis flüssige, Fettsäure eingesetzt werden.

Die Fettsäuren können unabhängig von ihrem Aggregatzustand gesättigt oder ein- bis mehrfach ungesättigt sein. Selbstverständlich können nicht nur "reine" Fettsäuren eingesetzt werden, sondern auch die bei der Spaltung aus Fetten und Ölen gewonnenen technischen Fettsäuregemische, wobei diese Gemische aus ökonomischer Sicht wiederum deutlich bevorzugt sind.

So lassen sich in den Reaktionsmischungen zur Herstellung der Esterquats für die erfindungsgemäßen klaren wäßrigen Weichspüler beispielsweise einzelne Spezies oder Gemische folgender Säuren einsetzen: Caprylsäure, Pelargonsäure, Caprinsäure, Laurinsäure, Myristinsäure, Palmitinsäure, Stearinsäure, Octadecan-12-ol-säure, Arachinsäure, Behensäure, Lignocerinsäure, Cerotinsäure, Melissinsäure, 10-Undecensäure, Petroselinsäure, Petroselaidinsäure, Ölsäure, Elaidinsäure, Ricinolsäure, Linolaidinsäure, α- und β-Eläosterainsäure, Gadoleinsäure, Erucasäure, Brassidinsäure. Selbstverständlich sind auch die Fettsäuren mit ungerader Anzahl von C-Atomen einsetzbar, beispielsweise Undecansäure, Tridecansäure, Pentadecansäure, Heptadecansäure, Nonadecansäure, Heneicosansäure, Tricosansäure, Pentacosansäure, Heptacosansäure.

Im Rahmen der vorliegenden Erfindung ist die Verwendung von Fettsäuren der Formel XIII im Reaktionsgemisch zur Herstellung der Esterquats bevorzugt, so daß bevorzugte portionierte Weichspüler ein Umsetzungsprodukt von Trialkanolaminen mit einer Mischung aus Fettsäuren der Formel XIII,

R¹-CO-OH (XIII)

in der R1-CO- für einen aliphatischen, linearen oder verzweigten Acylrest mit 6 bis 22 Kohlenstoffatomen und 0 und/oder 1, 2 oder 3 Doppelbindungen steht und Dicarbonsäuren im molaren Verhältnis 1:10 bis 10:1, vorzugsweise 1:5 bis 5:1, das gegebenenfalls alkoxyliert und anschließend in an sich bekannter Weise quaterniert wurde, in Mengen von 2 bis 60, vorzugsweise 3 bis 35 und insbesondere 5 bis 30 Gew.-% in den Mitteln enthalten.

Als Dicarbonsäuren, die sich zur Herstellung der in den erfindungsgemäßen Mitteln einzusetzenden Esterquats eignen, kommen vor allem gesättigte oder ein- bzw. mehrfach ungesättigte αωDicarbonsäuren in Betracht. Beispielhaft seien hier die gesättigten Spezies Oxalsäure, Malonsäure, Bernsteinsäure, Glutarsäure, Adipinsäure, Pimelinsäure, Korksäure, Azelainsäure, Sebacinsäure, Undecan- und Dodecansäure, Brassylsäure, Tetra- und Pentadecansäure, Thapisäure sowie Hepta-, Octa- und Nonadecansäure, Eicosan- und Heneicosansäure sowie Phellogensäure genannt. Vorzugsweise im Reaktionsgemisch eingesetzt werden dabei Dicarbonsäuren, die der allgemeinen Formel XXIII folgen, so daß portionierte erfindungsgemäße Mittel bevorzugt sind, die ein Umsetzungsprodukt von Trialkanolaminen mit einer Mischung aus Fettsäuren und Dicarbonsäuren der Formel XIV,

HO-OC-[X]-CO-OH (XIV)

in der X für eine gegebenenfalls hydroxysubstituierte Alkylengruppe mit 1 bis 10 Kohlenstoffatomen steht, im molaren Verhältnis 1:10 bis 10:1, vorzugsweise 1:5 bis 5:1, das gegebenenfalls alkoxyliert und anschließend in an sich bekannter Weise quaterniert wurde, in Mengen von 2 bis 60, vorzugsweise 3 bis 35 und insbesondere 5 bis 30 Gew.-% in den Mitteln enthalten.

Unter der Vielzahl der herstellbaren und einsetzbaren Esterquats haben sich wiederum solche besonders bewährt, in denen das Alkanolamin Treithanolamin und die Dicarbonsäure Adipinsäure ist. Somit sind im Rahmen der vorliegenden Erfindung Mittel besonders bevorzugt, die ein Umsetzungsprodukt von Triethanolamin mit einer Mischung aus Fettsäuren und Adipinsäure im molaren Verhältnis 1:5 bis 5:1, vorzugsweise 1:3 bis 3:1, das anschließend in an sich bekannter Weise quaterniert wurde, in Mengen von 2 bis 60, vorzugsweise 3 bis 35 und insbesondere 5 bis 30 Gew.-% in den Mitteln enthalten.

Die Mittel können - undabhängig davon, ob sie als Textilwaschmittel, Waschhilfsmittel oder Weichspüler formuliert werden - auch mit weiteren Zusatznutzen ausgestattet werden. Hier sind beispielsweise farbübertragungsinhibierende Zusammensetzungen, Mittel mit "Anti-Grau-Formel", Mittel mit Bügelerleichterung, Mittel mit besonderer Duftfreisetzung, Mittel mit verbesserter Schmutzablösung bzw. Verhinderung von Wiederanschmutzung, antibakterielle Mittel, UV-Schutzmittel, farbauffrischende Mittel usw. formulierbar. Einige Beispiele werden nachstehend erläutert:

Da textile Flächengebilde, insbesondere aus Reyon, Zellwolle, Baumwolle und deren Mischungen, zum Knittern eigen können, weil die Einzelfasern gegen Durchbiegen, Knicken. Pressen und Quetschen quer zur Faserrichtung empfindlich sind, können die erfindungsgemäßen Mittel synthetische Knitterschutzmittel enthalten. Hierzu zählen beispielsweise synthetische Produkte auf der Basis von Fettsäuren, Fettsäureestern. Fettsäureamiden, -alkylolestern, -alkylolamiden oder Fettalkoholen, die meist mit Ethylenoxid umgesetzt sind, oder Produkte auf der Basis von Lecithin oder modifizierter Phosphorsäureester.

Zur Bekämpfung von Mikroorganismen können die Mittel antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarlylsulfonate, Halogenphenole und Phenolmercuriacetat, wobei bei den erfindungemäßen Mitteln auch gänzlich auf diese Verbindungen verzichtet werden kann.

Um unerwünschte, durch Sauerstoffeinwirkung und andere oxidative Prozesse verursachte Veränderungen an den Mitteln und/oder den behandelten Textilien zu verhindern, können die Mittel Antioxidantien enthalten. Zu dieser Verbindungsklasse gehören beispielsweise substituierte Phenole, Hydrochinone, Brenzcatechnine und aromatische Amine sowie organische Sulfide, Polysulfide, Dithiocarbamate, Phosphite und Phosphonate.

Ein erhöhter Tragekomfort kann aus der zusätzlichen Verwendung von Antstatika resultieren, die den Mitteln zusätzlich beigefügt werden. Antistatika vergrößern die Oberflächenleitfähigkeit und ermöglichen damit ein verbessertes Abfließen gebildeter Ladungen. Äußere Antistatika sind in der Regel Substanzen mit wenigstens einem hydrophilen Molekülliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsäureester) und schwefelhaltige (Alkylsulfonate, Alkylsulfate) Antistatika unterteilen. Lauryl- (bzw. Stearyl-) dimethylbenzylammoniumchloride eignen sich als Antistatika für Textilien bzw. als Zusatz zu Waschmitteln, wobei zusätzlich ein Avivageeffekt erzielt wird.

Zur Verbesserung des Wasserabsorptionsvermögens, der Wiederbenetzbarkeit der behandelten Textilien und zur Erleichterung des Bügelns der behandelten Textilien können in den Mitteln beispielsweise Silikonderivate eingesetzt werden. Diese verbessern zusätzlich das Ausspülverhalten der Mittel durch ihre schauminhibierenden Eigenschaften. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quaterniert sind bzw. Si-OH-, Si-H- und/oder Si-Cl-Bindungen aufweisen. Die Viskositäten der bevorzugten Silikone liegen bei 25°C im Bereich zwischen 100 und 100.000 Centistokes, wobei die Silikone in Mengen zwischen 0,2 und 5 Gew.-%, bezogen auf das gesamte Mittel eingesetzt werden können.

Schließlich können die Mittel auch UV-Absorber enthalten, die auf die behandelten Textilien aufziehen und die Lichtbeständigkeit der Fasern verbessern. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet.

Weitere denkbare und in speziellen Ausführungsformen bevorzugte Additive sind Tenside, die insbesondere die Löslichkeit der wasserlöslichen Wandung des flexiblen, vorzugsweise elastischen, Hohlkörpers oder der Kompartimentierungs-Einrichtung beeinflussen können, aber auch deren Benetzbarkeit und die Schaumbildung beim Auflösen steuern können, sowie Schauminhibitoren, aber auch Bitterstoffe, die ein versehentliches Verschlucken solcher Hohlkörper oder Teile solcher Hohlkörper durch Kinder verhindern können.

Duftstoffe werden den Waschmittel-, Reinigungsmittel- und/oder Pflegemittel-Portionen zugesetzt, um den ästhetischen Gesamteindruck der Produkte zu verbessern und dem Verbraucher neben der technischen Leistung (Weichspülergebnis) ein sensorisch typisches und unverwechselbares Produkt zur Verfügung zu stellen. Als Parfümöle oder Duftstoffe können einzelne Riechstoff-Verbindungen verwendet werden, beispielsweise die synthetischen Produkte vom Typ der Ester, Ether, Aldehyde, Ketone, Alkohole und Kohlenwasserstoffe. Riechstoff-Verbindungen vom Typ der Ester sind beispielsweise Benzylacetat, Phenoxyethylisobutyrat, p-t-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether. Zu den Aldehyden zählen z. B. lineare Alkanale mit 8 bis 18 C-Atomen, Citral, Citronellal, Citronellyloxyacetaldehyd, Cyclamenaldehyd, Hydroxycitronellal, Lileal und Bourgeonal.

Zu den Ketonen zählen die lonone, α-Isomethylionon, und Methylcedrylketon. Zu den Alkoholen zählen Anethol, Citronellol, Eugenol, Geraniol, Linalool, Phenylethylalkohol und Terpineol. Zu den Kohlenwasserstoffen zählen hauptsächlich Terpene wie Limonen und Pinen. Bevorzugt werden Mischungen verschiedener Riechstoffe verwendet, die so aufeinander abgestimmt sind, dass sie gemeinsam eine ansprechende Duftnote erzeugen. Solche Parfümöle können auch natürliche Riechstoff-Gemische enthalten, wie sie aus pflanzlichen Quellen zugänglich sind. Beispiele sind Pine-, Citrus-, Jasmin-, Patchouli-, Rosen- oder Ylang-Ylang-Öl. Ebenfalls geeignet sind Muskatöl, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.

Üblicherweise liegt der Gehalt an Duftstoffen im Bereich bis zu 2 Gew.-% der gesamten Waschmittel-, Reinigungsmittel- oder Pflegemittel-Portion.

Die Duftstoffe können direkt in die waschaktive(n), reinigungsaktive(n) oder pflegeaktive(n) Zubereitung(en) eingearbeitet werden; es kann aber auch vorteilhaft sein, die Duftstoffe auf Träger aufzubringen, die die Haftung des Parfüms auf der Wäsche verstärken und durch eine langsamere Duftfreisetzung für lang-anhaltenden Duft von Textilien sorgen. Als solche Trägermaterialien haben sich beispielsweise Cyclodextrine bewährt. Dabei können die Cyclodextrin-Parfüm-Komplexe zusätzlich noch mit weiteren Hilfsstoffen beschichtet werden.

Die Parfüm- und Duftstoffe können grundsätzlich in jeder der Teil-Portionen (waschaktive oder reinigungsaktive oder pflegeaktive Zubereitungen) der Waschmittel-, Reinigungsmittel- oder Pflegemittel-Portionen enthalten sein. Besonders bevorzugt ist es jedoch, dass sie in einem Waschmittel in einer für den Nachwaschgang oder Weichspülgang vorgesehenen Teil-Waschmittel-Portion bzw. in einem Reinigungsmittel, besonders in einem Geschirr-Pflegemittel, in einer für den Nachspülgang bzw. Klarspülgang vorgesehenen Teil-Reinigungsmittel-Portion, speziell Teil-Pflegemittel-Portion, enthalten sind. Sie müssen daher erfindungsgemäß von einem nur bei den Bedingungen (insbesondere bei der Temperatur) des Nachwaschgangs bzw. Nach-Pflegegangs wasserlöslichen, bei den Bedingungen (insbesondere bei der Temperatur) der vorangehenden Waschgänge bzw. Spülgänge wasserunlöslichen Material des flexiblen, vorzugsweise elastischen, Hohlkörpers bzw. der Kompartimentierungs-Einrichtung(en) umfaßt sein. Erfindungsgemäß ist dies beispielsweise mit einer mehrere Kompartimente in einem flexiblen, vorzugsweise elastischen, Hohlkörper umfassenden Waschmittel-, Reinigungsmittel-oder Pflegemittel-Portion machbar.

Die Waschmittel-, Reinigungsmittel- oder Pflegemittel-Portionen enthalten in einem flexiblen, vorzugsweise elastischen, Hohlkörper mit und ohne Kompartimenten eine oder mehrere waschaktive, reinigungsaktive und/oder pflegeaktive Zubereitungen in solchen Mengen, dass sie für einen Wasch-, Reinigungs- und/oder Pflegevorgang ausreichen. Selbstverständlich ist eine Dosierung zweier Einheiten (Hohlkörper) unter besonderen Bedingungen (stark verschmutzte, z. B. stark fettverschmutzte Wäsche; stark angescmutztes Geschirr) möglich.

In einer besonders bevorzugten Ausführungsform der Erfindung umfaßt eine in einem oder mehreren flexiblen, vorzugsweise elastischen, Hohlkörper(n) mit wenigstens einem Kompartiment enthaltene Waschmittel-, Reinigungsmittel- oder Pflegemittel-Portion die mindestens eine, bevorzugt die mehreren, waschaktive(n), reinigungsaktive(n) oder pflegeaktive(n) Zubereitung(en) in einer oder mehreren Formen aus der Gruppe Pulver, Granulate, Extrudate, Pellets, Perlen, Tabletten, Tabs, Ringe, Blöcke, Briketts, Lösungen, Schmelzen, Gele, Suspensionen, Dispersionen, Emulsionen, Schäume und Gase. Bevorzugt sind Gele und am meisten bevorzugt sind flüssige Wasch-, Reinigungs-, und/oder Pflegemittel. Der Form der in einem oder mehreren Kompartimenten des flexiblen, vorzugsweise elastischen, Hohlkörpers enthaltenen waschaktiven, reinigungsaktiven und/oder pflegeaktiven Zubereitung ist also keine Grenze gesetzt, solange sich der Hohlkörper in der vorgesehenen Weise verwenden läßt. Dabei ist es als ein wesentlicher Vorteil der Erfindung anzusehen, dass erstmals die Verwendung von fluiden Phasen in Waschmittel-, Reinigungsmittel- und/oder Pflegemittel-Portionen möglich wird und eine für die Darreichung solcher fluider Phasen geeignete Waschmittel-, Reinigungsmittel- und/oder Pflegemittel-Portion bereitgestellt wird. So können in den Kompartimenten eines Hohlkörpers Flüssigkeiten, Gele, Gase oder Schäume allein oder zusammen mit festen Bestandteilen in einem oder mehreren Kompartimenten verschlossen und bei Gebrauch mit den zu waschenden, zu reinigenden oder zu Pflegenden Gegenständen in Kontakt gebracht werden. Damit wird eine neue Freiheit der Konfektionierung von Waschmitteln, Reinigungsmitteln bzw. Pflegemitteln erreicht.

Die hier offenbarten Waschmittel-, Reinigungsmittel- oder Pflegemittel-Portionen bestehen aus einer äußeren Hohlform, die eine oder mehrere Füllungen enthält. Dabei kann die Hohlform durch Scheidewände in mehrere Kompartimente unterteilt sein, wodurch mehrere Füllungen innerhalb desselben Hohlkörpers getrennt voneinander vorliegen können. An die Füllungen werden dabei außer an die Verträglichkeit mit dem Material der Hohlform keinerlei Anforderungen gestellt, so dass sich sowohl feste als auch flüssige Phasen-(systeme) portionieren lassen.

Bevorzugt lassen sich die erfindungsgemäßen Wasch-, Reinigungs- und/oder Pflegemittel-Portionen durch ihre Aufteilung in mehrere getrennte Bereiche für die Trennung inkompatibler Wirkstoffe nutzen. Die nachstehende Tabelle gibt einen nicht einschränkenden Überblick über mögliche Wirkstoffe und ihre Aufteilung in unterschiedliche Kompartimente. Dabei wurde zusätzlich angegeben, in welcher Konfektionierung die entsprechende Zubereitung im Kompartiment (A) oder (B) enthalten ist.

| **Kompartiment (A)** | **Kompartiment (B)** |
|---|---|
| Bleichmittel (pulverförmige Zubereitung) | Bleichaktivator (flüssige Zubereitung) |
| Bleichmittel (pulverförmige Zubereitung) | Enzyme (flüssige Zubereitung) |
| Bleichmittel (pulverförmige Zubereitung) | Farb- und Duftstoffe (flüssige Zubereitung) |
| Bleichmittel (pulverförmige Zubereitung) | optische Aufheller (flüssige Zubereitung) |
| Bleichmittel (pulverförmige Zubereitung) | Silberschutzmittel (flüssige Zubereitung) |
| Bleichmittel (granulare Zubereitung) | Bleichaktivator (flüssige Zubereitung) |
| Bleichmittel (granulare Zubereitung) | Enzyme (flüssige Zubereitung) |
| Bleichmittel (granulare Zubereitung) | Farb- und Duftstoffe (flüssige Zubereitung) |
| Bleichmittel (granulare Zubereitung) | optische Aufheller (flüssige Zubereitung) |
| Bleichmittel (granulare Zubereitung) | Silberschutzmittel (flüssige Zubereitung) |
| Bleichmittel (extrudierte Zubereitung) | Bleichaktivator (flüssige Zubereitung) |
| Bleichmittel (extrudierte Zubereitung) | Enzyme (flüssige Zubereitung) |
| Bleichmittel (extrudierte Zubereitung) | Farb- und Duftstoffe (flüssige Zubereitung) |
| Bleichmittel (extrudierteZubereitung) | optische Aufheller (flüssige Zubereitung) |
| Bleichmittel (extrudierte Zubereitung) | Silberschutzmittel (flüssige Zubereitung) |
| Bleichmittel (pulverförmige Zubereitung) | Bleichaktivator (pulverförmige Zubereitung) |
| Bleichmittel (pulverförmige Zubereitung) | Enzyme (pulverförmige Zubereitung) |
| Bleichmittel (pulverförmige Zubereitung) | Farb- und Duftstoffe (pulverförmige Zubereitung) |
| Bleichmittel (pulverförmige Zubereitung) | optische Aufheller pulverförmige Zubereitung) |
| Bleichmittel (pulverförmige Zubereitung) | Silberschutzmittel (pulverförmige Zubereitung) |
| Bleichmittel (granulare Zubereitung) | Bleichaktivator (pulverförmige Zubereitung) |
| Bleichmittel (granulare Zubereitung) | Enzyme (pulverförmige Zubereitung) |
| Bleichmittel (granulare Zubereitung) | Farb- und Duftstoffe (pulverförmige Zubereitung) |
| Bleichmittel (granulare Zubereitung) | optische Aufheller (pulverförmige Zubereitung) |
| Bleichmittel (granulare Zubereitung) | Silberschutzmittel (pulverförmige Zubereitung) |
| Bleichmittel (extrudierte Zubereitung) | Bleichaktivator (pulverförmige Zubereitung) |
| Bleichmittel (extrudierte Zubereitung) | Enzyme (pulverförmige Zubereitung) |
| Bleichmittel (extrudierte Zubereitung) | Farb- und Duftstoffe (pulverförmige Zubereitung) |
| Bleichmittel (extrudierteZubereitung) | optische Aufheller (pulverförmige Zubereitung) |
| Bleichmittel (extrudierte Zubereitung) | Silberschutzmittel (pulverförmige Zubereitung) |
| Bleichmittel (pulverförmige Zubereitung) | Bleichaktivator (granulare Zubereitung) |
| Bleichmittel (pulverförmige Zubereitung) | Enzyme (granulare Zubereitung) |
| Bleichmittel (pulverförmige Zubereitung) | Farb- und Duftstoffe (granulare Zubereitung) |
| Bleichmittel (pulverförmige Zubereitung) | optische Aufheller (granulare Zubereitung) |
| Bleichmittel (pulverförmige Zubereitung) | Silberschutzmittel (granulare Zubereitung) |
| Bleichmittel (granulare Zubereitung) | Bleichaktivator (granulare Zubereitung) |
| Bleichmittel (granulare Zubereitung) | Enzyme (granulare Zubereitung) |
| Bleichmittel (granulare Zubereitung) | Farb- und Duftstoffe (granulare Zubereitung) |
| Bleichmittel (granulare Zubereitung) | optische Aufheller (granulare Zubereitung) |
| Bleichmittel (granulare Zubereitung) | Silberschutzmittel (granulare Zubereitung) |
| Bleichmittel (extrudierte Zubereitung) | Bleichaktivator (granulare Zubereitung) |
| Bleichmittel (extrudierte Zubereitung) | Enzyme (granulare Zubereitung) |
| Bleichmittel (extrudierte Zubereitung) | Farb- und Duftstoffe (granulare Zubereitung) |
| Bleichmittel (extrudierteZubereitung) | optische Aufheller (granulare Zubereitung) |
| Bleichmittel (extrudierte Zubereitung) | Silberschutzmittel (granulare Zubereitung) |
| Bleichmittel (pulverförmige Zubereitung) | Bleichaktivator (extrudierte Zubereitung) |
| Bleichmittel (pulverförmige Zubereitung) | Enzyme (extrudierte Zubereitung) |
| Bleichmittel (pulverförmige Zubereitung) | Farb- und Duftstoffe (extrudierte Zubereitung) |
| Bleichmittel (pulverförmige Zubereitung) | optische Aufheller (extrudierte Zubereitung) |
| Bleichmittel (pulverförmige Zubereitung) | Silberschutzmittel (extrudierte Zubereitung) |
| Bleichmittel (granulare Zubereitung) | Bleichaktivator (extrudierte Zubereitung) |
| Bleichmittel (granulare Zubereitung) | Enzyme (extrudierte Zubereitung) |
| Bleichmittel (granulare Zubereitung) | Farb- und Duftstoffe (extrudierte Zubereitung) |
| Bleichmittel (granulare Zubereitung) | optische Aufheller (extrudierte Zubereitung) |
| Bleichmittel (granulare Zubereitung) | Silberschutzmittel (extrudierte Zubereitung) |
| Bleichmittel (extrudierte Zubereitung) | Bleichaktivator (extrudierte Zubereitung) |
| Bleichmittel (extrudierte Zubereitung) | Enzyme (extrudierte Zubereitung) |
| Bleichmittel (extrudierte Zubereitung) | Farb- und Duftstoffe (extrudierte Zubereitung) |
| Bleichmittel (extrudierteZubereitung) | optische Aufheller (extrudierte Zubereitung) |
| Bleichmittel (extrudierte Zubereitung) | Silberschutzmittel (extrudierte Zubereitung) |
| Tenside (flüssige Zubereitung) | Bleichaktivator (flüssige Zubereitung) |
| Tenside (flüssige Zubereitung) | Enzyme (flüssige Zubereitung) |
| Tenside (flüssige Zubereitung) | Farb- und Duftstoffe (flüssige Zubereitung) |
| Tenside (flüssige Zubereitung) | optische Aufheller (flüssige Zubereitung) |
| Tenside (flüssige Zubereitung) | Silberschutzmittel (flüssige Zubereitung) |
| Tenside (pulverförmige Zubereitung) | Bleichaktivator (flüssige Zubereitung) |
| Tenside (pulverförmige Zubereitung) | Enzyme (flüssige Zubereitung) |
| Tenside (pulverförmige Zubereitung) | Farb- und Duftstoffe (flüssige Zubereitung) |
| Tenside (pulverförmige Zubereitung) | optische Aufheller (flüssige Zubereitung) |
| Tenside (pulverförmige Zubereitung) | Silberschutzmittel (flüssige Zubereitung) |
| Tenside (granulare Zubereitung) | Bleichaktivator (flüssige Zubereitung) |
| Tenside (granulare Zubereitung) | Enzyme (flüssige Zubereitung) |
| Tenside (granulare Zubereitung) | Farb- und Duftstoffe (flüssige Zubereitung) |
| Tenside (granulare Zubereitung) | optische Aufheller (flüssige Zubereitung) |
| Tenside (granulare Zubereitung) | Silberschutzmittel (flüssige Zubereitung) |
| Tenside (extrudierte Zubereitung) | Bleichaktivator (flüssige Zubereitung) |
| Tenside (extrudierte Zubereitung) | Enzyme (flüssige Zubereitung) |
| Tenside (extrudierte Zubereitung) | Farb- und Duftstoffe (flüssige Zubereitung) |
| Tenside (extrudierteZubereitung) | optische Aufheller (flüssige Zubereitung) |
| Tenside (extrudierte Zubereitung) | Silberschutzmittel (flüssige Zubereitung) |
| Tenside (flüssige Zubereitung) | Bleichaktivator (granulare Zubereitung) |
| Tenside (flüssige Zubereitung) | Enzyme (granulare Zubereitung) |
| Tenside (flüssige Zubereitung) | Farb- und Duftstoffe (granulare Zubereitung) |
| Tenside (flüssige Zubereitung) | optische Aufheller (granulare Zubereitung) |
| Tenside (flüssige Zubereitung) | Silberschutzmittel (granulare Zubereitung) |
| Tenside (pulverförmige Zubereitung) | Bleichaktivator (pulverförmige Zubereitung) |
| Tenside (pulverförmige Zubereitung) | Enzyme (pulverförmige Zubereitung) |
| Tenside (pulverförmige Zubereitung) | Farb- und Duftstoffe (pulverförmige Zubereitung) |
| Tenside (pulverförmige Zubereitung) | optische Aufheller (pulverförmige Zubereitung) |
| Tenside (pulverförmige Zubereitung) | Silberschutzmittel (pulverförmige Zubereitung) |
| Tenside (granulare Zubereitung) | Bleichaktivator (pulverförmige Zubereitung) |
| Tenside (granulare Zubereitung) | Enzyme (pulverförmige Zubereitung) |
| Tenside (granulare Zubereitung) | Farb- und Duftstoffe (pulverförmige Zubereitung) |
| Tenside (granulare Zubereitung) | optische Aufheller (pulverförmige Zubereitung) |
| Tenside (granulare Zubereitung) | Silberschutzmittel (pulverförmige Zubereitung) |
| Tenside (extrudierte Zubereitung) | Bleichaktivator (pulverförmige Zubereitung) |
| Tenside (extrudierte Zubereitung) | Enzyme (pulverförmige Zubereitung) |
| Tenside (extrudierte Zubereitung) | Farb- und Duftstoffe (pulverförmige Zubereitung) |
| Tenside (extrudierteZubereitung) | optische Aufheller (pulverförmige Zubereitung) |
| Tenside (extrudierte Zubereitung) | Silberschutzmittel (pulverförmige Zubereitung) |
| Tenside (flüssige Zubereitung) | Bleichaktivator (granulare Zubereitung) |
| Tenside (flüssige Zubereitung) | Enzyme (granulare Zubereitung) |
| Tenside (flüssige Zubereitung) | Farb- und Duftstoffe (granulare Zubereitung) |
| Tenside (flüssige Zubereitung) | optische Aufheller (granulare Zubereitung) |
| Tenside (flüssige Zubereitung) | Silberschutzmittel (granulare Zubereitung) |
| Tenside (pulverförmige Zubereitung) | Bleichaktivator (granulare Zubereitung) |
| Tenside (pulverförmige Zubereitung) | Enzyme (granulare Zubereitung) |
| Tenside (pulverförmige Zubereitung) | Farb- und Duftstoffe (granulare Zubereitung) |
| Tenside (pulverförmige Zubereitung) | optische Aufheller (granulare Zubereitung) |
| Tenside (pulverförmige Zubereitung) | Silberschutzmittel (granulare Zubereitung) |
| Tenside (granulare Zubereitung) | Bleichaktivator (granulare Zubereitung) |
| Tenside (granulare Zubereitung) | Enzyme (granulare Zubereitung) |
| Tenside (granulare Zubereitung) | Farb- und Duftstoffe (granulare Zubereitung) |
| Tenside (granulare Zubereitung) | optische Aufheller (granulare Zubereitung) |
| Tenside (granulare Zubereitung) | Silberschutzmittel (granulare Zubereitung) |
| Tenside (extrudierte Zubereitung) | Bleichaktivator (granulare Zubereitung) |
| Tenside (extrudierte Zubereitung) | Enzyme (granulare Zubereitung) |
| Tenside (extrudierte Zubereitung) | Farb- und Duftstoffe (granulare Zubereitung) |
| Tenside (extrudierteZubereitung) | optische Aufheller (granulare Zubereitung) |
| Tenside (extrudierte Zubereitung) | Silberschutzmittel (granulare Zubereitung) |
| Tenside (flüssige Zubereitung) | Bleichaktivator (extrudierte Zubereitung) |
| Tenside (flüssige Zubereitung) | Enzyme (extrudierte Zubereitung) |
| Tenside (flüssige Zubereitung) | Farb- und Duftstoffe (extrudierte Zubereitung) |
| Tenside (flüssige Zubereitung) | optische Aufheller (extrudierte Zubereitung) |
| Tenside (flüssige Zubereitung) | Silberschutzmittel (extrudierte Zubereitung) |
| Tenside (pulverförmige Zubereitung) | Bleichaktivator (extrudierte Zubereitung) |
| Tenside (pulverförmige Zubereitung) | Enzyme (extrudierte Zubereitung) |
| Tenside (pulverförmige Zubereitung) | Farb- und Duftstoffe (extrudierte Zubereitung) |
| Tenside (pulverförmige Zubereitung) | optische Aufheller (extrudierte Zubereitung) |
| Tenside (pulverförmige Zubereitung) | Silberschutzmittel (extrudierte Zubereitung) |
| Tenside (granulare Zubereitung) | Bleichaktivator (extrudierte Zubereitung) |
| Tenside (granulare Zubereitung) | Enzyme (extrudierte Zubereitung) |
| Tenside (granulare Zubereitung) | Farb- und Duftstoffe (extrudierte Zubereitung) |
| Tenside (granulare Zubereitung) | optische Aufheller (extrudierte Zubereitung) |
| Tenside (granulare Zubereitung) | Silberschutzmittel (extrudierte Zubereitung) |
| Tenside (extrudierte Zubereitung) | Bleichaktivator (extrudierte Zubereitung) |
| Tenside (extrudierte Zubereitung) | Enzyme (extrudierte Zubereitung) |
| Tenside (extrudierte Zubereitung) | Farb- und Duftstoffe (extrudierte Zubereitung) |
| Tenside (extrudierteZubereitung) | optische Aufheller (extrudierte Zubereitung) |
| Tenside (extrudierte Zubereitung) | Silberschutzmittel (extrudierte Zubereitung) |

### Extrusionsblasen

Es wurde in einem Extruder plastifizierbare Polymermasse (Blasformmasse) basierend auf einem wasserlöslichen polymeren Thermoplast in einen schlauchförmigen Vorformling umgebildet. Ein offenes Ende des Schlauches wurde unter thermischer Behandlung geschlossen. Danach wurde der Vorformling aufgeblasen, wobei die Druckluft durch einen Blasdorn zugeführt wurde, der gleichzeitig auch die Öffnung des erfindungsgemäßen Blasformkörpers ausbildete. Der Blasformkörper wurde befüllt und entformt.

Kompartimente lassen sich beispielsweise dadurch erzeugen, indem an vorbestimmten Stellen der Wandung(en) des noch formbaren Blasformkörpers, durch entsprechende Einrichtungen in der Blasform, diese unter Ausbildung von Unterteilungen, d.h. geschlossenen Hohlräumen, zusammenführt und flüssigkeitsdicht, vorzugsweise durch thermische Behandlung, verbindet. Es können aber auch Vorformlinge verwendet werden, mit separaten.Hohlräumen, die dann zu einem Blasformkörper mit mehreren Kompartimenten blasgeformt werden. Es können aber auch mehrere Hohlkörper mit und ohne Kompartiment kombiniert werden.

### Coextrusionsblasen

Bei dieser Sonderform des Extrusionsblasen werden die Hohlkörper mit und ohne Kompartimenten aus mehreren Materialschichten hergestellt. Der Vorformling wird erzeugt, indem mehrere Extruder auf ein gemeinsames Schlauchwerkzeug einwirken, so dass ein Vorformling mit mehreren Schichten entsteht, der dann zum Hohlkörper blasgeformt wird.

### Spritz-Streckblasen

Im Unterschied zum Extrusionsblasen wird der Vorformling mittels Spritzguß hergestellt. Nach Übergabe in eine Konditionierstation wird der noch nicht abgekühlte Vorformling in ein Blaswerkzeug überführt und dort durch Anlegen einer mechanischen Kraft axial vorverstreckt und mit hohem Luftdruck zum Hohlkörper aufgeblasen, so dass eine Verstreckung erfolgt.

Der Gegenstand der Erfindung wird anhand der nachfolgenden Beispiele näher erläutert, wobei diese nicht beschränkend für den erfindungsgemäßen Gestand zu verstehen sind.

### BEISPIEL 1:

Zunächst wurde eine 500-ml-EURO-Bottle (eine der Henkel-Standardflaschenformen für beispielsweise flüssige Reinigerrezepturen) aus einem kaltwasserlöslichen PVA-Blend der Fa. Texas Polymers, U.S.A., Type "Vinex 2034" geblasen. Der Melt Flow Index des verwendeten thermoplastischen Materials beträgt laut Spezifikation im Katalog 6-8 (2,16 kg; 230-C).

Dazu kam eine Blasformmaschine "Bekum BM 201" zum Einsatz, und zwar mit einer Extruderschnecke "S 531" (50 mm-Durchmesser; Längen-zu-Durchmesser-Verhältnis von 20) und einer ovalisierten Blasform. Die Polymerpellets wurden bei einer Schneckendrehzahl von 20 U/min eingezogen. Das Temperaturprofil im Extruder war ansteigend vom Einzug zum Düsenkopf eingestellt (Zone 1: 150 °C; Zonen 2+3: 160 °C; Flansch: 170 °C; Kopf: 182 °C; Düse: 185 °C). Die Zykluszeit betrug 10 sec. Das Flaschengewinde am oberen Ende des Artikels mußte mit einem Warmschneider abgetrennt werden.

Die Wandstärken der hier gefertigten Flaschen betragen exemplarisch 0,2 mm im Umfang, 0,6 mm am verstärkten Flaschenboden sowie 0,8 mm im Bereich des Flaschengewindes.
Die Flasche wurde exemplarisch mit einer wasserarmen Reinigungsmittelzusammensetzung (Tabelle 1) befüllt.

**Tabelle 1**

| **Wasserarme Reinigungsmittelrezeptur [%]:** | |
|---|---|
| Natriumcarbonat | 16,0 |
| Natriumtripolyphosphat | 71,7 |
| Natriumperborat | 5,0 |
| Tetraacetylethylendiamin | 1,25 |
| Benzotriazol | 0,5 |
| C12-Fettalkohol mit 3 EO | 1,25 |
| Farbstoff | 0,1 |
| Enzyme | 3,0 |
| Parfüm | 0,2 |
| Silikonöl | 1,0 |

Im Anschluß wurde die PVA-Flasche mit einem ebenfalls kaltwasserlöslichen PVA-Schraubdeckelverschluß (0,5 mm Wandstärke zwischen den Gewindesteigungen) flüssigkeitsdicht verschlossen. Der verwendete Schraubdeckel war dazu aus einem geeigneten PVA-Blend ebenfalls der Fa. Texas Polymers, U.S.A., Type "Vinex 2019" (MFI 26-30; 2,16 kg; 190 °C), auf einer hydraulischen Schneckenspritzgußmaschine der Fa. Arburg spritzgegossen worden.

Die Körper wurden mechanischen Belastungstests, welche üblicherweise zur Auslegung von Umverpackungen herangezogen werden, unterzogen, und zwar unter Verwendung einer Universalprüfmaschine der Fa. Zwick, Typ 1425.
Da PVA-Material in seinem Wassergehalt bekanntermaßen mit der relativen Feuchte der umgebenden Luft im Gleichgewicht steht, wurde die Reproduzierbarkeit der mechanischen Messungen erhöht, indem die gefertigten Artikel über Nacht auf ein Standardklima von 23·C und 50% rel. Feuchte konditioniert wurden.

Es ergaben sich die Meßwerte wie folgt:
- Verformungsarbeit w und Rückstellgeschwindigkeit v der unbefüllten Flasche bei einem Stauchweg von 22 mm entlang der kürzesten Achse
   (Flasche liegend; Eindrückversuch mit 8 mm-Rundstab; Kraft F₁ = 16 N):
   w = 0,17 Nm.
   v = 73 mm/min.
- Verformungsarbeit w und Rückstellgeschwindigkeit v der befüllten Flasche bei einem Stauchweg von 22 mm entlang der kürzesten Achse
   (Flasche liegend; Eindrückversuch mit 8 mm-Rundstab; Kraft F₁ = 70 N):
   w = 0,67 Nm.
   v = 53 mm/min.
- Stauchwiderstand nach DIN 55526.1 (befüllte Flasche stehend, Füllgrad ca. 90%):
   Fₘₐₓ = 82,5 N
- Streckspannung R_{S} bei 66 % Dehnung: 10,0 +/- 2,4 N/mm².

### BEISPIEL 2:

An einer Blow-Fill-Seal-Maschine wurde eine kaltwasserlösliche 50-ml-Flüssigwaschmittel-Anwendung in einer PVA-Hülle mit exemplarisch 0,08 mm Wandstärke als fertiger Artikel in-line-hergestellt.

Alternativ standen dazu mit zwei unterschiedlichen Werkzeugen zwei geometrische Formen zur Verfügung, nämlich eine Kugel mit 48 mm-Außendurchmesser und eine längliche, abgerundete und abgeflachte Kissenform (lichte Maße 45 mm x 60 mm, 25 mm hoch).

Dazu wurde zunächst der aus dem PVA-Blend extrudierte Külbel in die geöffnete Blasform vorgeschoben und der schlauchförmige Vorformling mittels eines Schneideisens (Warmschneider) unterhalb der Form abgeschnitten.

In einem nachgeschalteten Schritt wurde die Form geschlossen, wodurch gleichzeitig am Boden des Vorformlings über die Klemmwirkung thermisch versiegelt wurde. Mittels einer integrierten Blas- und Füll-Pinoleneinheit, in den Halsbereich des Vorformlings im Werkzeug eingeführt, wurde mittels Preßluft der Vorformling an die kugel- resp. kissenförmigen Matrizenwände des Werkzeugs ausgeformt. Alternativ konnte hier aufgrund der kleinvolumigen Kavität der Vorformling auch mittels eines innen an die Form angelegten Vakuums in diese hineingezogen werden.

Ein mittels einer Dosierung genau vorgelegtes Volumen, hier exemplarisch 50 ml, einer wasserarmen Flüssigwaschmittelrezeptur (Zusammensetzung siehe Tabelle 2) wurde nun über die integrierte Blas- und Füll-Pinoleneinheit in die dünnwandige, kugel- resp. kissenförmige PVA-Hülle, hineinbefüllt.

Danach wurden zunächst die integrierte Blas- und Füll-Pinoleneinheit aus dem Werkzeug zurückgezogen und dann die oberen Backen des Werkzeugs so geschlossen, daß das erforderliche Verschließen der Hülle zu einem flüssigkeitsdichten PVA-Behälter über thermische Versiegelung erfolgte.

**Tabelle 2**

| **Wasserarme Flüssigwaschmittelrezeptur:** | |
|---|---|
| Wasser | 0,5-15 % |
| org. Lösungsmittel | zu 100 % |
| anionische Tenside | 15-30% |
| nichtionische Tenside | 15-30% |
| Alkohol | 0-5% |
| Seife | 10-25% |
| Komplexbilder | 0-5% |
| Verdicker | 0-5% |
| Enzyme | |
| - Protease | 0-5% |
| - Amylase | 0-5% |
| - Cellulase | 0-5% |
| Zusätze | |
| - Parfüm und Farbe | |

Die fertig entformten, befüllten Artikel wurden wie die im oberen Beispiel auf ihren Stauchwiderstand hin mechanisch geprüft, wobei hier der Einfachheit halber auf den Austausch des Flüssigwaschmittelrezepturinhaltes gegen Glycerin als für PVA bevorzugtes Prüfmedium verzichtet wurde.
Der Stauchwiderstand einer solchen kompletten Flüssigwaschmittelanwendung nach DIN 55526.1 (befülltes Kissen aufrecht stehend) ergab sich exemplarisch zu:
Fₘₐₓ = 430 N.

Die Freisetzung der Flüssigwaschmittelrezeptur aus den Artikeln wurde zunächst im Becherglastest (500 ml Wasser; 60 U/min Rührer) überprüft. Dabei ergab sich ein Austreten der angelösten PVA-Hülle nach ca. 18 min bei 30 °C, nach ca. 8 min bei 40 °C, nach ca. 2,5 min bei 60 °C und nach ca. 2 min bei 90 °C.
Dahingegen zeigte sich unter realen Bedingungen im Waschmaschinentest (Waschkugel hineingegeben in die Trommel), daß offenbar aufgrund der mechanischen Belastung, zusammen mit Wäsche, eine Freisetzung der Flüssigwaschmittelfüllung innerhalb der ersten 3 bis 4 Minuten erfolgte.

### BEISPIEL 3:

Mittels eines Doppelblasdorns wurden 2-kompartimentierte Artikel als PVA-Doppelkammerflaschen (mit und auch ohne senkrecht laufende Quetschnaht) aus PVA blasextrudiert und am Flaschenhals per Warmschneider abgeschnitten. Diese wurden im Anschluß per Hand bis etwas oberhalb der Mitte exemplarisch befüllt, nämlich auf der einen Seite mit der oben benannten wasserarmen Flüssigwaschmittelrezeptur, auf der anderen Seite mit einem festen Bleichesystem auf Basis Percarbonat der "Henkel-Megaperls"-Zusammensetzung. Im Anschluß wurde die oben überstehende PVA-Hülle mit teflonisierten Heißsiegelbacken eines Handsiegelgeräts bei 160 °C Siegeltemperatur flüssigkeitsdicht verschweißt und der Überstand abgestanzt, so daß ein Artikel mit ca. 90 vol.-% Füllgrad entstand.

### BEISPIEL 4:

Auf einer kontinuierlich umlaufenden Blow-Fill-Seal-Maschine der Firma Rommelag/Kocher-Plastik Typ "bottelpack-Anlage 4010M" (15 gleich ausgeführte Blasformwerkzeuge, jedes mit je 12 Multibloc-Kavitäten, auf kontinuierlich drehendem Rundläufer montiert) wurde PVA-Blend "Vinex 2034" der Firma Texas Polymers mit ansteigendem Temperaturprofil (180 °C Extruderzonen, 196 °C Blaskopf) im Extruder thermoplastisch aufgeschmolzen. Dabei zeigte es sich von Vorteil, wenn das PVA-Granulat mit nicht zu hoher Eigenfeuchte (unter Feuchteabschluß im Originalgebinde gelagert und daraus direkt entnommen oder, falls zu lange offen gelagert, mehrstündig vorgetrocknet bei 60 °C) dem Extruder zugeführt wurde.
Die bereits vollständig aufgeschmolzene, thermoplastische PVA-Schmelze wurde über Stützluft (innen/außen) am Blaskopf zu einem oval elongierten Schlauchvorformling (längere Ovalsreite über die Gesamtbreite des Blasformwerkzeuges von 300 mm, kürzere Ovalseite etwa 30mm breit) ausgeblasen. Dabei wurde der aus dem heißen Schlauchvorformling austretende überschüssige Wasserdampf über eine Absaugung am Blaskopf sowie optional zusätzlich über gegebene Spülluft abgeführt.
Mittels Pressluft (innen) und über Vakuumschlitze in den 12 nebeneinander angeordneten, identisch ausgeführten 17ml-Kavitäten wird nach Schließen des Werkzeuges der Schlauchvorformling in seine endgültige Form eines Multibloc-Hohlkörpers gezogen und die einzelnen Kavitäten über separate 12 Fülldorne mit Flüssigwaschmittelrezeptur (Tabelle 3) gefüllt.

**Tabelle 3**

| **Rohstoff** | **Menge in Gewichtsprozent** |
|---|---|
| Glycerin | 1,0 |
| Ethanol | 3,26 |
| Morlox MO 154 ^{[a]} | 22,5 |
| LAS-MEA ^{[b]} | 24,5 |
| Edenor K12-18 ^{[c]} | 17,5 |
| Dequest 2066 ^{[d]} | 0,6 |
| Polygel W30 ^{[e]} | optional 0,2 |
| Ethanolamin | 4,9 |
| BLAP S260 SLD2 ^{[f]} | 1,0 |
| Termamyl 300 LDX ^{[g]} | 0,2 |
| Carezym 4500L ^{[h]} | 0,06 |
| Wasser | 6,0 |
| Tinopal CBS-CL^{[i]} | 0,045 |
| Farbstoff | + |
| Parfum | + |
| Propylenglycol | ad 100 |

| | |
|---|---|
| ^{[a]} C₁₂₋₁₄-Fettalkohol+5-EO+4-PO ex Sasol ^{[b]} Dodecylbenzolsulfonsäure-Monoethanolamin-Salz ex Sasol ^{[c]} Kokosölfettsäure geschnitten (C₈₋₁₈-Fettsäure) ex Cognis ^{[d]} Diethylentriaminpentamethylenphosphonsäure-hepta-Natrium-Salz ex Solutia ^{[e]} Acryl-Copolymer, carboxylgruppenhaltig ex 3V Sigma ^{[f]} Protease ex Biozym ^{[g]} Amylase ex Novo ^{[h]} Cellulase ex Novo ^{[i]} Distyrylbiphenyl-Derivat, anionisch ex Ciba | |

Das endgültige Multibloc-Produkt, bestehend aus aneinanderhängenden, jedoch entlang seiner vertikalen Verbindungsstege wahlweise abtrennbarer 12 Einzelportionen mit Flüssigwaschmittel, wurde durch anschließendes Ausstanzen entlang der im Teilungsbereich des Werkzeuges entstandenen Kontur erhalten.
Dabei war jede 17 ml-Einzelportion in Form eines im 12er-Verbund aufrechtstehenden Eies als "Wash Egg" ausgeführt, mit Maßen wie folgt: Querschnitt 23 mm breit x 34 mm tief; Höhe 52 mm, davon 6 mm Bereich der zuletzt schließenden Kopfbacke oben; horizontale Teilungsbreite 25 mm, daß heißt Maß inclusive seitlich des Einzelhohlkörpers verlaufenden, vertikalen Verbindungsstegen. Dabei erzeugte eine mehrere Millimeter tiefe Gravur (testweise positiv und negativ ausgeführt) jeder Werkzeugkavität (in Form eines vertikal liegenden Brandings, ausgeführt als "Henkel"-Oval mit inneliegendem Schriftzug) einen, mechanisch relativ geschützten Bereich von durch den Blas-/Tiefziehschritt besonders ausgedünnten Wandstärken der PVA-Hülle (je nach Ausführungstiefe der Gravur) 10 bis 80 µm (bei einem Gesamthüllgewicht von 1,6 g), der als Sollbruchstelle im Zuge des anwendungstechnischen Löseprozesses in wässrigen Systemen fungierte; die experimentell in nachweislich beschleunigten Freisetzungszeiten der beinhalteten waschaktiven Zusammensetzung resultierte.

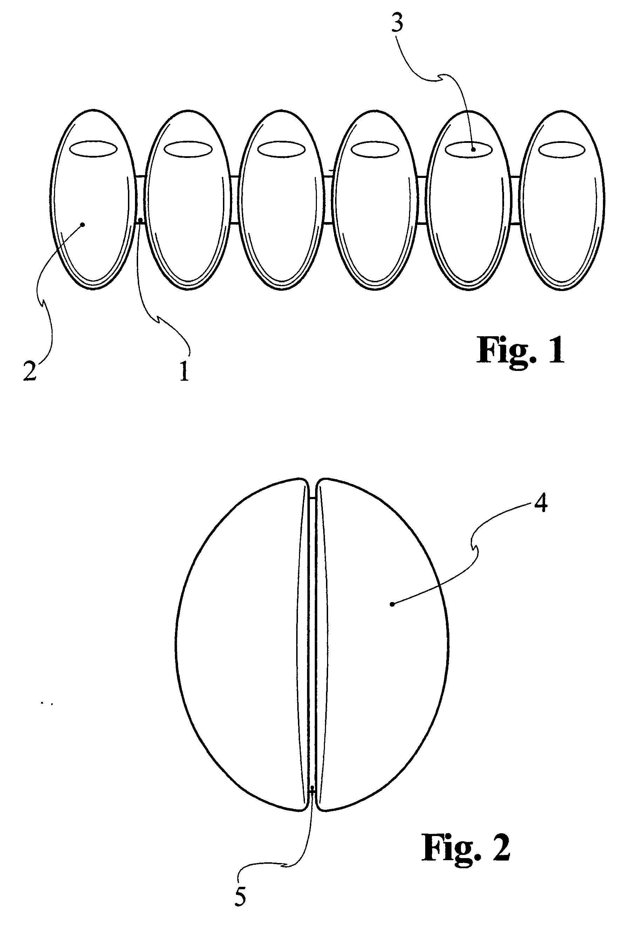

Figur 1 zeigt einen 6er Verbund erfindungsgemäß hergestellter Einzelportionen (2), die durch Verbindungsstege (1) miteinander verbunden sind. Die Portionen tragen jeweils eine Gravur (3).

Die beim Stanzvorgang endstandenen Blasformrückstände (Butzen etc.) wurden gesammelt und konnten mittels einer Schneidmühle der Firma Pallmann "Typ PS-K 300 x 500 S 3" unproblematisch zu voll recyclierbarem PVA-Granulat ohne Einschränkungen bezüglich der weiteren Verarbeitbarkeit im Vergleich zum frischen Rohstoff als Ware verwendet werden. Die mit diesem Einfachrecyclat (auch bei 100%-igem Recyclatanteil) erhaltenen Produkte erbrachten, da als gleichermaßen wasserlöslich bei diversen Temparaturen getestet, keinen Hinweis auf-etwaige Nachvernetzung (Nachvernetzung und der damit verbundene höhere Polymerisationsgrad hat eine Herabsetzung der Wasserlöslichkeit zur Folge) des Polyvinylalkohols durch die thermische Belastung im Herstellprozeß.

Die erhaltenen Produkte wurden anwendungstechnischen Lagertests erfolgreich unterzogen und erhielten ein Freigabe-Testat für alle Klimata, da sich sogar nach 3 Monaten keine negative Veränderung der Produkteigenschaften (etwaige Leckage; etwaige Veränderung der Haptik wie durch Ausschwitzen der Rezeptur, Herauslösen des PVA-Weichmachers, Unverträglichkeit der Hülle mit Rezepturbestandteilen wie Parfüm; etc.) bemerkbar machten.

Als weitere für die Anwendung relevante Prüfmethode kam u.a. ein mechanischer Belastungstest zum Einsatz. So wurde auf einer Prüfmaschine der Fa. Zwick für Stauchtests ein Eindrückversuch mit Rundstab ∅= 8 mm bei einem in der Höhe verfahrenen Prüfweg von 22 mm in Mehrfachbestimmung (Wiederholungsmessung an je einem Körper durch mehrfaches Abfahren desselben Prüfprogrammes) durchgeführt. Exemplarisch sei Tabelle 4 zu entnehmen, dass die getesteten Formkörper sich derart flexibel zeigten, dass der Eindrückvorgang ohne Schädigung mehrmals (hier: achtmal) wiederholt werden konnte, sogar derart, dass die Standardabweichung der Messung für diese Methode niedrig (hier: bei unter 20 % des Mittelwertes) lag.

**Tabelle 4**

| **Mehrfachbestimmung: jeweils n-ter Durchgang** | **Nach mehrtägiger Lagerzeit** | |
|---|---|---|
| | **F max [N]** | **Arbeit (Fmax) [Nm]** |
| 1. | 2,1 | 0,023 |
| 2. | 1,3 | 0,014 |
| 3. | 1,9 | 0,021 |
| 4. | 1,4 | 0,015 |
| 5. | 1,3 | 0,014 |
| 6. | 1,5 | 0,017 |
| 7. | 1,7 | 0,019 |
| 8. | 1,6 | 0,018 |
| **Mittelwerte** | **1,6** | **0,018** |
| **Standardabweichung** | **0,3** | **0,003** |
| **Standardabweichung [%]** | **18,8** | **16,7** |

### BEISPIEL 5:

Auf einer diskontinuierlichen, getackteten Tandem-Blow-Fill-Seal-Maschine der Firma Rommelag/Kocher-Plastik Typ "bottelpack-Anlage 360 M" (mit Mehrfachblaskopf, parallel angetrömt; mit alternierend von den Blasschlauchvorformlingen angefahrenen Zwillingswerkzeugstationen, beidseitig vom Blaskopf positioniert) wurden in unterschiedlichen Läufen PVA-Blends der Firma Clariant (resp. Kuraray KSE als Rechtsnachfolger), nämlich "L 734", "L 726", "Mowiflex LPTC 221") mit gleichmäßigem wie auch ansteigendem Temperaturprofil (180 bis 190 °C Extruderzonen, 180 bis 196 °C Blaskopf) im Extruder thermoplastisch aufgeschmolzen und zu sechs Schlauchvorformlingen gleichzeitig ausgeblasen.
Diese kontinuierlich geblasenen sechs Einzelschläuche wurden jeweils alternierend von einem der beiden Tandem-Werkzeuge mit je sechs getrennt nebeneinanderliegenden, identisch gestalteten Kavitäten zum Blow-Fill-Seal-Schritt mit anschließendem Stanzschritt übernommen. Dabei entstanden bei jedem Arbeitstakt je sechs einzelne, zweikompartimentierte Portionen zu je 2mal 25 ml Füllnutzvolumen (Höhe der Doppeleier 55 mm, davon 4 mm Kopfbackenschweißung oben), indem jede in die jeweilige Einzelkavität ausgeformte PVA-Hülle durch mittige Klemmung/Schweißung in vertikaler Achse eine als vertikalen Steg verlaufende Unterteilung in zwei Kammern erhielt.
Figur 2 zeigt eine zweikompartimentierte Portion indem jede in die jeweilige Einzelkavität ausgeformte PVA-Hülle durch mittige Klemmung/Schweißung in vertikaler Achse eine als vertikalen Steg verlaufende Unterteilung (5) in zwei Kammern (4) erhielt.

Die jeweiligen Doppelkammersysteme wurden sodann unterschiedlich auf ihren beiden Seiten befüllt, auf der einen Seite jeweils mit einer geligen, pastösen Geschirrspülmittelrezeptur, auf der anderen Seite mit einer Klarspültensidformulierung als Zusatznutzen für den Kunden.

### BEISPIEL 6:

Auf einer diskontinuierlich getackteten Blow-Fill-Seal-Maschine der Firma Rommelag/Kocher-Plastik Typ "bottelpack-Anlage 2012" (mit Vierfachblaskopf, sequentiell angeströmt) wurde in unterschiedlichen Läufen PVA-Blend "KSE Mowiflex LPTC 221" mit gleichmäßigem wie auch ansteigendem Temperaturprofil (180 °C Extruderzonen, 180 bis 196 °C Blaskopf) im Extruder thermoplastisch aufgeschmolzen und zu vier Schlauchvorformlingen gleichzeitig ausgeblasen. Dabei erwiesen sich schnellere Extruderdrehzahlen im Bereich oberhalb von 50 U/min im Vergleich zu langsam drehenden im Bereich von 5 U/min als günstig, um ein vollständiges Aufschmelzen ohne Stippenbildung zu gewährleisten.
Die Verweilzeit der Blasformmasse betrug 3 min, um beginnende Nachvernetzung des PVA zu unterbinden. Nach dieser Maßnahme konnte keine thermische Schädigung des Materials mehr nachgewiesen werden, was sich in einem gleichbleibenden Molekulargewicht (Bestimmung per GPC zu ca. 70.000 g/mol) des Rohstoffes im Vergleich zu den einzelnen vier Schlauchabschnitten im Bereich der Messungsstreubreite selber ausdrückte.
Es wurden in diesem Fall Flüssigwaschmittelportionen in Form von beidseitig mit dem "Henkel"-Oval resp. "Liquits"-Schriftzug als Sollbruchstelle (per 4 mm-tiefer Gravur) gebrandeten Kugeln mit einem Außendurchmesser von 47,7 mm hergestellt. Pro Kugel wurden 50 ml Flüssigwaschmittelrezeptur aus Tabelle 3 abgefüllt. Das gesamte Hüllgewicht betrug in einem Versuch 1,5 g und in einem zweiten 1,1 g.
Dabei war es möglich, in allen vier Kavitäten sehr regelmäßig ausgeformte Produkte zu erhalten, wie aus folgender Tabelle 5 für die 1,5 g-Kugelhülle ersichtlich.

**Tabelle 5**

| **Wandstärke [mm]** | **Kavität Nr.** | | | |
|---|---|---|---|---|
| | **(1)** | **(2)** | **(3)** | **(4)** |
| Bodenbacke | 0,28 | 0,30 | 0,32 | 0,30 |
| Gravur: "Henkel"-Oval | 0,12 | 0,09 | 0,13 | 0,10 |
| Gravur: "Henkel"-Schriftzug | 0,07 | 0,05 | 0,09 | 0,08 |

Über eine sogenannte SWDR-Spindel am Blaskopf zur Schlauchwanddickenregulierung konnten über die gesamte Hohlkörperoberfläche hinweg noch weiter optimierte Wandstärkenverteilungsbreiten (inclusive Boden- und Kopfbackenbereich) erzeugt werden.
Doch auch ohne dies lagen im anwendungstechnischen Lösetest in Wasser (Becherglas sowie Konvektionsbecken) die Freisetzungzeiten sowie die Gesamtlösezeiten bei 30, 40, 60 und 90 °C im Bereich handelsüblicher Flüssigwaschmittelportionsbeutel, wobei insbesondere die Freisetzungszeit - offenbar auch aufgrund der vorhandenen Sollbruchstellen - mindestens halbiert war, was eine noch schnellere Wirksamkeit des waschaktiven Inhaltes bedeutete.
Die mechanische Prüfung ergab erneut eine hohe Flexibilität wie Belastbarkeit der geprüften Körper, wie beispielhaft anhand einer Wiederholungsprüfung für eine gefüllte Kugel mit 1,5 g Hüllgewicht in folgender Tabelle 6 dargestellt.

**Tabelle 6**

| **Eindrückversuch mit Rundstab** ∅= **8 mm, 22 mm Prüfweg, auf Zwick-Prüfmaschine** | | |
|---|---|---|
| **Mehrfachbestimmung: jeweils n-ter Durchgang** | **Nach mehrtägiger Lagerzeit** | |
| | F max [N] | Arbeit (Fmax) [Nm] |
| 1. | 16,6 | 0,108 |
| 2. | 16,8 | 0,106 |
| 3. | 16,7 | 0,105 |
| <c | 16,6 | 0,104 |
| 5. | 16,7 | 0,104 |
| 6. | 16,8 | 0,105 |
| 7. | 16,8 | 0,104 |
| 8. | 16,8 | 0,104 |
| **Mittelwert** | 16,7 | 0,105 |
| **Standardabweichung** | **0,1** | **0,001** |
| **Standardabweichung [%]** | **0,6** | **0,9** |

Weiterhin wurden Fallversuche in konfektionierten Verkaufsverpackungen zu je 12 Stück lose gelagert in einem Polyethylenbeutel, der sich wiederum in einem Karton befindet, durchgeführt. Die erfindungsgemäßen Portionen haben einen Sturz aus einer Fallhöhe von 2 m ohne das Auftreten von Schäden oder Leckagen problemlos überstanden.
Die nachstehende Tabelle 7 zeigt die, im Vergleich zu einem handelsüblichen Produkt in einem wasserlöslichen Folienbeutel deutlich verringerte, Freisetzungszeit t [s] der Waschmittelformulierung in die Waschflotte bei unterschiedlichen Temperaturen T [°C]. Ein handelsüblicher Waschmittelportionsbeutel aus PVA und der erfindungsgemäß hergestellte mit Flüssigwaschmittel (Tabelle 3) befüllte Hohlkörper werden jeweils in einen Metallkorb eingespannt und in ein Becken mit 15 Liter temperiertem Wasser gegeben, so daß die jeweilige Waschmittelportion vollständig mit Wasser bedeckt ist. Der Metallkorb wird mit einer Rührvorrichtung verknüpft und mit einer Drehzahl von 30 Umdrehungen pro Minute rotiert. Das Wasser in dem Becken wird mit einem Flügelrührer mit einer Umdrehungszahl von 350 Umdrehungen pro Minute gerührt. Die gemessene Freisetzungszeit ist der Zeitraum, der benötigt wird bis das erste mal die Freisetzung des Waschmittelprodukts visuell beobachtet wird.

**Tabelle 7**

| | **T=30 °C** | **T=40 °C** | **T=60 °C** | **T=90 °C** |
|---|---|---|---|---|
| Handelsüblicher Portionsbeutel aus PVA mit Flüssigwaschmittel | t =93 s | t =58 s | t =28 s | t =14 s |
| Erfindungsgemäße Waschmittelportion | t = 45 s | t = 38 s | t = 15 s | t = 5 s |

Die Freisetzungszeit für die hergestellten Portionen ist wesentlich geringer als die der handelsüblichen wasserlöslichen Flüssigwaschmittelportionsbeutel.

## Patentansprüche

1. Verfahren zur Herstellung eines flexiblen, vorzugsweise elastischen, wasserlöslichen Hohlkörpers, enthaltend ein Mittel, insbesondere ein Wasch-, Pflege- und/oder Reinigungsmittel, umfassend die Schritte:
(a) Urformen eines Vorformlings aus einer Blasformmasse basierend auf einem wasserlöslichen polymeren Thermoplasten;
(b) Blasformen des Vorformlings zu einem Hohlkörper;
(c) Füllen des Hohlkörpers mit mindestens einem Mittel, bevorzugt Wasch-, Pflege- und/oder Reinigungsmittel; und
(d) flüssigkeitsdichtes Verschließen des blasgeformten Hohlkörpers;
(e) wobei der mit mindestens einem Mittel oder Glycerin als Prüfmittel gefüllte und/oder unbefüllte blasgeformte Hohlkörper
i) bei einer Dehnung entlang seiner längsten Achse eine Streckspannung von zwischen ≥ 3 N/mm² und ≤ 15 N/mm² aufweist, und/oder
ii) bei einem Stauchweg von 22 mm senkrecht, mittig, in Richtung seiner kürzesten Achse eine Verformungsarbeit von zwischen ≥ 0,05 Nm und ≤ 5 Nm auftritt, und/oder
iii) bei einer Kraft F₁ > 0,1 N und ≤ 500 N längs eines Weges s₁ verformbar ist und nach Wegfall der Krafteinwirkung in Richtung der ursprünglichen Form zurückehrt, und/oder
iv) nach Wegfall einer Verformungskrafteinwirkung eine Rückstellgeschwindigkeit v von zwischen > 0,01 mm/min und ≤ 650 mm/min aufweist, und/oder
v) das Elastizitätsmodul der Hohlkörperwand des mittels Blasformung hergestellten flexiblen ungefüllten oder mit Mittel zu ≥ 80 Vol.-% gefüllten Hohlkörpers ≤ 1 GNm², vorzugsweise ≤ 0,1 GNm², bevorzugt ≤ 0,01 GNm² beträgt, und/oder
vi) bei einem mit Mittel zu ≥ 80 Vol.% gefüllten blasgeformten Hohlkörper ein Stauchwiderstand F*ₘₐₓ* von zwischen ≥ 20 N und s 2000 N, auftritt, und
(f) wobei die Wandungen des mittels Blasformung hergestellten Hohlkörpers und/oder der Kompartimente eine Wandstärke von zwischen 0,05 - 5 mm aufweisen und
(g) wobei man die Wandstärken des Hohlkörpers bereichsweise unterschiedlich ausbildet oder man den Hohlkörper mit Bereichen unterschiedlichen äußeren Umfangs und gleich bleibender Wandstärke herstellt, indem man die Wandstärken des Vorformlings entsprechend unterschiedlich dick ausbildet.

2. Verfahren zur Herstellung nach Anspruch 1, **dadurch gekennzeichnet, dass** der Schmelzflussindex (Melt Flow Index) der Blasformmasse bei 10 Kg zwischen 1 und 30, bevorzugt zwischen 5 und 15, besonders bevorzugt zwischen 8 und 12 und/oder der Schmelzflussindex (MFI) der Blasformmasse bei 2,16 Kg zwischen 4 und 40, bevorzugt zwischen 5 und 20, besonders bevorzugt zwischen 8 und 15 liegt.

3. Verfahren zur Herstellung nach Anspruch 1 oder 2, **dadurch gekennzeichnet, dass** der flexible, wasserlösliche Hohlkörper einstückig ausgebildet ist.

4. Verfahren zur Herstellung nach einem der vorherigen Ansprüche, **dadurch gekennzeichnet, dass**
(a) in einem ersten Schritt mittels Extrudieren ein Vorformling hergestellt wird und
(b) in einem zweiten Schritt in einem Zyklus der Hohlkörper, vorzugsweise mittels eines unter Druck stehenden Gases, vorzugsweise Pressluft, geblasen, vorzugsweise zur endgültigen Hohlkörpergeometrie, und mit dem Mittel gefüllt, flüssigkeitsdicht verschlossen, sowie anschließend entformt wird.

5. Verfahren zur Herstellung nach einem der vorherigen Ansprüche, **dadurch gekennzeichnet, dass** die Wandstärken des Hohlkörpers bereichsweise unterschiedlich ausbildbar sind, indem man die Wandstärken des Vorformlings, entlang seiner vertikalen Achse, entsprechend unterschiedlich dick, vorzugsweise durch Regulierung der Menge an thermoplastischen Material, vorzugsweise mittels einer Stellspindel beim Ausbringen des Vorformlings aus der Extruderdüse, ausbildet.

6. Verfahren zur Herstellung nach einem der vorherigen Ansprüche, **dadurch gekennzeichnet, dass** man den Hohlkörper mit Bereichen unterschiedlichen äußeren Umfangs und gleichbleibender Wandstärke herstellt, indem die Wandstärken des Vorformlings, entlang seiner vertikalen Achse, entsprechend unterschiedlich dick, vorzugsweise durch Regulierung der Menge an thermoplastischen Material mittels einer Stellspindel beim Ausbringen des Vorformlings aus der Extruderdüse, ausbildet.

7. Verfahren zur Herstellung nach einem der vorherigen Ansprüche, **dadurch gekennzeichnet, dass** der Vorformling, der Hohlkörper und/oder der flüssigkeitsdicht verschlossene Hohlkörper aus einer oder mehreren Komponente(n), die ein oder mehrere Materialien, basierend auf einem oder unterschiedlichen wasserlöslichen polymeren Thermoplasten, umfassen, besteht.

8. Verfahren zur Herstellung nach einem der vorherigen Ansprüche, **dadurch gekennzeichnet, dass** der Vorformling, der Hohlkörper und/oder der flüssigkeitsdicht verschlossene Hohlkörper schlauch-, kugel- oder blasenförmig ist, wobei der kugelförmige Hohlkörper einen Formfaktor (= shape faktor) von > 0,8, vorzugsweise von > 0,82, bevorzugt > 0,85, weiter bevorzugt > 0,9 und besonders bevorzugt von > 0,95 aufweist.

9. Verfahren zur Herstellung nach einem der vorherigen Ansprüche, **dadurch gekennzeichnet, dass** die Wandungen des mittels Blasformung hergestellten Hohlkörpers und/oder der Kompartimente eine Wandstärke von zwischen 0,06 - 2 mm, bevorzugt von zwischen 0,07 - 1,5 mm, weiter bevorzugt von zwischen 0,08 - 1,2 mm, noch bevorzugter von zwischen 0,09 - 1 mm und am meisten bevorzugt, von zwischen 0,1 - 0,6 mm, aufweisen.

10. Verfahren zur Herstellung nach einem der vorherigen Ansprüche, **dadurch gekennzeichnet, dass** der mittels Blasformung hergestellte flexible, ungefüllte oder zu ≥ 80 Vol.-% mit Glycerin gefüllte Hohlkörper durch eine Kraft F₁ ≤ 500 N längs eines Weges s₁ = 22 mm, insbesondere durch eine Kraft F₁ ≤ 100 N längs eines Weges s₁ = 22 mm, vorzugsweise durch eine Kraft F₁ ≤ 60 N längs eines Weges s₁ = 22 mm, weiter bevorzugt durch eine Kraft F₁ ≤ 40 N längs eines Weges s₁ = 22 mm und noch weiter bevorzugt durch eine Kraft F₁ ≤ 20 N längs eines Weges s₁ = 22 mm, senkrecht, mittig, in Richtung seiner kürzesten Achse des Hohlkörpers, verformbar ist.

11. Verfahren zur Herstellung nach einem der vorherigen Ansprüche, **dadurch gekennzeichnet, dass** der mittels Blasformung hergestellte flexible, ungefüllte oder zu ≥ 80 Vol.-% mit Glycerin gefüllte Hohlkörper nach Wegfall der Krafteinwirkung eine Rückstellgeschwindigkeit v ≤ 1000 mm/min, insbesondere v ≤ 500 mm/min vorzugsweise v ≤ 100 mm/min, bevorzugt v ≤ 50 mm/min, weiter bevorzugt v ≤ 10 mm/min und insbesondere bevorzugt v ≤ 1 mm/min, aufweist.

12. Verfahren zur Herstellung nach einem der vorherigen Ansprüche, **dadurch gekennzeichnet, dass** zur Verformung des mittels Blasformung hergestellten flexiblen, ungefüllten Hohlkörpers eine Verformungsarbeit w ≤ 1,0 Nm längs eines Weges s₁ = 22 mm, vorzugsweise w ≤ 0,75 Nm längs eines Weges s₁ = 22 mm und bevorzugt w ≤ 0,50 Nm längs eines Weges s₁ = 22 mm, senkrecht, mittig, in Richtung der kürzesten Achse des Hohlkörpers, erforderlich ist oder bei einem zu ≥ 80 Vol.-% mit Glycerin gefüllten Hohlkörpers eine Verformungsarbeit w ≤ 5,0 Nm längs eines Weges s₁ = 22 mm, vorzugsweise w ≤ 2,5 Nm längs eines Weges s₁ = 22 mm, bevorzugt w ≤ 1 Nm längs eines Weges s₁ = 22 mm, weiter bevorzugt w ≤ 0,75 Nm längs eines Weges s₁ = 22 mm und insbesondere w ≤ 0,5 Nm längs eines Weges s₁ = 22 mm. Zur Feststellung der Verformungsarbeit wirkt die Verformungskraft F₁ senkrecht, mittig, in Richtung zur kürzesten Achse des Hohlkörpers.

13. Verfahren zur Herstellung nach einem der vorherigen Ansprüche, **dadurch gekennzeichnet, dass** der Stauchwiderstand des mittels Blasformung hergestellten flexiblen, ungefüllten oder zu ≥ 80 Vol.-% mit mindestens einem Mittel oder Glycerin als Prüfmittel gefüllten Hohlkörpers 75 bis 400 N, vorzugsweise von zwischen 100 bis 300 N und insbesondere von zwischen 150 bis 250 N beträgt.

14. Verfahren zur Herstellung nach einem der vorherigen Ansprüche, **dadurch gekennzeichnet, dass** der mittels Blasformung hergestellte flexible, ungefüllte oder zu ≥ 80 Vol.-% mit mindestens einem Mittel oder Glycerin als Prüfmittel gefüllte Hohlkörper durch eine Kraft F₁ ≤ 100 N längs eines Weges s₁ = 22 mm verformbar ist und nach Wegfall der Krafteinwirkung eine Rückstellgeschwindigkeit v ≤ 100 mm/min aufweist.

15. Verfahren zur Herstellung nach einem der vorherigen Ansprüche, **dadurch gekennzeichnet, dass** das Elastizitätsmodul der Hohlkörperwand eines wenigstens zweistückigen mittels Blasformung hergestellten flexiblen ungefüllten oder mit Glycerin zu ≥ 80 Vol.-% gefüllten wasserlöslichen Hohlkörpers, mit vorzugsweise Schraub- und/oder Kippverschluß, ≥ 0,01 GNm², vorzugsweise ≥ 0,1 GNm², bevorzugt ≥ 1 GNm² beträgt.

16. Verfahren zur Herstellung nach einem der vorherigen Ansprüche, **dadurch gekennzeichnet, dass** man serielle, parallele und/oder konzentrisch angeordnete Hohlkörper und/oder Kompartimente herstellt, vorzugsweise, jedoch nicht ausschließlich, indem man wenigstens einen Doppel- und/oder Mehrfach- und/oder Coextrusions-Blasdorn verwendet.

17. Verfahren zur Herstellung nach einem der vorherigen Ansprüche, **dadurch gekennzeichnet, dass** man die Öffnung(en) des Hohlkörpers nach dem Befüllen flüssigkeitsdicht, vorzugsweise durch Materialschluß, bevorzugt mittels thermischer Behandlung, besonders bevorzugt durch Aufsetzen eines Schmelzkleckses, verschließt.

18. Verfahren zur Herstellung nach einem der vorherigen Ansprüche, **dadurch gekennzeichnet, dass** man die Öffnung oder die Öffnungen des Hohlkörpers durch thermische Behandlung, vorzugsweise durch Verschmelzen der Wandungen, die an die Öffnung angrenzen, insbesondere mittels Klemmbacken, flüssigkeitsdicht verschließt.

19. Verfahren zur Herstellung nach einem der vorherigen Ansprüche, **dadurch gekennzeichnet, dass** das Wasch- und/oder Reinigungsmittel als waschaktive Substanzen Aniontenside und/oder Niotenside umfasst.

20. Verfahren zur Herstellung nach einem der vorherigen Ansprüche, **dadurch gekennzeichnet, dass** der mindestens ein Mittel, vorzugsweise Wasch- und/oder Reinigungsmittel, enthaltende wasserlösliche Hohlkörper 2 bis 40 Kompartimente, bevorzugt 2 bis 4, weiter bevorzugt 2 bis 3 Kompartimente, aufweist.

21. Verfahren zur Herstellung nach einem der vorherigen Ansprüche, **dadurch gekennzeichnet, dass** man die jeweiligen Kompartimente des wasserlöslichen Hohlkörpers mit einem unterschiedlichen Gehalt und/oder einer unterschiedlichen Zusammensetzung an Substanzen, vorzugsweise waschaktiven Substanzen, befüllt.

22. Verfahren zur Herstellung nach einem der vorherigen Ansprüche, **dadurch gekennzeichnet, dass** man die jeweiligen Kompartimente des wasserlöslichen Hohlkörpers von oben und/oder unten befüllt.

23. Verfahren zur Herstellung nach einem der vorherigen Ansprüche, **dadurch gekennzeichnet, dass**
a. der Gehalt an Aniontensid von zwischen 3 Gew.-% - 40 Gew.-%, und
b. der Gehalt an Niotensid von zwischen 15 Gew.-% - 65 Gew.-%,
bezogen auf den Gesamtgewichtsanteil des in dem Hohlkörper enthaltenen Wasch- und/oder Reinigungsmittels, ausmacht, wobei der Gehalt an Aniontensid und Niotensid insgesamt ≤ 100 Gew.-% ist.

24. Verfahren zur Herstellung nach einem der vorherigen Ansprüche, **dadurch gekennzeichnet, dass** das Wasch- und/oder Reinigungsmittel als waschaktive Substanzen kationische Tenside, amphotere Tenside, Buildersubstanzen, Bleichmittel, Bleichaktivatoren, Bleichstabilisatoren, Bleichkatalysatoren, Enzyme, Polymere, Cobuilder, Alkalisierungsmittel, Acidifizierungsmittel, Antiredepositionsmittel, Silberschutzmittel, Färbemittel, optische Aufheller, UV-Schutzsubstanzen, Weichspüler und/oder Klarspüler umfasst.

25. Verfahren zur Herstellung nach einem der vorherigen Ansprüche, **dadurch gekennzeichnet, dass** das Mittel ausgewählt ist aus der Gruppe umfassend Arzneimittel, Pflanzenschutzmittel, Lebensmittel, Waschmittel, Reinigungsmittel, Pflegemittel, Kosmetika, Haarfärbemittel, Agrochemikalien, Düngemittel, Baustoffe und/oder Klebstoffe.

26. Verfahren zur Herstellung nach einem der vorherigen Ansprüche, **dadurch gekennzeichnet, dass** wenigstens ein Enzym-haltiges Kompartiment frei von Bleichmittel und/oder wenigstens ein Bleichmittel-haltiges Kompartiment frei von Enzym ist.

27. Verfahren zur Herstellung nach einem der vorherigen Ansprüche, **dadurch gekennzeichnet, dass** man mittels Blasformen mindestens einen Hohlkörperbereich und/oder Kompartimentbereich mit wenigstens einer äußeren Oberfläche von zwischen 0,01 mm² und 10 cm² erzeugt, wobei die Wandstärke dieser Fläche, um eine schnellere Auflösung in einer wässrigen Lösung zu gewährleisten, geringer als die Wandstärke der angrenzenden Fläche ist.

28. Verfahren zur Herstellung nach einem der vorherigen Ansprüche, **dadurch gekennzeichnet, dass** man die Wandstärke des Hohlkörpers und/oder der Kompartimente mittels Blasformen so ausbildet, dass das in dem Hohlkörper und/oder in den Kompartimenten enthaltene Mittel, insbesondere Wasch- und/oder Reinigungsmittel, in die wässrige Anwendungsflotte innerhalb von ≤ 5 min, vorzugsweise innerhalb von ≤ 3 min, bevorzugt innerhalb von ≤ 1 min, teilweise oder vollständig freigesetzt wird.

29. Verfahren zur Herstellung nach einem der vorherigen Ansprüche, **dadurch gekennzeichnet, dass** man die Wandstärke des Hohlkörpers und/oder der Kompartimente mittels Blasformen so ausbildet, dass die in wenigstens einem Hohlkörper und/oder in wenigstens einem Kompartiment enthaltenen Enzyme zeitlich zumindest teilweise oder vollständig vor dem in dem oder wenigstens einem anderen Kompartiment enthaltenen Bleichmittel in die wässrige Anwendungsflotte freigesetzt werden.

30. Verfahren zur Herstellung nach einem der vorherigen Ansprüche, **dadurch gekennzeichnet, dass** man die Wandstärke des Hohlkörpers und/oder der Kompartimente mittels Blasformen so ausbildet, dass die in dem Hohlkörper und/oder in wenigstens einem Kompartiment enthaltenen Enzyme zeitlich zumindest teilweise oder vollständig ≥ 60 s, vorzugsweise ≥ 120 s, weiter bevorzugt ≥ 240 s und am meisten bevorzugt ≥ 360 s vor dem in dem oder wenigstens einem anderen Kompartiment enthaltenen Bleichmittel in die wässrige Anwendungsflotte freigesetzt werden.

31. Verfahren zur Herstellung nach einem der vorherigen Ansprüche, **dadurch gekennzeichnet, dass** das Innenvolumen des mittels Blasformen erzeugten Hohlkörpers und/oder der Kompartimente zwischen 0,5 ml und 2000 ml, vorzugsweise zwischen 2 ml und 500 ml, bevorzugt zwischen 5 und 250 ml, weiter bevorzugt zwischen 10 und 100 ml, noch bevorzugter zwischen 20 und 75 ml und am bevorzugtesten zwischen 40 und 50 ml, beträgt.

32. Verfahren zur Herstellung nach einem der vorherigen Ansprüche, **dadurch gekennzeichnet, dass** man dem mittels Blasformung erzeugten Hohlkörper und/oder den Kompartimenten das Wasch- und/oder Reinigungsmittel in fester Form, flüssiger Form und/oder Gelform, vorzugsweise in Form von Partikeln, Suspensionen, Emulsionen, homogenen Lösungen, Pasten und/oder in Form durchsichtiger Lösungen, zusetzt.

33. Verfahren zur Herstellung nach einem der vorherigen Ansprüche, **dadurch gekennzeichnet, dass** man dem mittels Blasformung erzeugten Hohlkörper und/oder den Kompartimenten ein mehrphasiges Mittel, insbesondere Wasch- und/oder Reinigungsmittel, zusetzt, vorzugsweise ein temporäres Zwei- oder Dreiphasengemisch, welches beim Stehenlassen separate Phasen ausbildet und sich durch Schütteln temporär in Form einer Emulsion, Suspension oder Dispersion reversibel in eine Phase überführen läßt.

34. Verfahren zur Herstellung nach einem der vorherigen Ansprüche, **dadurch gekennzeichnet, dass** das mehrphasige Mittel, insbesondere Wasch- und/oder Reinigungsmittel, wenigstens eine wässrige und/oder nichtwässrige Phase umfaßt, wobei bevorzugt wenigstens eine nichtwässrige Phase flüssig oder festförmig und besonders bevorzugt wenigstens ein wässrige Phase gelförmig ist.

35. Verfahren zur Herstellung nach einem der vorherigen Ansprüche, **dadurch gekennzeichnet, dass** der bei der Blasformung zur Bildung des Hohlkörpers und/oder der Kompartimente verwendete wasserlösliche Thermoplast ausgewählt ist aus der Gruppe umfassend Polyvinylalkohol (PVA), acetalisierter Polyvinylalkohol, Polyvinylpyrrolidon, Polyethylenoxid, Gelatine, Cellulose, Stärke und Derivate der vorgenannten Stoffe, und/oder Mischungen der vorgenannten Polymere, wobei Polyvinylalkohol besonders bevorzugt ist.

36. Verfahren zur Herstellung nach einem der vorherigen Ansprüche, **dadurch gekennzeichnet, dass** dem bei der Blasformung zur Bildung des Hohlkörpers und/oder der Kompartimente verwendeten, wasserlöslichen Thermoplasten zusätzlich Polymere, ausgewählt aus der Gruppe umfassend Acrylsäure-haltige Polymere, Polyacrylamide, Oxazolin-Polymere, Polystyrolsulfonate, Polyurethane, Polyester, Polyether und/oder Mischungen der vorstehenden Polymere, zugesetzt sind.

37. Verfahren zur Herstellung nach einem der vorherigen Ansprüche, **dadurch gekennzeichnet, dass** der bei der Blasformung zur Bildung des Hohlkörpers und/oder der Kompartimente verwendete wasserlösliche Thermoplast einen Polyvinylalkohol umfaßt, dessen Hydrolysegrad 70 bis 100 Mol%, vorzugsweise 80 bis 90 Mol-%, besonders bevorzugt 81 bis 89 Mol-% und insbesondere 82 bis 88 Mol-% ausmacht.

38. Verfahren zur Herstellung nach einem der vorherigen Ansprüche, **dadurch gekennzeichnet, dass** der bei der Blasformung zur Bildung des Hohlkörpers und/oder der Kompartimente verwendete wasserlösliche Thermoplast einen Polyvinylalkohol umfaßt, dessen Molekulargewicht im Bereich von 10.000 bis 100.000 gmol⁻¹, vorzugsweise von 11.000 bis 90.000 gmol⁻¹, besonders bevorzugt von 12.000 bis 80.000 gmol⁻¹ und insbesondere von 13.000 bis 70.000 gmol⁻¹ liegt.

39. Verfahren zur Herstellung nach einem der vorherigen Ansprüche, **dadurch gekennzeichnet, dass** die Blasformmasse die genannten Thermoplasten in Mengen von mindestens 50 Gew.-%, vorzugsweise von mindestens 70 Gew.-%, besonders bevorzugt von mindestens 80 Gew.-% und insbesondere von mindestens 90 Gew.-%, jeweils bezogen auf das Gewicht der Blasgußmasse, enthält.

40. Verfahren zur Herstellung nach einem der vorherigen Ansprüche, **dadurch gekennzeichnet, dass** die Blasformmasse Weichmacher in Mengen von mindestens > 1 Gew.-%, vorzugsweise von ≥ 10 Gew.-%, besonders bevorzugt von ≥ 20 Gew.-% und insbesondere von ≥ 30 Gew.-%, jeweils bezogen auf das Gewicht der Blasformmasse, enthält.

41. Verfahren nach einem der vorherigen Ansprüche, **dadurch gekennzeichnet, dass** der Hohlkörper Flanschteile aufweist und durch Formschluß und/oder Materialschluß, vorzugsweise durch Verschweißung, mit wenigstens einer weiteren Hohlform verbunden und/oder verschlossen wird.

42. Verfahren nach einem der vorherigen Ansprüche, **dadurch gekennzeichnet, dass** der Hohlkörper und/oder die Kompartimente zu 20 bis 100 %, vorzugsweise zu 30 bis 99 %, besonders bevorzugt zu 40 bis 98 % und insbesondere zu 50 bis 95 % ihres Volumens mit Mittel, insbesondere Wasch- und/oder Reinigungsmittel, befüllt werden.

43. Verfahren nach einem der vorherigen Ansprüche, **dadurch gekennzeichnet, dass** man den Hohlkörper und/oder die Kompartimente mit mindestens einer, bevorzugt mehreren, waschaktive(n), reinigungsaktive(n), spülaktive(n), pflegeaktiv(en), pharmazeutisch aktiven Zubereitung(en) und/oder mit mindestens einem Lebensmittel, Pflanzenschutzmittel, Düngemittel, Haarbehandlungsmittel, Körperpflegemittel, Kosmetika, Baustoff, Tapetenkleister oder Klebstoff in Form von Pulver, Granulat, Extrudaten, Pellets, Perlen, Tabletten, Tabs, Ringen, Blöcken, Briketts, Lösungen, Schmelzen, Gelen, Suspensionen, Dispersionen, Emulsionen, Schäumen und/oder Gasen teilweise oder vollständig füllt.

44. Verfahren nach einem der vorherigen Ansprüche, **dadurch gekennzeichnet, dass** der Hohlkörper und/oder wenigstens ein Kompartiment durchsichtig und/oder durchscheinend ist.

45. Verfahren nach einem der vorherigen Ansprüche, **dadurch gekennzeichnet, dass** der Hohlkörper keine Siegelnaht, keine Quetschnaht und/oder keine umlaufende Naht aufweist.

46. Verfahren nach einem der vorherigen Ansprüche, **dadurch gekennzeichnet, dass** man wenigstens eine Wandung des Hohlkörpers und/oder wenigstens eine Wandung wenigstens eines Kompartiments mehrschichtig ausbildet.

47. Verfahren nach einem der vorherigen Ansprüche, **dadurch gekennzeichnet, dass** man wenigstens zwei Schichten der Wandung des Hohlkörpers und/oder wenigstens zwei Schichten wenigstens eines Kompartiments so ausgestaltet, das ein Zwischenraum zwischen den Schichten ausgebildet wird.

48. Verfahren nach einem der vorherigen Ansprüche, **dadurch gekennzeichnet, dass** man mittels Coextrudieren einen Vorformling mit mehreren Schichten, vorzugsweise 2 bis 5, erzeugt, der dann zu einem Hohlkörper blasgeformt wird, bei dem wenigstens eine Wandung des Hohlkörpers und/oder bei dem wenigstens eine Wandung wenigstens eines Kompartiments mehrschichtig ausgebildet ist.

49. Verfahren nach einem der Ansprüche 1 oder 2 oder 4 bis 48, **dadurch gekennzeichnet, daß** die wasserlöslichen, blasgeformten Hohlkörper mehrstückig ausgebildet sind und im Bereich des befüllten Hohlvolumens Wandstärken von 0,05 - 5 mm aufweisen.

50. Verfahren nach Anspruch 49, **dadurch gekennzeichnet, daß** die wasserlöslichen, blasgeformten Hohlkörper im Bereich des befüllten Hohlvolumens Wandstärken von 0,06 - 2 mm, vorzugsweise zwischen 0,07 - 1,5 mm, weiter bevorzugt zwischen 0,08 - 1,2 mm, noch bevorzugter zwischen 0,09 - 1 mm und am meisten bevorzugt zwischen 0,1 - 0,6 mm, aufweisen.

51. Verfahren nach einem der Ansprüche 49 oder 50, **dadurch gekennzeichnet, daß** die Wandstärke der die befüllten Hohlvolumina verbindenden Stege maximal das Doppelte der im Bereich des befüllten Hohlvolumens befindlichen Wandstärken beträgt.

52. Verfahren nach einem der Ansprüche 49 bis 51, **dadurch gekennzeichnet, daß** die die befüllten Hohlvolumina verbindenden Stege in ihrer Wandstärke weiter durch eine vorzugsweise mittig verlaufende Quetschnaht, vorzugsweise mit zusätzlicher Perforationslinie, zu Sollbruchstellen ausgedünnt sind, welche im Bereich von 5 bis 200 µm, vorzugsweise 10 bis 150 µm, besonders bevorzugt 15 bis 100 µm und insbesondere 20 bis 70 µm liegen.

53. Verfahren nach einem der Ansprüche 49 bis 52, **dadurch gekennzeichnet, daß** das Füllvolumen eines befüllten Hohlkörpers 1 bis 1000 ml, vorzugsweise 2 bis 500 ml, besonders bevorzugt 5 bis 250 ml, weiter bevorzugt 10 bis 100 ml und insbesondere 15 bis 50 ml, beträgt.

54. Verfahren nach einem der Ansprüche 49 bis 53, **dadurch gekennzeichnet, daß** ein befüllter Behälter aus einer Reihe von 2 bis 100, vorzugsweise von 2 bis 50, besonders bevorzugt von 3 bis 20 und insbesondere von 4 bis 12, miteinander über Stege verbundenen befüllten Hohlvolumina gebildet wird.

55. Verfahren nach einem der Ansprüche 49 bis 54, **dadurch gekennzeichnet, daß** die wasserlöslichen, blasgeformten Hohlkörper im Bereich des befüllten Hohlvolumens einen Bereich geringerer Wandstärke aufweisen, der vorzugsweise durch Einsenkung mechanisch geschützt ist.

56. Verfahren nach einem der Ansprüche 49 bis 55, **dadurch gekennzeichnet, daß** die befüllten Hohlvolumina rotationssymmetrisch zu ihrer längsten Achse und vorzugsweise zur Normalen auf die Quetschfläche ausgebildet sind.

57. Verfahren nach einem der Ansprüche 49 bis 56, **dadurch gekennzeichnet, daß** die befüllten Hohlvolumina eine Länge (entlang der Extrusionsrichtung des ursprünglichen Schlauches) von 30 bis 120 mm, vorzugsweise von 40 bis 100 mm und insbesondere von 45 bis 70 mm, aufweisen.

58. Verfahren nach einem der Ansprüche 49 bis 57, **dadurch gekennzeichnet, daß** die befüllten Hohlvolumina eine Breite (in Richtung der Quetschfläche, senkrecht zur Extrusionsrichtung des ursprünglichen Schlauches) von 10 bis 70 mm, vorzugsweise von 15 bis 60 mm und insbesondere von 20 bis 40 mm, aufweisen.

59. Verfahren nach einem der vorherigen Ansprüche, **dadurch gekennzeichnet, daß** während des Herstellprozesses anfallende Blasformrückstände recycliert und dem ursprünglichen Verfahren wieder zugeführt werden.

60. Verfahren nach Anspruch 59, **dadurch gekennzeichnet, daß** Blasformrückstände vor ihrer Rückführung in das Verfahren zunächst zerkleinert werden.

61. Verfahren nach einem der vorherigen Ansprüche, **dadurch gekennzeichnet, daß** im Anschluß an das flüssigkeitsdichte Verschließen des blasgeformten Hohlkörpers ein zusätzlicher Detektionsschritt auf Leckagen erfolgt.

62. Verfahren nach Anspruch 61, **dadurch gekennzeichnet, daß** die Detektion auf Leckagen mit einem Hochspannungsleckagendetektor erfolgt.

63. Verfahren nach einem der vorherigen Ansprüche, **dadurch gekennzeichnet, daß** der die Schmelze vermischende Extruder mit hoher Rotationsgeschwindigkeit der Schnecke, vorzugsweise mit oberhalb von 10 Umdrehungen pro Minute, besonders bevorzugt oberhalb von 20 Umdrehungen pro Minute, insbesondere bevorzugt oberhalb von 70 Umdrehungen pro Minute, äußerst bevorzugt oberhalb von 150 Umdrehungen pro Minute, insbesondere oberhalb von 300 Umdrehungen pro Minute, betrieben wird.

64. Verfahren nach einem der vorherigen Ansprüche, **dadurch gekennzeichnet, daß** die Erhöhung des mittleren Molekulargewichtes des wasserlöslichen polymeren Thermoplasten unterhalb von 15%, vorzugsweise unterhalb von 10%, besonders bevorzugt unterhalb von 8%, äußerst bevorzugt unterhalb von 5%, insbesondere unterhalb von 2%, bei einmaligem Durchlauf des Extrusionsprozesses, liegt.

65. Verfahren nach einem der vorherigen Ansprüche, **dadurch gekennzeichnet, daß** die Schergeschwindigkeit im Extruder und am Blaskopf oberhalb von 1 s⁻¹, vorzugsweise oberhalb von 2 s⁻¹, weiter bevorzugt oberhalb von 3 s⁻¹, insbesondere oberhalb von 5 s⁻¹, insbesondere bevorzugt oberhalb von 8 s⁻¹, weiter bevorzugt oberhalb von 10 s⁻¹, noch weiter bevorzugt oberhalb von 20 s⁻¹, weiter noch oberhalb von 40 s⁻¹, äußerst bevorzugt oberhalb von 60 s⁻¹, vorteilhafterweise oberhalb von 100 s⁻¹ und besonders vorteilhaft oberhalb von 200 s⁻¹ liegt.

66. Verfahren nach einem der vorherigen Ansprüche, **dadurch gekennzeichnet, daß** der mit mindestens einem Mittel oder Glycerin als Prüfmittel gefüllte und/oder unbefüllte blasgeformte Hohlkörper bei n-facher, mit n ≥ 2, beispielsweise 3 oder 4, bevorzugt 8, 10, 15 oder 20, Wiederholung der jeweiligen Messung an einem zu prüfenden Individuum eine prozentuale Standardabweichung, bezogen auf den mittleren Meßwert, von geringer als 100 %, vorzugsweise geringer als 50 %, weiter bevorzugt geringer als 40 %, besonders bevorzugt geringer als 30 %, insbesondere geringer als 20 %, insbesondere bevorzugt geringer als 10 %, äußerst bevorzugt geringer als 8 %, beispielsweise geringer als 5 %, vorteilhafterweise geringer als 3 %, beispielsweise geringer als 2 % und extrem bevorzugt geringer als 1 % aufweist.

67. Verfahren nach einem der vorherigen Ansprüche, **dadurch gekennzeichnet, daß** das Hüllmaterial des Hohlkörpers zumindest teilweise optisch unterscheidbar, vorzugsweise durch Einsatz von Farbstoffen, von der uneingefärbten Blasformmasse ist.

68. Verfahren nach Anspruch 67, **dadurch gekennzeichnet, daß** das Hüllmaterial des Hohlkörpers unter Einfärben mittels des In-Mould-Labeling-Verfahrens erstellt wird.

69. Flexibler, vorzugsweise elastischer, flüssigkeitsdicht verschlossener, wasserlöslicher mittels Blasformung hergestellter Hohlkörper, enthaltend ein Mittel, insbesondere ein Wasch- Pflege- und/oder Reinigungsmittel, wobei der mit mindestens einem Mittel oder Glycerin als Prüfmittel gefüllte und/oder unbefüllte Hohlkörper
i) bei einer Dehnung entlang seiner längsten Achse eine Streckspannung von zwischen ≥ 3 N/mm² und ≤ 15 N/mm² aufweist, und/oder
ii) bei einem Stauchweg von 22 mm senkrecht, mittig, in Richtung seiner kürzesten Achse eine Verformungsarbeit von zwischen ≥ 0,05 Nm und ≤ 5 Nm auftritt, und/oder
iii) bei einer Kraft F₁ > 0,1 N und ≤ 500 N längs eines Weges s₁ verformbar ist und nach Wegfall der Krafteinwirkung in Richtung der ursprünglichen Form zurückehrt, und/oder
iv) nach Wegfall einer Verformungskrafteinwirkung eine Rückstellgeschwindigkeit v von zwischen > 0,01 mm/min und ≤ 650 mm/min aufweist, und/oder
v) das Elastizitätsmodul der Hohlkörperwand des mittels Blasformung hergestellten flexiblen ungefüllten oder mit Mittel zu ≥ 80 Vol.-% gefüllten Hohlkörpers ≤ 1 GNm², vorzugsweise ≤ 0,1 GNm², bevorzugt ≤ 0,01 GNm² beträgt, und/oder
vi) bei einem mit Mittel zu ≥ 80 Vol.-% gefüllten blasgeformten Hohlkörper ein Stauchwiderstand Fₘₐₓ von zwischen ≥ 20 N und ≤ 2000 N, auftritt, und
wobei die Wandungen des Hohlkörpers und/oder der Kompartimente eine Wandstärke von zwischen 0,05 - 5 mm aufweisen und der Hohlkörper keine Siegelnaht aufweist, **dadurch gekennzeichnet, dass** der Hohlkörper Bereiche unterschiedlichen äußeren Umfangs und gleichbleibender Wandstärke aufweist.

## Claims

1. Process for producing a flexible, preferably elastic, water-soluble hollow body comprising a composition, especially a washing composition, care composition and/or cleaning composition, comprising the steps of:
(a) primary forming of a preform from a blow-moulding composition based on a water-soluble thermoplastic polymer;
(b) blow-moulding the preform to give a hollow body;
(c) filling the hollow body with at least one composition, preferably washing composition, care composition and/or cleaning composition; and
(d) liquid-tight sealing of the blow-moulded hollow body;
(e) the blow-moulded hollow body which has been filled with at least one composition or glycerol as a test composition and/or is unfilled,
i) when elongated along its longest axis, having a yield stress of ≥ 3 N/mm² and ≤ 15 N/mm², and/or
ii) with a compression length of 22 mm perpendicularly, centrally and in the direction of its shortest axis, work of deformation of ≥ 0.05 Nm and ≤ 5 Nm occurring, and/or
iii) being deformable at a force F₁ > 0.1 N and ≤ 500 N along a path s₁ and, after the force ceases, returning in the direction of the original shape, and/or
iv) after a deforming force ceases, having a restoration rate v of > 0.01 mm/min and ≤ 650 mm/min, and/or
v) the modulus of elasticity of the hollow body wall of the flexible hollow body which has been produced by means of blow-moulding and is unfilled or has been filled with composition to an extent of ≥ 80% by volume being ≤ 1 GNm², preferably ≤ 0.1 GNm², preferentially ≤ 0.01 GNm², and/or
vi) in the case of a blow-moulded hollow body filled with composition to an extent of ≥ 80% by volume, a compression resistance Fₘₐₓ of ≥ 20 N and ≤ 2000 N occurring, and
(f) the walls of the hollow body produced by means of blow-moulding and/or of the compartments having a wall thickness of 0.05-5 mm and
(g) the wall thicknesses of the hollow body being configured differently in different regions or the hollow body being produced with regions of different outer shape and uniform wall thickness by virtue of the wall thicknesses of the preform being correspondingly configured differently.

2. Process for production according to Claim 1, **characterized in that** the melt flow index of the blow-moulding composition at 10 kg is between 1 and 30, preferably between 5 and 15, more preferably between 8 and 12, and/or the melt flow index (MFI) of the blow-moulding composition at 2.16 kg is between 4 and 40, preferably between 5 and 20, more preferably between 8 and 15.

3. Process for production according to Claim 1 or 2, **characterized in that** the flexible water-soluble hollow body has a one-piece design.

4. Process for production according to one of the preceding claims, **characterized in that**
(a) in a first step, a preform is produced by means of extrusion and
(b) in a second step, in a cycle, the hollow body is blown, preferably by means of a gas under pressure, preferably compressed air, preferably to give the final hollow body geometry, and filled with the composition, sealed liquid-tight, and then demoulded.

5. Process for production according to one of the preceding claims, **characterized in that** the wall thicknesses of the hollow body can be configured differently in different regions by configuring the wall thicknesses of the preform along its vertical axis in correspondingly different thicknesses, preferably by regulating the amount of thermoplastic material, preferably by means of an adjusting spindle, as the preform is discharged from the extruder die.

6. Process for production according to one of the preceding claims, **characterized in that** the hollow body is produced with regions of different outer shape and uniform wall thickness by configuring the wall thicknesses of the preform along its vertical axis in correspondingly different thicknesses, preferably by regulating the amount of thermoplastic material by means of an adjusting spindle, as the preform is discharged from the extruder die.

7. Process for production according to one of the preceding claims, **characterized in that** the preform, the hollow body and/or the hollow body sealed liquid-tight consists of one or more component(s) which comprise(s) one or more materials based on one water-soluble thermoplastic polymer or different water-soluble thermoplastic polymers.

8. Process for production according to one of the preceding claims, **characterized in that** the preform, the hollow body and/or the hollow body sealed liquid-tight is tubular, spherical or bubble-shaped, the spherical hollow body having a shape factor of > 0.8, preferably of > 0.82, preferentially > 0.85, more preferably > 0.9 and especially preferably of > 0.95.

9. Process for production according to one of the preceding claims, **characterized in that** the walls of the hollow body produced by means of blow-moulding and/or the compartment has/have a wall thickness of 0.06-2 mm, preferably of 0.07-1.5 mm, more preferably of 0.08-1.2 mm, even more preferably of 0.09-1 mm and most preferably of 0.1-0.6 mm.

10. Process for production according to one of the preceding claims, **characterized in that** the flexible hollow body which has been produced by means of blow-moulding and is unfilled or has been filled with glycerol to an extent of ≥ 80% by volume is deformable by a force F₁ of ≤ 500 N along a path s₁ = 22 mm, in particular by a force F₁ of ≤ 100 N along a path s₁ = 22 mm, preferably by a force F₁ of ≤ 60 N along a path s₁ = 22 mm, more preferably by a force F₁ of ≤ 40 N along a path s₁ = 22 mm and even more preferably by a force F₁ of ≤ 20 N along a path s₁ = 22 mm, perpendicularly, centrally and in the direction of its shortest axis of the hollow body.

11. Process for production according to one of the preceding claims, **characterized in that** the flexible hollow body which has been produced by means of blow-moulding and is unfilled or has been filled with glycerol to an extent of ≥ 80% by volume, after the force ceases, has a restoration rate v of ≤ 1000 mm/min, in particular v of ≤ 500 mm/min, preferably v of ≤ 100 mm/min, preferentially v of ≤ 50 mm/min, more preferably v of ≤ 10 mm/min, and especially preferably v of ≤ 1 mm/min.

12. Process for production according to one of the preceding claims, **characterized in that** the deformation of the flexible, unfilled hollow body produced by means of blow-moulding requires work of deformation w of ≤ 1.0 Nm along a path s₁ = 22 mm, preferably w of ≤ 0.75 Nm along a path s₁ = 22 mm and preferably w of ≤ 0.50 Nm along a path s₁ = 22 mm, perpendicularly, centrally and in the direction of the shortest axis of the hollow body, or, in the case of a hollow body filled with glycerol, to an extent of ≥ 80% by volume, work of deformation w of ≤ 5.0 Nm along a path s₁ = 22 mm, preferably w ≤ 2.5 Nm along a path s₁ = 22 mm, preferentially w of ≤ 1 Nm along a path s₁ = 22 mm, more preferably w ≤ 0.75 Nm along a path s₁ = 22 mm and in particular w of ≤ 0.5 Nm along a path s₁ = 22 mm. To determine the work of deformation, the deformation force F₁ acts perpendicularly, centrally and in the direction towards the shortest axis of the hollow body.

13. Process for production according to one of the preceding claims, **characterized in that** the compression resistance of the flexible hollow body which has been produced by means of blow-moulding and is unfilled or has been filled with at least one composition or glycerol as a test composition to an extent of ≥ 80% by volume is 75 to 400 N, preferably between 100 and 300 N and in particular between 150 and 250 N.

14. Process for production according to one of the preceding claims, **characterized in that** the flexible hollow body which has been produced by means of blow-moulding and is unfilled or has been filled with at least one composition or glycerol as a test composition to an extent of ≥ 80% by volume is deformable by a force F₁ of ≤ 100 N along a path s₁ = 22 mm and, after the force has ceased, has a restoration rate v of ≤ 100 mm/min.

15. Process for production according to one of the preceding claims, **characterized in that** the modulus of elasticity of the hollow body wall of an at least two-piece flexible water-soluble hollow body which has been produced by means of blow-moulding and is unfilled or has been filled with glycerol to an extent of 80% by volume, preferably having a screw and/or tilt connection, is ≥ 0.01 GNm², preferably ≥ 0.1 GNm², preferentially ≥ 1 GNm².

16. Process for production according to one of the preceding claims, **characterized in that** serial, parallel and/or concentric hollow bodies and/or compartments are produced preferably, but not exclusively, by using at least a double and/or multiple and/or coextrusion blowing mandrel.

17. Process for production according to one of the preceding claims, **characterized in that** the orifice(s) of the hollow body, after being filled, is/are sealed liquid-tight, preferably by means of material closure, preferably by means of thermal treatment, more preferably by placing-on a melt blob.

18. Process for production according to one of the preceding claims, **characterized in that** the orifice or the orifices of the hollow body is/are sealed liquid-tight by thermal treatment, preferably by melting the walls which adjoin the orifice, especially by means of clamping jaws.

19. Process for production according to one of the preceding claims, **characterized in that** the washing and/or cleaning composition comprises anionic surfactants and/or nonionic surfactants as washing-active substances.

20. Process for production according to one of the preceding claims, **characterized in that** the water-soluble hollow body comprising at least one composition, preferably washing and/or cleaning composition, has 2 to 40 compartments, preferably 2 to 4, more preferably 2 to 3 compartments.

21. Process for production according to one of the preceding claims, **characterized in that** the particular compartments of the water-soluble hollow body are filled with a different content and/or a different composition of substances, preferably washing-active substances.

22. Process for production according to one of the preceding claims, **characterized in that** the particular compartments of the water-soluble hollow body are filled from above and/or below.

23. Process for production according to one of the preceding claims, **characterized in that**
a. the content of anionic surfactant makes up 3% by weight - 40% by weight, and
b. the content of nonionic surfactant makes up 15% by weight - 65% by weight,
based on the total proportion by weight of the washing and/or cleaning composition present in the hollow body, the content of anionic surfactant and nonionic surfactant totalling 100% by weight.

24. Process for production according to one of the preceding claims, **characterized in that** the washing and/or cleaning composition comprises, as washing-active substances, cationic surfactants, amphoteric surfactants, builder substances, bleaches, bleach activators, bleach stabilizers, bleach catalysts, enzymes, polymers, cobuilders, alkalizers, acidifiers, antiredeposition agents, silver protectants, colorants, optical brighteners, UV protection substances, fabric softeners and/or rinse aids.

25. Process for production according to one of the preceding claims, **characterized in that** the composition is selected from the group comprising medicaments, crop protectants, food and drink, washing compositions, cleaning compositions, care compositions, cosmetics, hair colorants, agrochemicals, fertilizers, building materials and/or adhesives.

26. Process for production according to one of the preceding claims, **characterized in that** at least one enzyme-containing compartment is free of bleach and/or at least one bleach-containing compartment is free of enzyme.

27. Process for production according to one of the preceding claims, **characterized in that** at least one hollow body region and/or compartment region having at least one outer surface of between 0.01 mm² and 10 cm² is obtained by means of blow-moulding, the wall-thickness of this area, in order to ensure more rapid dissolution in an aqueous solution, being smaller than the wall thickness of the adjoining area.

28. Process for production according to one of the preceding claims, **characterized in that** the wall thickness of the hollow body and/or of the compartments is formed by means of blow-moulding in such a way that the composition present in the hollow body and/or in the compartments, especially washing and/or cleaning compositions, is released partly or fully into the aqueous use liquor within ≤ 5 min, preferably within ≤ 3 min, preferentially within ≤ 1 min.

29. Process for production according to one of the preceding claims, **characterized in that** the wall thickness of the hollow body and/or of the compartments is formed by means of blow-moulding in such a way that the enzymes present in at least one hollow body and/or in at least one compartment are released into the aqueous use liquor at least partly or fully before the bleach present in the other compartment or at least one other compartment.

30. Process for production according to one of the preceding claims, **characterized in that** the wall thickness of the hollow body and/or of the compartments is formed by means of blow-moulding in such a way that the enzymes present in the hollow body and/or in at least one compartment are released into the aqueous use liquor, at least partly or fully, ≥ 60 s, preferably ≥ 120 s, more preferably ≥ 240 s and most preferably ≥ 360 s before the bleach present in the other compartment or at least one other compartment.

31. Process for production according to one of the preceding claims, **characterized in that** the internal volume of the hollow body obtained by means of blow-moulding and/or of the compartments is between 0.5 ml and 2000 ml, preferably between 2 ml and 500 ml, preferentially between 5 and 250 ml, more preferably between 10 and 100 ml, even more preferably between 20 and 75 ml and most preferably between 40 and 50 ml.

32. Process for production according to one of the preceding claims, **characterized in that** the washing and/or cleaning composition is added in solid form, liquid form and/or gel form, preferably in the form of particles, suspensions, emulsions, homogeneous solutions, pastes and/or in the form of transparent solutions, to the hollow body obtained by means of blow-moulding and/or to the compartments.

33. Process for production according to one of the preceding claims, **characterized in that** a multiphase composition, especially washing and/or cleaning composition, is added to the hollow body obtained by means of blow-moulding and/or to the compartments, preferably a temporary bi- or triphasic mixture which forms separate phases when left to stand and can be converted reversibly to one phase temporarily in the form of an emulsion, suspension or dispersion by shaking.

34. Process for production according to one of the preceding claims, **characterized in that** the multiphase composition, especially washing and/or cleaning composition, comprises at least one aqueous and/or nonaqueous phase, at least one nonaqueous phase preferably being in liquid or solid form, and at least one aqueous phase more preferably being in gel form.

35. Process for production according to one of the preceding claims, **characterized in that** the water-soluble thermoplastic used in the blow-moulding to form the hollow body and/or the compartments is selected from the group comprising polyvinyl alcohol (PVA), acetalized polyvinyl alcohol, polyvinylpyrrolidone, polyethylene oxide, gelatin, cellulose, starch and derivatives of the aforementioned substances, and/or mixtures of the aforementioned polymers, particular preference being given to polyvinyl alcohol.

36. Process for production according to one of the preceding claims, **characterized in that** polymers selected from the group comprising acrylic acid-containing polymers, polyacrylamides, oxazoline polymers, polystyrenesulphonates, polyurethanes, polyesters, polyethers and/or mixtures of the above polymers are additionally added to the water-soluble thermoplastic used in the blow-moulding to form the hollow body and/or the compartments.

37. Process for production according to one of the preceding claims, **characterized in that** the water-soluble thermoplastic used in the blow-moulding to form the hollow body and/or the compartments comprises a polyvinyl alcohol whose degree of hydrolysis is 70 to 100 mol%, preferably 80 to 90 mol%, more preferably 81 to 89 mol% and in particular 82 to 88 mol%.

38. Process for production according to one of the preceding claims, **characterized in that** the water-soluble thermoplastic used in the blow-moulding to form the hollow body and/or the compartments comprises a polyvinyl alcohol whose molecular weight is in the range from 10 000 to 100 000 gmol⁻¹, preferably 11 000 to 90 000 gmol⁻¹, more preferably 12 000 to 80 000 gmol⁻¹, and in particular 13 000 to 70 000 gmol⁻¹.

39. Process for production according to one of the preceding claims, **characterized in that** the blow-moulding composition comprises the thermoplastics mentioned in amounts of at least 50% by weight, preferably of at least 70% by weight, more preferably of at least 80% by weight and in particular of at least 90% by weight, based in each case on the weight of the blow-moulding composition.

40. Process for production according to one of the preceding claims, **characterized in that** the blow-moulding composition comprises plasticizers in amounts of at least > 1% by weight, preferably of ≥ 10% by weight, more preferably of ≥ 20% by weight and in particular of ≥ 30% by weight, based in each case on the weight of the blow-moulding composition.

41. Process according to one of the preceding claims, **characterized in that** the hollow body has flange parts and is bonded and/or sealed to at least one further hollow mould by shape sealing and/or material sealing, preferably by welding.

42. Process according to one of the preceding claims, **characterized in that** the hollow body and/or the compartments are filled with composition, especially washing and/or cleaning composition, to an extent of 20 to 100%, preferably to an extent of 30 to 99%, more preferably to an extent of 40 to 98% and in particular to an extent of 50 to 95% of their volume.

43. Process according to one of the preceding claims, **characterized in that** the hollow body and/or the compartments are filled partly or fully with at least one of, preferably a plurality of, washing-active, cleaning-active, rinsing-active, care-active, pharmaceutically active formulation(s) and/or with at least one food or drink, crop protectant, fertilizer, hair treatment composition, bodycare composition, cosmetics, building material, wallpaper paste or adhesive in the form of powder, granule, extrudates, pellets, beads, tablets, tabs, rings, blocks, briquettes, solutions, melts, gels, suspensions, dispersions, emulsions, foams and/or gases.

44. Process according to one of the preceding claims, **characterized in that** the hollow body and/or at least one compartment is transparent and/or translucent.

45. Process according to one of the preceding claims, **characterized in that** the hollow body has no seal seam, no pinch seam and/or no continuous seam.

46. Process according to one of the preceding claims, **characterized in that** at least one wall of the hollow body and/or at least one wall of at least one compartment has a multilayer configuration.

47. Process according to one of the preceding claims, **characterized in that** at least two layers of the wall of the hollow body and/or at least two layers of at least one compartment are configured so as to form an intermediate space between the layers.

48. Process according to one of the preceding claims, **characterized in that** a preform having a plurality of layers, preferably 2 to 5, is obtained by means of coextrusion and is then blow-moulded to give a hollow body in which at least one wall of the hollow body and/or in which at least one wall of at least one compartment has a multilayer configuration.

49. Process according to one of Claims 1 or 2 or 4 to 48, **characterized in that** the water-soluble blow-moulded hollow bodies have a multi-piece configuration and, in the region of the filled hollow volume, have wall thicknesses of 0.05-5 mm.

50. Process according to Claim 49, **characterized in that** the water-soluble blow-moulded hollow bodies, in the region of the filled hollow volume, have wall thicknesses of 0.06-2 mm, preferably 0.07-1.5 mm, more preferably 0.08-1.2 mm, even more preferably 0.09-1 mm and most preferably 0.1-0.6 mm.

51. Process according to one of Claims 49 or 50, **characterized in that** the wall thickness of the elements connecting the filled hollow volumes are a maximum of twice the wall thicknesses present in the region of the filled hollow volume.

52. Process according to one of Claims 49 to 51, **characterized in that** the wall thickness of the elements connecting the filled hollow volumes is reduced further by a pinch seam which preferably runs centrally and preferably has an additional perforation line to form intended breakage sites which are in the range from 5 to 200 µm, preferably 10 to 150 µm, more preferably 15 to 100 µm and in particular 20 to 70 µm.

53. Process according to one of Claims 49 to 52, **characterized in that** the fill volume of a filled hollow body is 1 to 1000 ml, preferably 2 to 500 ml, more preferably 5 to 250 ml, even more preferably 10 to 100 ml and in particular 15 to 50 ml.

54. Process according to one of Claims 49 to 53, **characterized in that** a filled vessel is formed from a series of 2 to 100, preferably of 2 to 50, more preferably of 3 to 20 and in particular of 4 to 12 filled hollow volumes connected to one another via elements.

55. Process according to one of Claims 49 to 54, **characterized in that** the water-soluble blow-moulded hollow bodies, in the region of the filled hollow volume, have a region of lower wall thickness which is preferably supported mechanically by sinking.

56. Process according to one of Claims 49 to 55, **characterized in that** the filled hollow volumes are formed in a rotationally symmetric manner with respect to their longest axis and preferably with respect to the normal to the pinched surface.

57. Process according to one of Claims 49 to 56, **characterized in that** the filled hollow volumes have a length (along the extrusion direction of the original tube) of 30 to 120 mm, preferably of 40 to 100 mm and in particular of 45 to 70 mm.

58. Process according to one of Claims 49 to 57, **characterized in that** the filled hollow volumes have a width (in the direction of the pinch surface, at right angles to the extrusion direction of the original tube) of 10 to 70 mm, preferably of 15 to 60 mm and in particular of 20 to 40 mm.

59. Process according to one of the preceding claims, **characterized in that** blow-moulding residues which occur during the production process are recycled and sent back to the original process.

60. Process according to Claim 59, **characterized in that** blow-moulding residues are initially comminuted before being recycled into the process.

61. Process according to one of the preceding claims, **characterized in that** the liquid-tight sealing of the blow-moulded hollow body is followed by an additional detection step for leaks.

62. Process according to Claim 61, **characterized in that** the detection for leaks is effected with a high-voltage leak detector.

63. Process according to one of the preceding claims, **characterized in that** the extruder which mixes the melt is operated at high rotational speed of the screw, preferably at above 10 revolutions per minute, more preferably above 20 revolutions per minute, especially preferably above 70 revolutions per minute, exceptionally preferably above 150 revolutions per minute, in particular above 300 revolutions per minute.

64. Process according to one of the preceding claims, **characterized in that** the increase in the mean molecular weight of the water-soluble thermoplastic polymer is below 15%, preferably below 10%, more preferably below 8%, exceptionally preferably below 5%, in particular below 2%, in a single pass through the extrusion process.

65. Process according to one of the preceding claims, **characterized in that** the shear speed in the extruder and at the blowing head is above 1 s⁻¹, preferably above 2 s⁻¹, more preferably above 3 s⁻¹, in particular above 5 s⁻¹, especially preferably above 8 s⁻¹, more preferably above 10 s⁻¹, even more preferably above 20 s⁻¹, even further above 40 s⁻¹, exceptionally preferably above 60 s⁻¹, advantageously above 100 s⁻¹ and particularly advantageously above 200 s⁻¹.

66. Process according to one of the preceding claims, **characterized in that** the blow-moulded hollow body which is unfilled or has been filled with at least one composition or glycerol as a test composition, in the case of n-fold, where n ≥ 2, for example 3 or 4, preferably 8, 10, 15 or 20, repetition of the particular measurement on a specimen to be tested, has a percentage standard deviation, based on the mean measurement, of less than 100%, preferably less than 50%, more preferably less than 40%, even more preferably less than 30%, in particular less than 20%, especially preferably less than 10%, exceptionally preferably less than 8%, for example less than 5%, advantageously less than 3%, for example less than 2% and extremely preferably less than 1%.

67. Process according to one of the preceding claims, **characterized in that** the coating material of the hollow body is at least partly distinguishable visually, preferably by use of dyes, from the uncoloured blow-moulding composition.

68. Process according to Claim 67, **characterized in that** the coating material of the hollow body is produced with coloration by means of the in-mould labelling process.

69. Flexible, preferably elastic, water-soluble hollow body which has been produced by means of blow-moulding, has been sealed liquid-tight and comprises a composition, especially a washing composition, care composition and/or cleaning composition, the hollow body which has been filled with at least one composition or glycerol as a test composition and/or is unfilled,
i) when elongated along its longest axis, having a yield stress of ≥ 3 N/mm² and ≤ 15 N/mm², and/or
ii) with a compression length of 22 mm perpendicularly, centrally and in the direction of its shortest axis, work of deformation of ≥ 0.05 Nm and ≤ 5 Nm occurring, and/or
iii) being deformable at a force F₁ > 0.1 N and ≤ 500 N along a path S₁ and, after the force ceases, returning in the direction of the original shape, and/or
iv) after a deforming force ceases, having a restoration rate v of > 0.01 mm/min and ≤ 650 mm/min, and/or
v) the modulus of elasticity of the hollow body wall of the flexible hollow body which has been produced by means of blow-moulding and is unfilled or has been filled with composition to an extent of ≥ 80% by volume being ≤ 1 GNm², preferably ≤ 0.1 GNm², preferentially ≤ 0.01 GNm²,and/or
vi) in the case of a blow-moulded hollow body filled with composition to an extent of ≥ 80% by volume, a compression resistance Fₘₐₓ of ≥ 20 N and ≤ 2000 N occurring, and
the walls of the hollow body and/or of the compartments having a wall thickness of 0.05-5 mm and the hollow body having no seal seam, **characterized in that** the hollow body has regions of different outer circumference and uniform wall thickness.

## Revendications

1. Procédé pour la fabrication d'un corps creux soluble dans l'eau, flexible, de préférence élastique, contenant un agent, en particulier un agent de lavage, d'entretien et/ou de nettoyage, comprenant les étapes :
(a) procéder au façonnement préliminaire d'un préformé à partir d'une matière de façonnement par extrusion-soufflage, basée sur un composé thermoplastique polymère soluble dans l'eau ;
(b) soumettre le préformé à un façonnement par extrusion-soufflage pour obtenir un corps creux ;
(c) remplir le corps creux avec au moins un agent, de préférence un agent de lavage, d'entretien et/ou de nettoyage ; et
(d) fermer d'une manière étanche aux liquides le corps creux obtenu via un façonnement par extrusion-soufflage ;
(e) le corps creux obtenu via un façonnement par extrusion-soufflage rempli avec au moins un agent ou avec du glycérol à titre d'agent d'essai et/ou non rempli
i) présentant, lors d'un allongement le long de son grand axe, une tension d'étirage entre ≥ 3 N/mm² et ≤ 15 N/mm² ; et/ou
ii) manifestant, dans une course d'écrasement de 22 mm, à la verticale, au centre, dans la direction de son petit axe, un travail de déformation entre ≥ 0,05 Nm et ≤ 5 Nm ; et/ou
iii) manifestant, sous l'effet d'une force F₁ > 0,1 N et ≤ 500 N, le long d'une course s₁, une aptitude à la déformation et un retour dans la direction de la forme initiale, lorsque l'effet de la force disparaît ; et/ou
iv) présentant, après la disparition de l'effet d'une force de déformation, une vitesse de rappel v entre > 0,01 mm/min et ≤ 650 mm/min ; et/ou
v) le module d'élasticité de la paroi du corps creux fabriqué via un façonnement par extrusion-soufflage, flexible, non rempli ou rempli avec des agents à concurrence de ≥ 80 % en volume, s'élève à une valeur ≤ 1 GNm², à titre préférentiel à une valeur ≤ 0,1 GNm², de préférence à une valeur ≤ 0,01 GNm² ; et/ou
vi) manifestant, dans le cas d'un corps creux obtenu via un façonnement par extrusion-soufflage, rempli avec des agents à concurrence de ≥ 80 % en volume, une résistance à l'écrasement F*ₘₐₓ* entre ≥ 20 N et ≤ 2000 N ; et
(f) les parois du corps creux fabriqué via un façonnement par extrusion-soufflage et/ou des compartiments présentant une épaisseur de paroi entre 0,05 et 5 mm, et
(g) dans lequel on met en oeuvre une réalisation différente, par zone, des épaisseurs de paroi du corps creux ou bien on fabrique les corps creux avec des zones de circonférence externe différente et d'épaisseur de paroi constante, en réalisant les parois du préformé avec des épaisseurs différentes d'une manière correspondante.

2. Procédé de fabrication selon la revendication 1, **caractérisé en ce que** l'indice de fluidité à chaud (Melt Flow Index) de la matière de façonnement par extrusion-soufflage sous une charge de 10 kg se situe entre 1 et 30, de préférence entre 5 et 15, de manière particulièrement préférée entre 8 et 12 et/ou **en ce que** l'indice de fluidité à chaud (MFI) de la matière de façonnement par extrusion-soufflage sous une charge de 2,16 kg se situe entre 4 et 40, de préférence entre 5 et 20, de manière particulièrement préférée entre 8 et 15.

3. Procédé de fabrication selon la revendication 1 ou 2, **caractérisé en ce que** le corps creux flexible soluble dans l'eau est réalisé en une seule pièce.

4. Procédé de fabrication selon l'une quelconque des revendications précédentes, **caractérisé en ce que**
(a) dans une première étape, on fabrique un préformé par extrusion ; et
(b) dans une deuxième étape, en un cycle, on procède au soufflage du corps creux, de préférence à l'aide d'un gaz mis sous pression, de préférence avec de l'air sous pression, de préférence jusqu'à la géométrie définitive du corps creux, et on le remplit avec l'agent, on le ferme pour le rendre étanche aux liquides et ensuite on le démoule.

5. Procédé de fabrication selon l'une quelconque des revendications précédentes, **caractérisé en ce qu'**on peut réaliser différemment, par zone, les épaisseurs de paroi du corps creux, en conférant aux parois du préformé, le long de l'axe vertical de ce dernier, des épaisseurs différentes d'une manière correspondante, de préférence en réglant la quantité de la matière thermoplastique, de préférence à l'aide d'une vis hélicoïdale de réglage lors de la sortie du préformé de la buse de l'extrudeuse.

6. Procédé de fabrication selon l'une quelconque des revendications précédentes, **caractérisé en ce qu'**on fabrique le corps creux avec des zones de circonférence externe différente et d'épaisseur de paroi constante, en conférant aux parois du préformé, le long de l'axe vertical de ce dernier, des épaisseurs différentes de manière correspondante, de préférence en réglant la quantité de la matière thermoplastique à l'aide d'une vis hélicoïdale de réglage lors de la sortie du préformé de la buse de l'extrudeuse.

7. Procédé de fabrication selon l'une quelconque des revendications précédentes, **caractérisé en ce que** le préformé, le corps creux et/ou le corps creux fermé de manière étanche aux liquides est constitué par un ou plusieurs composants qui comprennent une ou plusieurs matières basées sur un composé thermoplastique polymère soluble dans l'eau ou sur différents composés thermoplastiques polymères solubles dans l'eau.

8. Procédé de fabrication selon l'une quelconque des revendications précédentes, **caractérisé en ce que** le préformé, le corps creux et/ou le corps creux fermé de manière étanche aux liquides prend la forme d'une gaine, d'une bille ou d'une bulle, le corps creux en forme de bille possédant un facteur de forme (= shape factor) de > 0,8, à titre préférentiel de > 0,82, de préférence de > 0,85, de manière plus préférée de > 0,9 et de manière particulièrement préférée de > 0,95.

9. Procédé de fabrication selon l'une quelconque des revendications précédentes, **caractérisé en ce que** les parois du corps creux fabriqué via un façonnement par extrusion-soufflage et/ou des compartiments présentent une épaisseur de paroi entre 0,06 et 2 mm, de préférence entre 0,07 et 1,5 mm, de manière plus préférée entre 0,08 et 1,2 mm, de manière encore plus préférée entre 0,09 et 1 mm et de manière de loin préférée entre 0,1 et 0,6 mm.

10. Procédé de fabrication selon l'une quelconque des revendications précédentes, **caractérisé en ce que** le corps creux flexible fabriqué via un façonnement par extrusion-soufflage, non rempli ou rempli avec du glycérol à concurrence de ≥ 80 % en volume présente, sous l'effet d'une force F₁ ≤ 500 N le long d'une course s₁ = 22 mm, en particulier sous l'effet d'une force F₁ ≤ 100 N le long d'une course s₁ = 22 mm, à titre préférentiel sous l'effet d'une force F₁ ≤ 60 N le long d'une course s₁ = 22 mm, de manière plus préférée sous l'effet d'une force F₁ ≤ 40 N le long d'une course s₁ = 22 mm, et de manière encore plus préférée sous l'effet d'une force F₁ ≤ 20 N le long d'une course s₁ = 22 mm, une aptitude à la déformation à la verticale, au centre, dans la direction de son petit axe du corps creux.

11. Procédé de fabrication selon l'une quelconque des revendications précédentes, **caractérisé en ce que** le corps creux flexible fabriqué via un façonnement par extrusion-soufflage, non rempli ou rempli avec du glycérol à concurrence de ≥ 80 % en volume présente, après disparition de l'effet de la force, une vitesse de rappel v ≤ 1000 mm/min, en particulier v ≤ 500 mm/min, à titre préférentiel v ≤ 100 mm/min, de préférence v ≤ 50 mm/min, de manière plus préférée v ≤ 10 mm/min, et de manière particulièrement préférée v ≤ 1 mm/min.

12. Procédé de fabrication selon l'une quelconque des revendications précédentes, **caractérisé en ce que**, pour la déformation du corps creux flexible, non rempli, fabriqué via un façonnement par extrusion-soufflage, on a besoin d'un travail de déformation w ≤ 1,0 Nm le long d'une course s₁ = 22 mm, à titre préférentiel w ≤ 0,75 Nm le long d'une course s₁ = 22 mm et de préférence w ≤ 0,50 Nm le long d'une course s₁ = 22 mm, à la verticale, au centre, dans la direction du petit axe du corps creux, ou bien, dans le cas d'un corps creux rempli avec du glycérol à concurrence de ≥ 80 % en volume, on a besoin d'un travail de déformation w ≤ 5,0 Nm le long d'une course s₁ = 22 mm, à titre préférentiel w ≤ 2,5 Nm le long d'une course s₁ = 22 mm, de préférence w ≤ 1 Nm le long d'une course s₁ = 22 mm, de manière plus préférée w ≤ 0,75 Nm le long d'une course s₁ = 22 mm et en particulier w ≤ 0,5 Nm le long d'une course s₁ = 22 mm, pour la détermination du travail de déformation, la force de déformation F₁ s'exerce à la verticale, au centre, dans la direction du petit axe du corps creux.

13. Procédé de fabrication selon l'une quelconque des revendications précédentes, **caractérisé en ce que** la résistance à l'écrasement que manifeste le corps creux flexible fabriqué via un façonnement par extrusion-soufflage, non rempli ou rempli à concurrence de ≥ 80 % en volume avec au moins un agent ou avec du glycérol à titre d'agent d'essai, s'élève de 75 à 400 N, de préférence à une valeur entre 100 et 300 N, et en particulier une valeur entre 150 et 250 N.

14. Procédé de fabrication selon l'une quelconque des revendications précédentes, **caractérisé en ce que** le corps creux flexible fabriqué via un façonnement par extrusion-soufflage, non rempli ou rempli à concurrence de ≥ 80 % en volume avec au moins un agent ou avec du glycérol à titre d'agent d'essai, manifeste une aptitude à la déformation sous l'effet d'une force F₁ ≤ 100 N le long d'une course s₁ = 22 mm et, après la disparition de l'effet de la force, présente une vitesse de rappel v ≤ 100 mm/min.

15. Procédé de fabrication selon l'une quelconque des revendications précédentes, **caractérisé en ce que** le module d'élasticité de la paroi d'un corps creux soluble dans l'eau fabriqué au moins en deux parties via un façonnement par extrusion-soufflage, non rempli ou rempli avec du glycérol à concurrence de ≥ 80 % en volume, possédant une fermeture à visser et/ou à bascule, s'élève à ≥ 0,01 GNm², à titre préférentiel à ≥ 0,1 GNm², de préférence à ≥ 1 GNm².

16. Procédé de fabrication selon l'une quelconque des revendications précédentes, **caractérisé en ce qu'**on fabrique des corps creux et/ou des compartiments disposés en série, en parallèle et/ou en position concentrique, de préférence, mais non de manière exclusive, en utilisant au moins un poinçon de soufflage double et/ou multiple et/ou de coextrusion.

17. Procédé de fabrication selon l'une quelconque des revendications précédentes, **caractérisé en ce qu'**on ferme l'ouverture ou les ouvertures du corps creux après le remplissage, pour le rendre étanche aux liquides, de préférence via une fermeture matérielle, de préférence à l'aide d'un traitement thermique, de manière particulièrement préférée par l'application d'une pâte fusible.

18. Procédé de fabrication selon l'une quelconque des revendications précédentes, **caractérisé en ce qu'**on ferme l'ouverture ou les ouvertures du corps creux par traitement thermique, de préférence par la mise en fusion des parois limitrophes à l'ouverture, en particulier à l'aide de mâchoires de serrage, pour obtenir une étanchéité aux liquides.

19. Procédé de fabrication selon l'une quelconque des revendications précédentes, **caractérisé en ce que** l'agent de lavage et/ou de nettoyage comprend, à titre de substances manifestant une activité de lavage, des agents tensioactifs anioniques et/ou des agents tensioactifs non ioniques.

20. Procédé de fabrication selon l'une quelconque des revendications précédentes, **caractérisé en ce que** le corps creux soluble dans l'eau contenant au moins un agent, de préférence un agent de lavage et/ou de nettoyage, présente de 2 à 40 compartiments, de préférence de 2 à 4 compartiments, de manière plus préférée de 2 à 3 compartiments.

21. Procédé de fabrication selon l'une quelconque des revendications précédentes, **caractérisé en ce qu'**on remplit les compartiments respectifs du corps creux soluble dans l'eau avec une teneur différente et/ou une composition différente de substances, de préférence de substances manifestant une activité de lavage.

22. Procédé de fabrication selon l'une quelconque des revendications précédentes, **caractérisé en ce qu'**on remplit les compartiments respectifs du corps creux soluble dans l'eau par le haut et/ou par le bas.

23. Procédé de fabrication selon l'une quelconque des revendications précédentes, **caractérisé en ce que**
a. la teneur en agent tensioactif anionique se situe entre 3 % en poids et 40 % en poids ; et
b. la teneur en agent tensioactif non ionique se situe entre 15 % en poids et 65 % en poids,
rapportés à la fraction pondérale totale de l'agent de lavage et/ou de nettoyage que contient le corps creux, la teneur en agent tensioactif anionique et en agent tensioactif non ionique s'élevant au total à une valeur ≤ 100 % en poids.

24. Procédé de fabrication selon l'une quelconque des revendications précédentes, **caractérisé en ce que** l'agent de lavage et/ou de nettoyage comprend, à titre de substances manifestant une activité de lavage, des agents tensioactifs cationiques, des agents tensioactifs amphotères, des substances faisant office de builder, des agents de blanchiment, des activateurs de blanchiment, des stabilisateurs de blanchiment, des catalyseurs de blanchiment, des enzymes, des polymères, des cobuilders, des agents d'alcalinisation, des agents d'acidification, des agents s'opposant à la redéposition, des agents de protection de l'argent, des colorants des azurants optiques, des substances de protection contre le rayonnement ultraviolet, des adoucissants et/ou des agents de rinçage.

25. Procédé de fabrication selon l'une quelconque des revendications précédentes, **caractérisé en ce que** l'agent est choisi parmi le groupe comprenant des médicaments, des agents phytosanitaires, des aliments, des agents de lavage, des agents de nettoyage, des agents d'entretien, des cosmétiques, des colorants capillaires, des composés agrochimiques, des engrais, des matériaux de construction et/ou des adhésifs.

26. Procédé de fabrication selon l'une quelconque des revendications précédentes, **caractérisé en ce qu'**au moins un compartiment contenant une ou plusieurs enzymes est exempt d'agent de blanchiment et/ou au moins un compartiment contenant un ou plusieurs agents de blanchiment est exempt d'enzyme.

27. Procédé de fabrication selon l'une quelconque des revendications précédentes, **caractérisé en ce qu'**on produit, via un façonnement par extrusion-soufflage, au moins une zone de corps creux et/ou une zone de compartiments possédant au moins une surface externe entre 0,01 mm² et 10 cm², l'épaisseur de paroi de cette surface, pour garantir une dissolution plus rapide dans une solution aqueuse, étant inférieure à l'épaisseur de paroi de la surface limitrophe.

28. Procédé de fabrication selon l'une quelconque des revendications précédentes, **caractérisé en ce qu'**on réalise l'épaisseur de paroi du corps creux et/ou des compartiments via un façonnement par extrusion-soufflage de telle sorte que l'agent que contient le corps creux et/ou les compartiments, en particulier l'agent de lavage et/ou de nettoyage est libéré en partie ou complètement dans un laps de temps de ≤ 5 min, à titre préférentiel dans un laps de temps de ≤ 3 min, de préférence dans un laps de temps de ≤ 1 min dans le bain d'utilisation aqueux.

29. Procédé de fabrication selon l'une quelconque des revendications précédentes, **caractérisé en ce qu'**on réalise l'épaisseur de paroi du corps creux et/ou des compartiments via un façonnement par extrusion-soufflage de telle sorte que les enzymes que contient au moins un corps creux et/ou au moins un compartiment sont libérées dans le temps, au moins en partie ou complètement, avant l'agent de blanchiment que contient le compartiment ou au moins un autre compartiment dans le bain d'utilisation aqueux.

30. Procédé de fabrication selon l'une quelconque des revendications précédentes, **caractérisé en ce qu'**on réalise l'épaisseur de paroi du corps creux et/ou des compartiments via un façonnement par extrusion-soufflage de telle sorte que les enzymes que contient au moins un corps creux et/ou au moins un compartiment sont libérées dans le temps, au moins en partie ou complètement, dans un laps de temps de ≥ 60 sec, à titre préférentiel de ≥ 120 sec, de manière plus préférée de ≥ 240 sec, et de manière de loin préférée de ≥ 360 sec, avant l'agent de blanchiment que contient le compartiment ou au moins un autre compartiment dans le bain d'utilisation aqueux.

31. Procédé de fabrication selon l'une quelconque des revendications précédentes, **caractérisé en ce que** le volume interne du corps creux fabriqué via un façonnement par extrusion-soufflage et/ou des compartiments s'élève entre 0,5 ml et 2000 ml, à titre préférentiel entre 2 ml et 500 ml, de préférence entre 5 ml et 250 ml, de manière plus préférée entre 10 ml et 100 ml, de manière encore plus préférée entre 20 ml et 75 ml, et de manière de loin préférée entre 40 et 50 ml.

32. Procédé de fabrication selon l'une quelconque des revendications précédentes, **caractérisé en ce qu'**on ajoute au corps creux fabriqué via un façonnement par extrusion-soufflage et/ou aux compartiments l'agent de lavage et/ou de nettoyage sous forme solide, sous forme liquide et/ou sous forme d'un gel, de préférence sous la forme de particules, de suspensions, d'émulsion, de solutions homogènes, de pâtes et/ou sous la forme de solutions transparentes.

33. Procédé de fabrication selon l'une quelconque des revendications précédentes, **caractérisé en ce qu'**on ajoute au corps creux fabriqué via un façonnement par extrusion-soufflage et/ou aux compartiments un agent polyphasique, en particulier un agent de lavage et/ou de nettoyage, de préférence un mélange biphasique ou triphasique temporaire qui, au repos, forme des phases séparées et que l'on peut retransformer par agitation, temporairement, de manière réversible en une seule phase sous la forme d'une émulsion, d'une suspension ou d'une dispersion.

34. Procédé de fabrication selon l'une quelconque des revendications précédentes, **caractérisé en ce que** l'agent polyphasique, en particulier l'agent de lavage et/ou de nettoyage, comprend au moins une phase aqueuse et/ou non aqueuse, de préférence au moins une phase non aqueuse étant liquide ou solide et de manière particulièrement préférée au moins une phase aqueuse se présentant sous forme de gel.

35. Procédé de fabrication selon l'une quelconque des revendications précédentes, **caractérisé en ce que**, le composé thermoplastique soluble dans l'eau utilisé lors du façonnement par extrusion-soufflage pour la formation du corps creux et/ou des compartiments est choisi parmi le groupe comprenant de l'alcool polyvinylique (PVA), de l'alcool polyvinylique acétalisé, de la polyvinylpyrrolidone, de l'oxyde de polyéthylène, de la gélatine, de la cellulose, de l'amidon et des dérivés des substances susmentionnées, et/ou des mélanges des polymères susmentionnés, l'alcool polyvinylique étant particulièrement préféré.

36. Procédé de fabrication selon l'une quelconque des revendications précédentes, **caractérisé en ce que**, au composé thermoplastique soluble dans l'eau utilisé lors du façonnement par extrusion-soufflage pour la formation du corps creux et/ou des compartiments, on ajoute en outre des polymères choisis parmi le groupe comprenant des polymères contenant de l'acide acrylique, des polyacrylamides, des polymères d'oxazoline, des sulfonates de polystyrène, des polyuréthanes, des polyesters, des polyéthers et/ou des mélanges des polymères susmentionnés.

37. Procédé de fabrication selon l'une quelconque des revendications précédentes, **caractérisé en ce que** le composé thermoplastique soluble dans l'eau utilisé lors du façonnement par extrusion-soufflage pour la formation du corps creux et/ou des compartiments comprend un alcool polyvinylique dont le degré d'hydrolyse représente de 70 à 100 mol %, de préférence de 80 à 90 mol %, de manière particulièrement préférée de 81 à 89 mol % et en particulier de 82 à 88 mol %.

38. Procédé de fabrication selon l'une quelconque des revendications précédentes, **caractérisé en ce que** le composé thermoplastique soluble dans l'eau utilisé lors du façonnement par extrusion-soufflage pour la formation du corps creux et/ou des compartiments comprend un alcool polyvinylique dont le poids moléculaire se situe dans la plage de 10.000 à 100.000 gmol⁻¹, de préférence de 11.000 à 90.000 gmol⁻¹, de manière particulièrement préférée de 12.000 à 80.000 gmol⁻¹ et en particulier de 13.000 à 70.000 gmol⁻¹.

39. Procédé de fabrication selon l'une quelconque des revendications précédentes, **caractérisé en ce que** la matière de façonnement par extrusion-soufflage contient les composés thermoplastiques mentionnés dans des quantités d'au moins 50 % en poids, de préférence d'au moins 70 % en poids, de manière particulièrement préférée d'au moins 80 % en poids et en particulier d'au moins 90 % en poids, chaque fois rapportés au poids de la matière de façonnement par extrusion-soufflage.

40. Procédé de fabrication selon l'une quelconque des revendications précédentes, **caractérisé en ce que** la matière de façonnement par extrusion-soufflage contient des plastifiants dans des quantités d'au moins > 1 % en poids, de préférence de ≥ 10 % en poids, de manière particulièrement préférée de ≥ 20 % en poids, et en particulier de ≥ 30 % en poids, chaque fois rapportés au poids de la matière de façonnement par extrusion-soufflage.

41. Procédé selon l'une quelconque des revendications précédentes, **caractérisé en ce que** le corps creux présente des éléments faisant office de bride et est fermé et/ou relié à au moins un autre corps creux par assemblage à complémentarité de forme et/ou par assemblage par liaison de matières, de préférence par soudage.

42. Procédé selon l'une quelconque des revendications précédentes, **caractérisé en ce que** le corps creux et/ou les compartiments sont remplis à concurrence de 20 à 100 %, de préférence à concurrence de 30 à 99 %, de manière particulièrement préférée à concurrence de 40 à 98 % et en particulier à concurrence de 50 à 95 % de leurs volumes avec des agents, en particulier avec des agents de lavage et/ou de nettoyage.

43. Procédé selon l'une quelconque des revendications précédentes, **caractérisé en ce qu'**on remplit, en partie ou complètement, le corps creux et/ou les compartiments avec au moins une, de préférence plusieurs préparations manifestant une activité de lavage, une activité de nettoyage, une activité de rinçage, une activité d'entretien, une activité pharmaceutique et/ou avec au moins un membre choisi parmi le groupe comprenant des aliments, des agents phytosanitaires, des engrais, des agents de traitement capillaire, des agents de soins corporels, des cosmétiques, des matériaux de construction, des colles à tapisser ou des adhésifs, sous la forme de poudres, de granulés, d'extrudats, de boulettes, de perles, de comprimés, de tablettes, d'anneaux, de petits blocs, de briquettes, de solutions, de masses fondues, de gels, de suspensions, de dispersions, d'émulsions, de mousses et/ou de gaz.

44. Procédé selon l'une quelconque des revendications précédentes, **caractérisé en ce que** le corps creux et/ou au moins un compartiment est transparent et/ou translucide.

45. Procédé selon l'une quelconque des revendications précédentes, **caractérisé en ce que** le corps creux ne présente aucun joint de scellement, aucun joint d'écrasement et/ou aucun joint périphérique.

46. Procédé selon l'une quelconque des revendications précédentes, **caractérisé en ce qu'**on procède à la réalisation en plusieurs couches d'au moins une paroi du corps creux et/ou d'au moins une paroi d'au moins un compartiment.

47. Procédé selon l'une quelconque des revendications précédentes, **caractérisé en ce qu'**on pourvoit la paroi du corps creux d'au moins deux couches et/ou **en ce qu'**on pourvoit au moins un compartiment d'au moins deux couches de telle sorte que l'on obtient un espace intermédiaire entre les couches.

48. Procédé selon l'une quelconque des revendications précédentes, **caractérisé en ce qu'**on fabrique, par coextrusion, un préformé possédant plusieurs couches, de préférence de 2 à 5 couches, que l'on transforme ensuite par extrusion-soufflage pour obtenir le corps creux, au moins une paroi du corps creux et/ou au moins une paroi d'au moins un compartiment étant réalisée en plusieurs couches.

49. Procédé selon l'une quelconque des revendications 1 ou 2 ou 4 à 48, **caractérisé en ce que** les corps creux solubles dans l'eau façonnés par extrusion-soufflage sont réalisés en plusieurs pièces et présentent, dans la zone du volume creux rempli, des épaisseurs de parois de 0,05 à 5 mm.

50. Procédé selon la revendication 49, **caractérisé en ce que** les corps creux solubles dans l'eau façonnés par extrusion-soufflage présentent, dans la zone du volume creux rempli, des épaisseurs de parois de 0,06 à 2 mm, de préférence entre 0,07 et 1,5 mm, de manière plus préférée entre 0,08 et 1,2 mm, de manière encore plus préférée entre 0,09 et 1 mm et de manière de loin préférée entre 0,1 et 0,6 mm.

51. Procédé selon l'une quelconque des revendications 49 ou 50, **caractérisé en ce que** l'épaisseur de paroi des traverses reliant les volumes creux remplis s'élève au maximum au double des épaisseurs de parois dans la zone du volume creux rempli.

52. Procédé selon l'une quelconque des revendications 49 à 51, **caractérisé en ce que** les traverses reliant les volumes creux remplis sont soumises à un amincissement supplémentaire, quant à leur épaisseur de paroi, via un joint d'écrasement s'étendant de préférence au centre, de préférence avec une ligne de perforation supplémentaire, pour obtenir des endroits de rupture de consigne qui se situent dans la plage de 5 à 200 µm, de préférence de 10 à 150 µm, de manière particulièrement préférée de 15 à 100 µm et en particulier de 20 à 70 µm.

53. Procédé selon l'une quelconque des revendications 49 à 52, **caractérisé en ce que** le volume de remplissage d'un corps creux rempli s'élève de 1 à 1000 ml, de préférence de 2 à 500 ml, de manière particulièrement préférée de 5 à 250 ml, de manière plus préférée de 10 à 100 ml et en particulier de 15 à 50 ml.

54. Procédé selon l'une quelconque des revendications 49 à 53, **caractérisé en ce qu'**on forme un récipient rempli à partir d'une série de 2 à 100, de préférence de 2 à 50, de manière particulièrement préférée de 3 à 20 et en particulier de 4 à 12 volumes creux remplis reliés les uns aux autres par des traverses.

55. Procédé selon l'une quelconque des revendications 49 à 54, **caractérisé en ce que** le corps creux soluble dans l'eau, obtenu via un façonnement par extrusion-soufflage présente, dans la zone du volume creux rempli, une zone d'épaisseur de paroi plus réduite qui est de préférence protégée par voie mécanique à l'aide d'un enfoncement.

56. Procédé selon l'une quelconque des revendications 49 à 55, **caractérisé en ce que** les volumes creux remplis sont réalisés de manière à obtenir une symétrie de rotation par rapport à leur grand axe et de préférence par rapport à la perpendiculaire à la surface d'écrasement.

57. Procédé selon l'une quelconque des revendications 49 à 56, **caractérisé en ce que** les volumes creux remplis présentent une longueur (dans la direction d'extrusion de la gaine initiale) de 30 à 120 mm, de préférence de 40 à 100 mm et en particulier de 45 à 70 mm.

58. Procédé selon l'une quelconque des revendications 49 à 57, **caractérisé en ce que** les volumes creux remplis présentent une largeur (dans la direction de la surface d'écrasement, perpendiculairement à la direction d'extrusion de la gaine initiale) de 10 à 70 mm, de préférence de 15 à 60 mm et en particulier de 20 à 40 mm.

59. Procédé selon l'une quelconque des revendications précédentes, **caractérisé en ce qu'**on recycle des résidus issu du façonnement par extrusion-soufflage qui se forment au cours du processus de fabrication et on les renvoie au procédé initial.

60. Procédé selon la revendication 59, **caractérisé en ce qu'**on soumet les résidus issus du façonnement par extrusion-soufflage d'abord à un broyage avant leur renvoi dans le procédé.

61. Procédé selon l'une quelconque des revendications précédentes, **caractérisé en ce que**, à la suite de la fermeture étanche aux liquides du corps creux obtenu via un façonnement par extrusion-soufflage, on procède à une étape supplémentaire pour détecter les fuites.

62. Procédé selon la revendication 61, **caractérisé en ce que** la détection des fuites a lieu avec un détecteur de fuites à haute tension.

63. Procédé selon l'une quelconque des revendications précédentes, **caractérisé en ce que** l'on fait fonctionner l'extrudeuse qui mélange la masse fondue à une vitesse de rotation élevée de la vis sans fin, de préférence à une vitesse supérieure à 10 rotations par minute, de manière très préférée supérieure à 20 rotations par minute, de manière particulièrement préférée supérieure à 70 rotations par minute, de manière de loin préférée supérieure à 150 rotations par minute, en particulier supérieure à 300 rotations par minute.

64. Procédé selon l'une quelconque des revendications précédentes, **caractérisé en ce que** l'augmentation du poids moléculaire moyen du composé thermoplastique polymère soluble dans l'eau est inférieure à 15 %, de préférence inférieure à 10 %, de manière particulièrement préférée inférieure à 8 %, de manière de loin préférée inférieure à 5 %, en particulier inférieure à 2 %, dans le cas d'un seul passage dans le processus d'extrusion.

65. Procédé selon l'une quelconque des revendications précédentes, **caractérisé en ce que** la vitesse de cisaillement dans l'extrudeuse et à la tête de soufflage est supérieure à 1 s⁻¹, de préférence supérieure à 2 s⁻¹, de manière plus préférée supérieure à 3 s⁻¹, en particulier supérieure à 5 s⁻¹, de manière particulièrement préférée supérieure à 8 s⁻¹, de manière plus préférée supérieure à 10 s⁻¹, de manière encore plus préférée supérieure à 20 s⁻¹, de manière encore plus préférée supérieure à 40 s⁻¹, de manière de loin préférée supérieure à 60 s⁻¹, de manière avantageuse supérieure à 100 s⁻¹ et de manière particulièrement avantageuse supérieure à 200 s⁻¹.

66. Procédé selon l'une quelconque des revendications précédentes, **caractérisé en ce que** le corps creux obtenu via un façonnement par extrusion-soufflage rempli avec au moins un agent ou avec du glycérol à titre d'agent d'essai et/ou non rempli, dans le cas de n répétitions, avec n ≥ 2, par exemple égal à 3 ou 4, de préférence égal à 8, 10, 15 ou 20, de la mesure respective sur un individu à tester, présente un écart-type en %, rapporté à la valeur de mesure moyenne, inférieur à 100 %, de préférence inférieur à 50 %, de manière plus préférée inférieur à 40 %, de manière particulièrement préférée inférieur à 30 %, en particulier inférieur à 20 %, de manière particulièrement préférée inférieur à 10 %, de manière de loin préférée inférieur à 8 %, par exemple inférieur à 5 %, de manière avantageuse inférieur à 3 %, par exemple inférieur à 2 % et de manière extrêmement préférée inférieur à 1 %.

67. Procédé selon l'une quelconque des revendications précédentes, **caractérisé en ce que** la matière d'enveloppement du corps creux se distingue, du point de vue optique, au moins en partie, de préférence par la mise en oeuvre de colorants, de la matière non colorée de façonnement par extrusion-soufflage.

68. Procédé selon la revendication 67, **caractérisé en ce que** la matière d'enveloppement du corps creux est réglée par coloration en recourant au procédé « in-Mould-Labeling ».

69. Corps creux soluble dans l'eau, flexible, de préférence élastique, fermé de manière à obtenir une étanchéité aux liquides, fabriqué via un façonnement par extrusion-soufflage, contenant un agent, en particulier un agent de lavage, d'entretien et/ou de nettoyage, le corps creux rempli avec au moins un agent ou avec du glycérol à titre d'agent d'essai et/ou non rempli :
i) présentant, lors d'un allongement le long de son grand axe, une tension d'étirage entre ≥ 3 N/mm² et ≤ 15 N/mm² ; et/ou
ii) manifestant, dans une course d'écrasement de 22 mm, à la verticale, au centre, dans la direction de son petit axe, un travail de déformation entre ≥ 0,05 Nm et ≤ 5 Nm ; et/ou
iii) manifestant, sous l'effet d'une force F₁ > 0,1 N et ≤ 500 N, le long d'une course S₁, une aptitude à la déformation et un retour dans la direction de la forme initiale, lorsque l'effet de la force disparaît ; et/ou
iv) présentant, après la disparition de l'effet d'une force de déformation, une vitesse de rappel v entre > 0,01 mm/min et ≤ 650 mm/min ; et/ou
v) le module d'élasticité de la paroi du corps creux fabriqué via un façonnement par extrusion-soufflage, flexible, non rempli ou rempli avec des agents à concurrence de ≥ 80 % en volume, s'élève à une valeur ≤ 1 GNm², à titre préférentiel à une valeur ≤ 0,1 GNm², de préférence à une valeur ≤ 0,01 GNm² ; et/ou
vi) manifestant, dans le cas d'un corps creux obtenu via un façonnement par extrusion-soufflage, rempli avec des agents à concurrence de ≥ 80 % en volume, une résistance à l'écrasement Fₘₐₓ entre ≥ 20 N et ≤ 2000 N ; et
les parois du corps creux et/ou des compartiments présentant une épaisseur de paroi entre 0,05 et 5 mm et le corps creux ne présentant pas de joint de scellement, **caractérisé en ce que** le corps creux présente des zones de circonférence externe différente et d'épaisseur de paroi constante.
